(19) Europäisches Patentamt
European Patent Office
Office européen des brevets

(11) EP 3 270 196 B1

(12) **EUROPEAN PATENT SPECIFICATION**

(45) Date of publication and mention of the grant of the patent:
**13.11.2019 Bulletin 2019/46**

(21) Application number: **16761791.9**

(22) Date of filing: **09.03.2016**

(51) Int Cl.:
***G02B 5/26*** *(2006.01)*
***C08F 2/44*** *(2006.01)*
***C09K 19/54*** *(2006.01)*
***G02B 5/22*** *(2006.01)*
***C09K 19/58*** *(2006.01)*
***C09K 19/52*** *(2006.01)*
***C09K 19/18*** *(2006.01)*
***C09K 19/56*** *(2006.01)*
***C09K 19/04*** *(2006.01)*

(86) International application number:
**PCT/JP2016/057391**

(87) International publication number:
**WO 2016/143824 (15.09.2016 Gazette 2016/37)**

(54) **METHOD FOR MANUFACTURING A BANDPASS FILTER**

VERFAHREN ZUR HERSTELLUNG EINES BANDPASSFILTERS

PROCÉDÉ DE FABRICATION D'UN FILTRE PASSE-BANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2015 JP 2015047431**
**08.03.2016 JP 2016044269**

(43) Date of publication of application:
**17.01.2018 Bulletin 2018/03**

(73) Proprietor: **FUJIFILM Corporation**
**Tokyo 106-8620 (JP)**

(72) Inventors:
- **TAKISHITA, Hirotaka**
**Haibara-gun, Shizuoka 421-0396 (JP)**
- **SHIMADA, Kazuto**
**Haibara-gun, Shizuoka 421-0396 (JP)**
- **YOSHIKAWA, Masaru**
**Haibara-gun, Shizuoka 421-0396 (JP)**
- **GOTO, Ryoji**
**Haibara-gun, Shizuoka 421-0396 (JP)**

(74) Representative: **Dehns**
**St. Bride's House**
**10 Salisbury Square**
**London EC4Y 8JD (GB)**

(56) References cited:
**WO-A1-2014/097895**
**WO-A1-2014/097895**
**JP-A- H10 239 684**
**JP-A- 2002 080 478**
**JP-A- 2002 080 478**
**JP-A- 2002 302 487**
**JP-A- 2002 302 487**
**JP-A- 2012 137 728**
**JP-A- 2014 059 437**
**JP-A- 2014 071 356**
**JP-A- 2014 071 356**
**US-A1- 2012 145 901**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 270 196 B1

## Description

## BACKGROUND OF THE INVENTION

1. Field of the Invention

The present invention relates to a method for producing a bandpass filter as defined in claim 1.

2. Description of the Related Art

Conventionally, a bandpass filter for selectively transmitting and/or shielding light of a specific wavelength has been used as an optical component. An example of such a bandpass filter is a laminate (multilayer film) in which a layer of high refractive index and a layer of low refractive index are alternately laminated (see JP2012-225993A, JP2008-015234A, and JP2004-354705A).

JP 2014-71356 A discloses an infrared ray cutting film having a transparent base, a near infrared ray absorbing layer containing a compound with a maximum absorption wavelength of from 750 nm to 920 nm, and a near infrared ray reflection layer obtained by fixing a cholesteric liquid crystal phase.

JP 2002-302487 A and JP 2002-080478 A disclose certain optically active compounds that are useful as a photoreactive chiral agents for liquid crystal compositions.

US 2012/145901 A and JP 2012 137728 A disclose infrared transmission filters and imaging devices including the infrared transmission filter.

WO 2014/097895 discloses a multilayered cholesteric liquid crystal which comprises at least one light reflection layer (Xa) that is obtained by fixing a cholesteric liquid-crystal phase and that contains a dextrorotatory chiral agent and at least one light reflection layer (Xb) that is a light reflection layer obtained by fixing a cholesteric liquid-crystal phase and that contains a levorotatory chiral agent. All of the light reflection layers have a selective-reflection wavelength in the range of 400-750 nm and the selective-reflection wavelength of at least one of the light reflection layers (Xa) is equal to the selective-reflection wavelength of at least one of the light reflection layers (Xb).

JP 2014-059437 A discloses a heat-ray shielding film comprising a substrate having at least two light-reflective layers X1, X2 obtained by fixing cholesteric liquid crystal phases and an infrared absorbing layer containing composite tungsten oxide microparticles. The light-reflective layer X1 and the light reflective layer X2 reflect circularly polarized light of opposite polarization directions and have substantially identical central reflection wavelengths in a range of 800 to 1100 nm.

JP H10-239684 A discloses a reflection-type liquid crystal display device.

## SUMMARY OF THE INVENTION

Since the layer of high refractive index and the layer of low refractive index included in the laminate described in JP2012-225993A, JP2008-015234A, and JP2004-354705A are formed by vapor deposition, it takes time and efforts to prepare the laminate, which is expensive. Further, in principle, there is a problem of angle dependence that the selective reflection wavelength (shielding wavelength) shifts depending on the angle at which the laminate is observed.

The present invention has been made in view of the above circumstances and an object thereof is to provide a method for more convenient production of a bandpass filter with reduced angle dependence.

As a result of extensive studies to achieve the foregoing objects, the present inventors have found that the above-mentioned objects can be achieved by the following configurations.

(1) A method for producing a bandpass filter comprising a laminate including a reflective laminated film formed of a plurality of light reflective layers disposed adjacent to one another and a light absorbing layer, the method comprising:

a step of applying a first composition containing a liquid crystal compound having a polymerizable group and a dextrorotatory chiral agent to form a coating film and forming a light reflecting layer Xa formed by irradiating the coating film with light and immobilizing a dextrorotatory cholesteric liquid crystalline phase;
a step of applying a second composition containing a liquid crystal compound having a polymerizable group and a levorotatory chiral agent to form a coating film and forming a light reflecting layer Xb formed by irradiating the coating film with light and immobilizing a levorotatory cholesteric liquid crystalline phase; and
a step of applying a third composition containing a color material to form the light absorbing layer;
wherein the reflective laminated film reflects light in at least a part of a wavelength range of 650 to 1200 nm; and
wherein the light absorbing layer has a maximum transmittance of 70% or more at a wavelength of 700 nm or

more and a maximum transmittance of 30% or less at a wavelength of 400 nm or more and less than 700 nm.

The invention is also directed to the following embodiments:

(2) The method according to (1), in which the helical twisting power of the dextrorotatory chiral agent is 30 $\mu m^{-1}$ or more.

(3) The method according to (1) or (2), in which the helical twisting power of the levorotatory chiral agent is 30 $\mu m^{-1}$ or more.

(4) The method according to any one of (1) to (3), in which the levorotatory chiral agent is selected from the group consisting of a compound represented by General Formula (1) to be described hereinafter and a compound represented by General Formula (2) to be described hereinafter.

(5) The method according to any one of (1) to (4), in which the levorotatory chiral agent is selected from the group consisting of a compound represented by General Formula (3) to be described hereinafter and a compound represented by General Formula (4) to be described hereinafter.

(6) The method according to any one of (1) to (5), in which the color material is a pigment.

(7) The method according to any one of (1) to (6), in which the refractive index anisotropy $\Delta n$ at 30°C of the liquid crystal compound having a polymerizable group is 0.25 or more.

(8) The method according to any one of (1) to (7), in which the liquid crystal compound having a polymerizable group is a compound represented by General Formula (5) to be described hereinafter.

(9) The method according to any one of (1) to (8), in which each of the first composition and the second composition further contains a photopolymerization initiator.

(10) The method according to any one of (1) to (9), in which each of the first composition and the second composition further contains a fluorine-containing compound.

(11) The method according to any one of (1) to (10), which is used for forming a bandpass filter where the ratio of the absorbance at a wavelength of 830 nm relative to the absorbance at a wavelength of 730 nm is 3 or more.

(12) The method according to (11), which is used for forming a bandpass filter where the ratio of the absorbance at a wavelength of 630 nm relative to the absorbance at a wavelength of 730 nm is 3 or more.

(13) The method according to any one of (1) to (10), which is used for forming a bandpass filter where the ratio of the absorbance at a wavelength of 950 nm relative to the absorbance at a wavelength of 850 nm is 3 or more.

(14) The method according to (13), which is used for forming a bandpass filter where the ratio of the absorbance at a wavelength of 750 nm relative to the absorbance at a wavelength of 850 nm is 3 or more.

(15) The method according to any one of (1) to (10), which is used for forming a bandpass filter where the ratio of the absorbance at a wavelength of 1040 nm relative to the absorbance at a wavelength of 940 nm is 3 or more.

(16) The method according to (15), which is used for forming a bandpass filter where the ratio of the absorbance at a wavelength of 840 nm relative to the absorbance at a wavelength of 940 nm is 3 or more.

(17) The method according to any one of (1) to (10), in which the reflective laminated film has a haze of 1% or less.

## BRIEF DESCRIPTION OF THE DRAWINGS

Fig. 1 is a sectional view showing an example of a laminate.
Fig. 2 is a sectional view showing another example of a laminate.
Fig. 3 is a sectional view showing yet another example of a laminate.
Fig. 4 is a functional block diagram of an imaging device to which a solid image pickup element using the laminate of the present invention is applied.
Fig. 5 is a graph showing a transmission spectrum of a laminate (A).
Fig. 6 is a graph showing a transmission spectrum of a laminate (B).
Fig. 7 is a graph showing a transmission spectrum of a laminate (C).
Fig. 8 is a graph showing a transmission spectrum of a glass substrate having an infrared transmitting film A.
Fig. 9 is a graph showing a transmission spectrum of a glass substrate having an infrared transmitting film B.
Fig. 10 is a graph showing a transmission spectrum of a substrate having an infrared transmitting film C.
Fig. 11 is a graph showing a transmission spectrum of a bandpass filter A.
Fig. 12 is a graph showing a transmission spectrum of a bandpass filter B.
Fig. 13 is a graph showing a transmission spectrum of a bandpass filter C.
Fig. 14 is a graph showing a transmission spectrum of each of laminates (G1-1), (G4), (G5), (G6), (G7), (G8), (G9), and (G10).
Fig. 15 is a graph showing a transmission spectrum of a combination (G13).
Fig. 16 is a graph showing a transmission spectrum of a bandpass filter D.

Fig. 17 is a graph showing a transmission spectrum of a bandpass filter E.
Fig. 18 is a graph showing a transmission spectrum of a bandpass filter F.

## DESCRIPTION OF THE PREFERRED EMBODIMENTS

Hereinafter, suitable embodiments of the present invention will be described in detail.
The description of constituent elements described below can be made based on representative embodiments of the present invention, but the present invention is not limited to such embodiments.
Numerical ranges expressed using "to" in the present specification mean a range including numerical values described before and after "to" as the lower limit value and the upper limit value.
In the indication of a group (atomic group) in the present specification, the indication not including substitution or unsubstitution includes those having not a substituent and also those having a substituent. For example, an "alkyl group" refers to not only an alkyl group not having a substituent (unsubstituted alkyl group) but also an alkyl group having a substituent (substituted alkyl group).
The term "infrared ray (infrared light)" as used herein is intended to refer to light having a wavelength of about 700 nm to 1 mm. In addition, the term "visible ray (visible light)" is intended to refer to light having a wavelength of about 400 nm or more and less than 700 nm.
In the following, first, a laminate that may be formed in the method for producing a bandpass filter will be described in detail, and then a composition kit and a bandpass filter will be described in detail.

<Laminate>

An example of a configuration of a laminate that may be formed using the present invention will be described with reference to the accompanying drawings. However, the present invention is not limited by the drawings.
In the following drawings, a configuration having a substrate is described, but the laminate is not limited to the configuration having a substrate.
Fig. 1 is a sectional view of a laminate 10. The laminate 10 includes a substrate 12, a reflective laminated film 14, and a light absorbing layer 16 in this order. The reflective laminated film 14 is a film formed of a plurality of light reflecting layers disposed adjacent to each other and includes a light reflecting layer Xa (18a) formed by immobilizing a dextrorotatory cholesteric liquid crystalline phase, and a light reflecting layer Xb (18b) formed by immobilizing a levorotatory cholesteric liquid crystalline phase. As shown in Fig. 1, the light reflecting layer Xa (18a) and the light reflecting layer Xb (18b) are disposed adjacent to each other.
The selective reflection wavelength of the light reflecting layer Xa (18a) is equal to the selective reflection wavelength of the light reflecting layer Xb (18b). That is, the reflective laminated film 14 can reflect both right-handed circularly polarized light and left-handed circularly polarized light of the same wavelength. The light reflecting layer Xa (18a) and the light reflecting layer Xb (18b) have helical pitches of the same degree and show turning properties in directions opposite to each other.
The laminate 10 corresponds to a so-called selective wavelength transmission filter (bandpass filter). For example, in a case where light is incident on the laminate 10 from the side of the substrate 12, first, light having a predetermined wavelength is selectively reflected by the reflective laminated film 14, and only light having a predetermined wavelength transmits through the reflective laminated film. A part of the light transmitted through the reflective laminated film 14 is absorbed by the light absorbing layer 16, and only light having a predetermined wavelength transmits through the light absorbing layer. That is, in the laminate 10, light of a predetermined wavelength is reflected by the reflective laminated film 14, and light of a predetermined wavelength is absorbed by the light absorbing layer 16. Therefore, only light that can transmit through both the reflective laminated film 14 and the light absorbing layer 16 is transmitted through the laminate 10, and the laminate 10 functions as a wavelength-selective filter. The band (transmission band) of the light transmitted through the laminate 10 is determined by superimposing the transmission spectrum of the reflective laminated film 14 and the transmission spectrum of the light absorbing layer 16 so as to correspond to the wavelength range transmitting in both transmission spectra.
In the laminate formed in the method of the invention light in a predetermined range in the infrared region is selectively reflected by the reflective laminated film 14, light in a predetermined range in the infrared region is transmitted, and a visible ray is absorbed (shielded) by the light absorbing layer 16.
The reflective laminated film 14 reflects light in at least a part of the wavelength range of 650 to 1200 nm. More specifically, it is preferred that light in a range of an external line of a specific wavelength (for example, 730 nm$\pm$100 nm, 850 nm$\pm$100 nm, or 940 nm$\pm$100 nm) out of wavelengths of 650 to 1200 nm is transmitted and light in the other region is reflected. The term transmission is intended to mean that a maximum transmittance in the above range is 50% or more. The term reflection is intended to mean that the maximum transmittance in the above range is 30% or less.
The light absorbing layer of the laminate as defined in claim 1 has a transmittance of 70% or more at a wavelength of

700 nm or more and a maximum transmittance of 30% or less at a wavelength of 400 nm or more and less than 700 nm.

In the laminate 10, since the light reflecting layer Xa (18a) and the light reflecting layer Xb (18b) are laminated adjacent to each other without using a pressure sensitive adhesive material, the surface state of the laminate 10 is satisfactory. Further, as will be described later, the laminate 10 can be easily produced by using a predetermined composition kit comprising the first, second and third compositions as defined in claim 1. Further, since the light absorbing layer 16 is included in the laminate 10, the angle dependence can also be reduced.

The wavelength (selective reflection wavelength) reflected by the light reflecting layer Xa (18a) and the light reflecting layer Xb (18b) refers to an average value of two wavelengths indicating a half value transmittance: $T_{1/2}$(%) expressed by the following equation, in the case where the minimum value of the transmittance in the light reflecting layer is taken as Tmin (%).

$$\text{Equation for obtaining half value transmittance: } T_{1/2}=100-(100-Tmin)/2$$

More specifically, there are two wavelengths indicating the above-mentioned half value transmittance per one layer of the light reflecting layer in the long wavelength side ($\lambda$1) and the short wavelength side ($\lambda$2), and the value of the selective reflection wavelength is represented by the average value of $\lambda$1 and $\lambda$2.

Further, as described above, the selective reflection wavelength of the light reflecting layer Xa (18a) is equal to the selective reflection wavelength of the light reflecting layer Xb (18b). The fact that the selective reflection wavelengths of the two light reflecting layers are "equal to each other" does not mean that they are strictly equal to each other, and an error in a range in which there is no optical influence is allowed. In the present specification, selective reflection wavelengths of two light reflecting layers are "equal to each other" is intended to mean that the difference between the selective reflection wavelengths of the two light reflecting layers is 20 nm or less, and this difference is preferably 15 nm or less and more preferably 10 nm or less.

By laminating two light reflecting layers having selective reflection wavelengths equal to each other and having different right and left turning properties, the transmission spectrum of the laminate shows one strong peak at this selective reflection wavelength, which is preferable from the viewpoint of reflection performance.

The light reflecting layer Xa (18a) preferably contains a dextrorotatory chiral agent having a helical twisting power of 30 $\mu m^{-1}$ or more. By including the dextrorotatory chiral agent in the light reflecting layer Xa (18a), a predetermined selective reflection wavelength can be reflected by a thinner thickness.

In addition, the light reflecting layer Xb (18b) preferably contains a levorotatory chiral agent having a helical twisting power of 30 $\mu m^{-1}$ or more. By including the levorotatory chiral agent in the light reflecting layer Xb (18b), a predetermined selective reflection wavelength can be reflected by a thinner thickness.

In at least one layer of the light reflecting layer Xa (18a) and the light reflecting layer Xb (18b), the maximum value of the reflectance at 650 to 1200 nm is preferably 40% or more and more preferably 45% or more. It is still more preferred that the maximum value of the reflectance of both the light reflecting layer Xa (18a) and the light reflecting layer Xb (18b) at 650 to 1200 nm is within the above range.

In the laminate 10 of Fig. 1, the substrate 12, the light reflecting layer Xa (18a), and the light reflecting layer Xb (18b) are disposed in this order, but the present invention is not limited to this embodiment, and the substrate 12, the light reflecting layer Xb (18b), and the light reflecting layer Xa (18a) may be disposed in this order. It is preferred that the substrate 12, the light reflecting layer Xa (18a), and the light reflecting layer Xb (18b) are disposed in this order from the viewpoint of further improving the surface state of the laminate 10.

In Fig. 1, the light absorbing layer 16 is disposed on the surface opposite to the substrate 12 of the reflective laminated film 14, but the present invention is not limited to this embodiment. For example, as shown in the laminate 10a in Fig. 2, the light absorbing layer 16, the substrate 12, and the reflective laminated film 14 may be laminated in this order.

Further, an additional layer may be disposed between the substrate 12 and the reflective laminated film 14. Examples of the additional layer include an alignment layer, an undercoat layer, and the like which will be described later.

The laminate 10 shown in Fig. 1 has one layer each of the light reflecting layer Xa (18a) and the light reflecting layer Xb (18b), but the present invention is not limited to this embodiment. The laminate may contain a plurality of layers of the light reflecting layer Xa and the light reflecting layer Xb.

Fig. 3 shows a sectional view showing another example of the laminate in the case of having two or more layers of at least one of the light reflecting layer Xa and the light reflecting layer Xb. In the laminate 10b shown in Fig. 3, a light reflecting layer Xa (20a) formed by immobilizing a dextrorotatory cholesteric liquid crystalline phase, a light reflecting layer Xa (22a) formed by immobilizing a dextrorotatory cholesteric liquid crystalline phase, a light reflecting layer Xb (20b) formed by immobilizing a levorotatory cholesteric liquid crystalline phase, and a light reflecting layer Xb (22b) formed by immobilizing a levorotatory cholesteric liquid crystalline phase are laminated on the substrate 12. The light

reflecting layer Xa (20a) and the light reflecting layer Xa (22a) are disposed in contact with each other, the light reflecting layer Xa (22a) and the light reflecting layer Xb (20b) are disposed in contact with each other, and the light reflecting layer Xb (20b) and the light reflecting layer Xb (22b) are disposed in contact with each other.

Both of the light reflecting layer Xa (20a) and the light reflecting layer Xa (22a) are layers that reflect right-handed circularly polarized light, and their selective reflection wavelengths are different from each other. More specifically, the selective reflection wavelength of the light reflecting layer Xa (22a) is located on the longer wavelength side than the selective reflection wavelength of the light reflecting layer Xa (20a).

In addition, both of the light reflecting layer Xb (20b) and the light reflecting layer Xb (22b) are layers that reflect right-handed circularly polarized light, and their selective reflection wavelengths are different from each other. More specifically, the selective reflection wavelength of light reflecting layer Xb (22b) is located on the longer wavelength side than the selective reflection wavelength of the light reflecting layer Xb (20b).

In addition, the light reflecting layer Xa (20a) and the light reflecting layer Xb (20b) have generally the same helical pitch, and the selective reflection wavelengths of both are equal. In addition, the light reflecting layer Xa (22a) and the light reflecting layer Xb (22b) have generally the same helical pitch, and the selective reflection wavelengths of both are equal.

In the case of such an embodiment, the light reflecting layer Xa (20a) and the light reflecting layer Xb (20b) play a role of reflecting light on the shorter wavelength side, and the light reflecting layer Xa (22a) and the light reflecting layer Xb (22b) play a role of reflecting light on the longer wavelength side. That is, by using four layers of light reflecting layers, they complementarily reflect light in a wide wavelength range.

In Fig. 3, each of the light reflecting layer Xa and the light reflecting layer Xb is included in two layers in the laminate 10b, but the present invention is not limited thereto. It is sufficient that at least one light reflecting layer Xa and at least one light reflecting layer Xb are contained in the laminate.

Further, the laminating order of the light reflecting layer Xa and the light reflecting layer Xb is also not particularly limited, and for example, the light reflecting layer Xa (20a), the light reflecting layer Xb (20b), the light reflecting layer Xa (22a), and the light reflecting layer Xb (22b) may be laminated in this order.

The total number of layers of the light reflecting layer Xa contained in the laminate is not particularly limited, but it is, for example, preferably 1 to 10 layers, more preferably 1 to 5 layers, and still more preferably 1 layer.

The total number of layers of the light reflecting layer Xb contained in the laminate is not particularly limited, but it is, for example, preferably 1 to 10 layers, more preferably 1 to 5 layers, and still more preferably 1 layer.

The total number of layers of the light reflecting layer Xa and the total number of layers of the light reflecting layer Xb are independent of each other and may be the same or different, but they are preferably the same.

The laminate may have two or more sets of layers, each set consisting of one light reflecting layer Xa and one light reflecting layer Xb. In this case, it is more preferred that the selective reflection wavelength of the light reflecting layer Xa included in each set and the selective reflection wavelength of the light reflecting layer Xb are equal to each other.

In the case where there is a plurality of light reflecting layers Xa contained in the laminate, it is preferred that selective reflection wavelengths of the respective light reflecting layers Xa are different from each other. The reason for this is that the reflection efficiency does not become higher even if there is a plurality of light reflecting layers Xa having the same selective reflection wavelength. Here, the selective reflection wavelengths of the two light reflecting layers are different from each other means that the difference between the two selective reflection wavelengths exceeds at least 20 nm. For example, in the case where there is a plurality of light reflecting layers Xa, the difference in selective reflection wavelengths between the light reflecting layers Xa is preferably more than 20 nm, more preferably 30 nm or more, and particularly preferably 40 nm or more.

Further, in the case where there is a plurality of light reflecting layers Xb contained in the laminate, it is likewise preferred that selective reflection wavelengths of the respective light reflecting layers Xb are different from each other. In the case where there is a plurality of light reflecting layers Xb, the difference in selective reflection wavelengths between the light reflecting layers Xb is preferably more than 20 nm, more preferably 30 nm or more, and particularly preferably 40 nm or more.

In the case where the laminate has two or more sets of layers, each set consisting of one layer of the light reflecting layer Xa and one layer of the light reflecting layer Xb, it is preferred that the selective reflection wavelengths of the light reflecting layers Xa included in the different sets are different from each other and it is also preferred that the selective reflection wavelengths of the light reflecting layers Xb included in different sets are different from each other.

It is more preferred that the laminate has two or more sets of layers, each set consisting of one layer of the light reflecting layer Xa and one layer of the light reflecting layer Xb, the selective reflection wavelengths of the light reflecting layer Xa and the light reflecting layer Xb included in each set are equal to each other, the selective reflection wavelengths of the light reflecting layers Xa included in the different sets are different from each other, and the selective reflection wavelengths of the light reflecting layers Xb included in different sets are different from each other.

In the case where two or more light reflecting layers Xa are included in the laminate, it is preferred that the type of chiral agent contained in each light reflecting layer Xa is the same.

In the case where two or more light reflecting layers Xb are included in the laminate, it is preferred that the type of chiral agent contained in each light reflecting layer Xb is the same.

In the above-described embodiment, cost is reduced due to commonality of members.

The thickness of each light reflecting layer is not particularly limited, but it is preferred that the thickness is about 1 to 8 μm (preferably about 2 to 7 μm).

One suitable embodiment of the laminate that may be formed in the method of the invention may be, for example, a laminate X in which the ratio (R1) of the absorbance at a wavelength of 830 nm relative to the absorbance at a wavelength of 730 nm is 3 or more. The ratio (R1) is preferably 3.5 to 30 and more preferably 4 to 25.

In the laminate X, it is further preferred that the ratio (R2) of the absorbance at a wavelength of 630 nm relative to the absorbance at a wavelength of 730 nm is 3 or more. The ratio (R2) is more preferably 3.5 to 30, and still more preferably 4 to 25.

Another suitable embodiment of the laminate that may be formed in the method of the invention may be, for example, a laminate Y in which the ratio (R3) of the absorbance at a wavelength of 950 nm relative to the absorbance at a wavelength of 850 nm is 3 or more. The ratio (R3) is preferably 3.5 to 30 and more preferably 4 to 25.

In the laminate Y, it is further preferred that the ratio (R4) of the absorbance at a wavelength of 750 nm relative to the absorbance at a wavelength of 850 nm is 3 or more. The ratio (R4) is more preferably 3.5 to 30, and still more preferably 4 to 25.

Yet another suitable embodiment of the laminate that may be formed in the method of the invention may be, for example, a laminate Z in which the ratio (R5) of the absorbance at a wavelength of 1040 nm relative to the absorbance at a wavelength of 940 nm is 3 or more. The ratio (R5) is preferably 3.5 to 30 and more preferably 4 to 25.

In the laminate Z, it is further preferred that the ratio (R6) of the absorbance at a wavelength of 840 nm relative to the absorbance at a wavelength of 940 nm is 3 or more. The ratio (R6) is more preferably 3.5 to 30, and still more preferably 4 to 25.

In the laminates X to Z, angle dependence is further reduced, which is preferable.

Hereinafter, individual layers (multilayer reflective film, light absorbing layer, and the like) constituting the laminate will be described in detail.

<Multilayer reflective film>

The multilayer reflective film is a film consisting of a plurality of light reflecting layers disposed adjacent to each other. As described above, light having a predetermined wavelength is reflected by the multilayer reflective film consisting of the light reflecting layers.In the present invention, the reflective laminated film reflects light in at least part of a wavelength range of 650 to 1200 nm.

The multilayer reflective film includes at least one layer of light reflecting layers Xa formed by immobilizing a dextrorotatory cholesteric liquid crystalline phase and at least one layer of light reflecting layers Xb formed by immobilizing a levorotatory cholesteric liquid crystalline phase, in which the selective reflection wavelength of the at least one layer of light reflecting layers Xa is equal to the selective reflection wavelength of the at least one layer of the light reflecting layers Xb.

The haze value of the multilayer reflective film is not particularly limited, but it is preferably 1% or less, more preferably 0.5% or less, and still more preferably 0.4% or less.

By adjusting the types of the materials (mainly liquid crystal compounds and chiral agents) used for forming each light reflecting layer and concentration thereof, it is possible to form each light reflecting layer with a desired helical pitch. The thickness of each light reflecting layer can be set to a desired range by adjusting the coating amount. By reducing the thickness of the light reflecting layer, it is possible to intentionally lower the reflectance and to transmit a part of the light.

In the method now claimed each light reflecting layer is formed by using a composition containing a liquid crystal compound having a polymerizable group and a chiral agent (polymerizable liquid crystal composition). This allows easy adjustment of the thickness of the light reflecting layer and the helical pitch. More specifically, a coating film is formed using a composition containing a liquid crystal compound having a polymerizable group and a chiral agent, and the liquid crystal compound is cholesterically aligned and then immobilized by photopolymerization.

In the case of forming the light reflecting layer Xa formed by immobilizing a dextrorotatory cholesteric liquid crystalline phase, a dextrorotatory chiral agent is used as the chiral agent, and in the case of forming the light reflecting layer Xb formed by immobilizing a levorotatory cholesteric liquid crystalline phase, a levorotatory chiral agent is used as the chiral agent.

The composition may contain other components than the liquid crystal compound having a polymerizable group and the chiral agent. Examples of the other components include a polymerization initiator, a solvent, and a non-polymerizable liquid crystal compound. In order to improve the uniformity of alignment of the liquid crystal compound, the coatability of the composition, and the coating film hardness, the composition may further contain at least one kind

selected from various additives such as a horizontal alignment agent, an unevenness-preventing agent, a cissing inhibitor, and a polymerizable compound. If necessary, the composition may further contain a polymerization inhibitor, an antioxidant, an ultraviolet absorber, a photostabilizer, a color material, metal oxide particles, and the like, within a range that does not deteriorate the optical performance.

Two or more kinds of each component may be contained in the composition.

Hereinafter, a method for forming a light reflecting layer using the above-mentioned composition will be described in detail.

First, components contained in the composition will be described in detail.

(Liquid crystal composition)

The composition contains a liquid crystal compound having a polymerizable group (hereinafter, also referred to as "polymerizable liquid crystal compound"). The liquid crystal compound is preferably a so-called rod-like liquid crystal compound.

The rod-like liquid crystal compound is preferably azomethines, azoxys, cyanobiphenyls, cyanophenyl esters, benzoic acid esters, cyclohexane carboxylic acid phenyl esters, cyanophenyl cyclohexanes, cyano-substituted phenyl pyrimidines, alkoxy-substituted phenyl pyrimidines, phenyl dioxanes, tolanes, and alkenyl cyclohexyl benzonitriles.

As the liquid crystal compound, not only low molecular liquid crystalline molecules but also polymer liquid crystalline molecules can be used.

Type of the polymerizable group included in the polymerizable liquid crystal compound is not particularly limited, and examples thereof include an unsaturated polymerizable group, an epoxy group, and an aziridinyl group. Among these, an unsaturated polymerizable group is preferable, and an ethylenically unsaturated polymerizable group (for example, an acryloyloxy group or a methacryloyloxy group) is more preferable. The number of the polymerizable groups that the liquid crystal compound has is preferably 1 to 6 and more preferably 1 to 3.

Examples of the rod-like liquid crystal compound having a polymerizable group (polymerizable rod-like liquid crystal compound) include compounds disclosed in Makromol. Chem., Vol. 190, p. 2255 (1989); Advanced Materials Vol. 5, p. 107 (1993); US4683327A, US5622648A, and US5770107A; WO95/22586A, WO95/24455A, WO97/00600A, WO98/23580A, and WO98/52905A; JP1989-272551A (JP-H01-272551A), JP1994-16616A (JP-H06-16616A), JP1995-110469A (JP-H07-110469A), and JP1999-80081A (JP-H11-80081A); and JP2001-64627.

The bandwidth $\Delta\lambda$ of selective reflection by the light reflecting layer is represented by $\Delta\lambda = \Delta n \times P$, using the refractive index anisotropy $\Delta n$ of the polymerizable liquid crystal compound to be used and the helical pitch P. Therefore, in order to obtain a wide bandwidth $\Delta\lambda$, it is preferable to use a polymerizable liquid crystal compound exhibiting a high $\Delta n$. Specifically, $\Delta n$ at 30°C of the polymerizable liquid crystal compound is preferably 0.25 or more, more preferably 0.3 or more, and still more preferably 0.35 or more. The upper limit of $\Delta n$ is not particularly limited, but it is often 0.6 or less.

As a method for measuring the refractive index anisotropy $\Delta n$, a method using a wedge-shaped liquid crystal cell described on page 202 of the Liquid Crystal Handbook (edited by Liquid Crystal Handbook Editing Committee, published by Maruzen Co., Ltd.) is generally used. In the case of a compound which is liable to crystallize, the refractive index anisotropy $\Delta n$ can be estimated from the extrapolated value through the evaluation of a mixture with other liquid crystals.

Examples of the polymerizable liquid crystal compound exhibiting a high $\Delta n$ include the compounds described in US6514578B, JP3999400B, JP4117832B, JP4517416B, JP4836335B, JP5411770B, JP5411771B, JP5510321B, JP5705465B, JP5721484B, and JP5723641B.

The polymerizable rod-like liquid crystal compound is preferably a polymerizable rod-like liquid crystal compound represented by General Formula (X).

General Formula (X) $Q^1\text{-}L^1\text{-}Cy^1\text{-}L^2\text{-}(Cy^2\text{-}L^3)_n\text{-}Cy^3\text{-}L^4\text{-}Q^2$

(In General Formula (X), $Q^1$ and $Q^2$ are each independently a polymerizable group, $L^1$ and $L^4$ are each independently a divalent linking group, $L^2$ and $L^3$ are each independently a single bond or a divalent linking group, $Cy^1$, $Cy^2$ and $Cy^3$ are a divalent cyclic group, and n is 0, 1, 2 or 3)

Hereinafter, the polymerizable rod-like liquid crystal compound represented by General Formula (X) will be described.

In General Formula (X), $Q^1$ and $Q^2$ are each independently a polymerizable group. The polymerization type of the polymerizable group is preferably addition polymerization (including ring-opening polymerization) or condensation polymerization. In other words, the polymerizable group is preferably a functional group capable of addition polymerization reaction or condensation polymerization reaction. Examples of the polymerizable group are shown below.

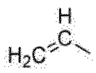 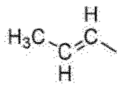 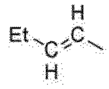 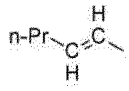

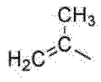 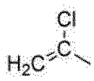 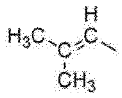 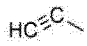

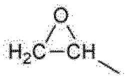 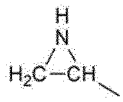

-SH -OH $-NH_2$

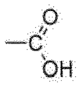 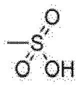 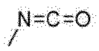 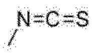

In General Formula (X), $L^1$ and $L^4$ are each independently a divalent linking group. $L^1$ and $L^4$ are each independently preferably a divalent linking group selected from the group consisting of -O-, -S-, -CO-, -NR-, -C=N-, a divalent chain-like group, a divalent cyclic group, and a combination thereof. R is an alkyl group having 1 to 7 carbon atoms or a hydrogen atom. R is preferably an alkyl group having 1 to 4 carbon atoms or a hydrogen atom, more preferably a methyl group, an ethyl group, or a hydrogen atom, and still more preferably a hydrogen atom.

Examples of the divalent linking group formed by a combination of groups are shown below. Here, the left side is bonded to Q ($Q^1$ or $Q^2$) and the right side is bonded to Cy ($Cy^1$ or $Cy^3$).

L-1: -CO-O-divalent chain-like group-O-
L-2: -CO-O-divalent chain-like group-O-CO-
L-3: -CO-O-divalent chain-like group-O-CO-O-
L-4: -CO-O-divalent chain-like group-O-divalent cyclic group-L-5: -CO-O-divalent chain-like group-O-divalent cyclic group-CO-O-L-6: -CO-O-divalent chain-like group-O-divalent cyclic group-O-CO-
L-7: -CO-O-divalent chain-like group-O-divalent cyclic group-divalent chain-like group-
L-8: -CO-O-divalent chain-like group-O-divalent cyclic group-divalent chain-like group-CO-O-
L-9: -CO-O-divalent chain-like group-O-divalent cyclic group-divalent chain-like group-O-CO-
L-10: -CO-O-divalent chain-like group-O-CO-divalent cyclic group-
L-11: -CO-O-divalent chain-like group-O-CO-divalent cyclic group-CO-O-
L-12: -CO-O-divalent chain-like group-O-CO-divalent cyclic group-O-CO-
L-13: -CO-O-divalent chain-like group-O-CO-divalent cyclic group-divalent chain-like group-
L-14: -CO-O-divalent chain-like group-O-CO-divalent cyclic group-divalent chain-like group-COO-
L-15: -CO-O-divalent chain-like group-O-CO-divalent cyclic group-divalent chain-like group-O-CO-
L-16: -CO-O-divalent chain-like group-O-CO-O-divalent cyclic group-
L-17: -CO-O-divalent chain-like group-O-CO-O-divalent cyclic group-CO-O-
L-18: -CO-O-divalent chain-like group-O-CO-O-divalent cyclic group-O-CO-
L-19: -CO-O-divalent chain-like group-O-CO-O-divalent cyclic group-divalent chain-like group-
L-20: -CO-O-divalent chain-like group-O-CO-O-divalent cyclic group-divalent chain-like group-CO-O-
L-21: -CO-O-divalent chain-like group-O-CO-O-divalent cyclic group-divalent chain-like group-O-CO-

The divalent chain-like group refers to an alkylene group, a substituted alkylene group, an alkenylene group, a substituted alkenylene group, an alkynylene group, or a substituted alkynylene group. Among them, an alkylene group, a substituted alkylene group, an alkenylene group, or a substituted alkenylene group is preferred, and an alkylene group or an alkenylene group is more preferred.

The alkylene group may be branched. The number of carbon atoms in the alkylene group is preferably 1 to 12, more preferably 2 to 10, and still more preferably 2 to 8.

The alkylene moiety of the substituted alkylene group is the same as that of the foregoing alkylene group. Examples of the substituent include a halogen atom.

The alkenylene group may be branched. The number of carbon atoms in the alkenylene group is preferably 2 to 12, more preferably 2 to 10, and still more preferably 2 to 8.

The alkylene moiety of the substituted alkylene group is the same as that of the foregoing alkylene group. Examples of the substituent include a halogen atom.

The alkynylene group may be branched. The number of carbon atoms in the alkynylene group is preferably 2 to 12, more preferably 2 to 10, and still more preferably 2 to 8.

The alkynylene moiety of the substituted alkynylene group is the same as that of the foregoing alkynylene group. Examples of the substituent include a halogen atom.

Specific examples of the divalent chain-like group include ethylene, trimethylene, propylene, tetramethylene, 2-methyl-tetramethylene, pentamethylene, hexamethylene, octamethylene, 2-butenylene, and 2-butynylene.

The definition and examples of the divalent cyclic group are the same as the definition and examples of $Cy^1$, $Cy^2$ , and $Cy^3$ to be described later.

In General Formula (X), $L^2$ or $L^3$ are each independently a single bond or a divalent linking group. $L^2$ and $L^3$ are each independently preferably a divalent linking group selected from the group consisting of -O-, -S-, -CO-, -NR-, -C=N-, a divalent chain-like group, a divalent cyclic group, and a combination thereof, or a single bond. R is an alkyl group having 1 to 7 carbon atoms or a hydrogen atom, preferably an alkyl group having 1 to 4 carbon atoms or a hydrogen atom, more preferably a methyl group, an ethyl group, or a hydrogen atom, and still more preferably a hydrogen atom. The divalent chain-like group and a divalent cyclic group have the same definition as in $L^1$ and $L^4$.

Preferred examples of the divalent linking group as $L^2$ or $L^3$ include -COO-, -OCO-, -OCOO-, -OCONR-, -COS-, -SCO-, -CONR-, -NRCO-, $-CH_2CH_2-$, -C=C-COO-, -C=N-, and -C=N-N=C-.

In General Formula (X), n is 0, 1, 2 or 3. In the case where n is 2 or 3, two $L^3$'s may be the same or different, and two $Cy^2$'s may be the same or different. n is preferably 1 or 2 and more preferably 1.

In General Formula (X), $Cy^1$, $Cy^2$ , and $Cy^3$ are each independently a divalent cyclic group.

The ring contained in the cyclic group is preferably a 5-membered ring, a 6-membered ring, or a 7-membered ring, more preferably a 5-membered ring or a 6-membered ring, and still more preferably a 6-membered ring.

The ring contained in the cyclic group may be a fused ring. However, it is more preferred that such a ring is a monocyclic ring rather than a fused ring.

The ring contained in the cyclic group may be any of an aromatic ring, an aliphatic ring, and a heterocyclic ring. Examples of the aromatic ring include a benzene ring and a naphthalene ring. Examples of the aliphatic ring include a cyclohexane ring. Examples of the heterocyclic ring include a pyridine ring and a pyrimidine ring.

The cyclic group having a benzene ring is preferably 1,4-phenylene. The cyclic group having a naphthalene ring is preferably naphthalene-1,5-diyl or naphthalene-2,6-diyl. The cyclic group having a cyclohexane ring is preferably 1,4-cyclohexylene. The cyclic group having a pyridine ring is preferably pyridine-2,5-diyl. The cyclic group having a pyrimidine ring is preferably pyrimidine-2,5-diyl.

The cyclic group may have a substituent. Examples of the substituent include a halogen atom, a cyano group, a nitro group, an alkyl group having 1 to 5 carbon atoms, a halogen-substituted alkyl group having 1 to 5 carbon atoms, an alkoxy group having 1 to 5 carbon atoms, an alkylthio group having 1 to 5 carbon atoms, an acyloxy group having 2 to 6 carbon atoms, an alkoxycarbonyl group having 2 to 6 carbon atoms, a carbamoyl group, an alkyl-substituted carbamoyl group having 2 to 6 carbon atoms, and an acylamino group having 2 to 6 carbon atoms.

Hereinafter, examples of the polymerizable rod-like liquid crystal compound represented by General Formula (X) are shown, but the present invention is not limited thereto.

I-1)

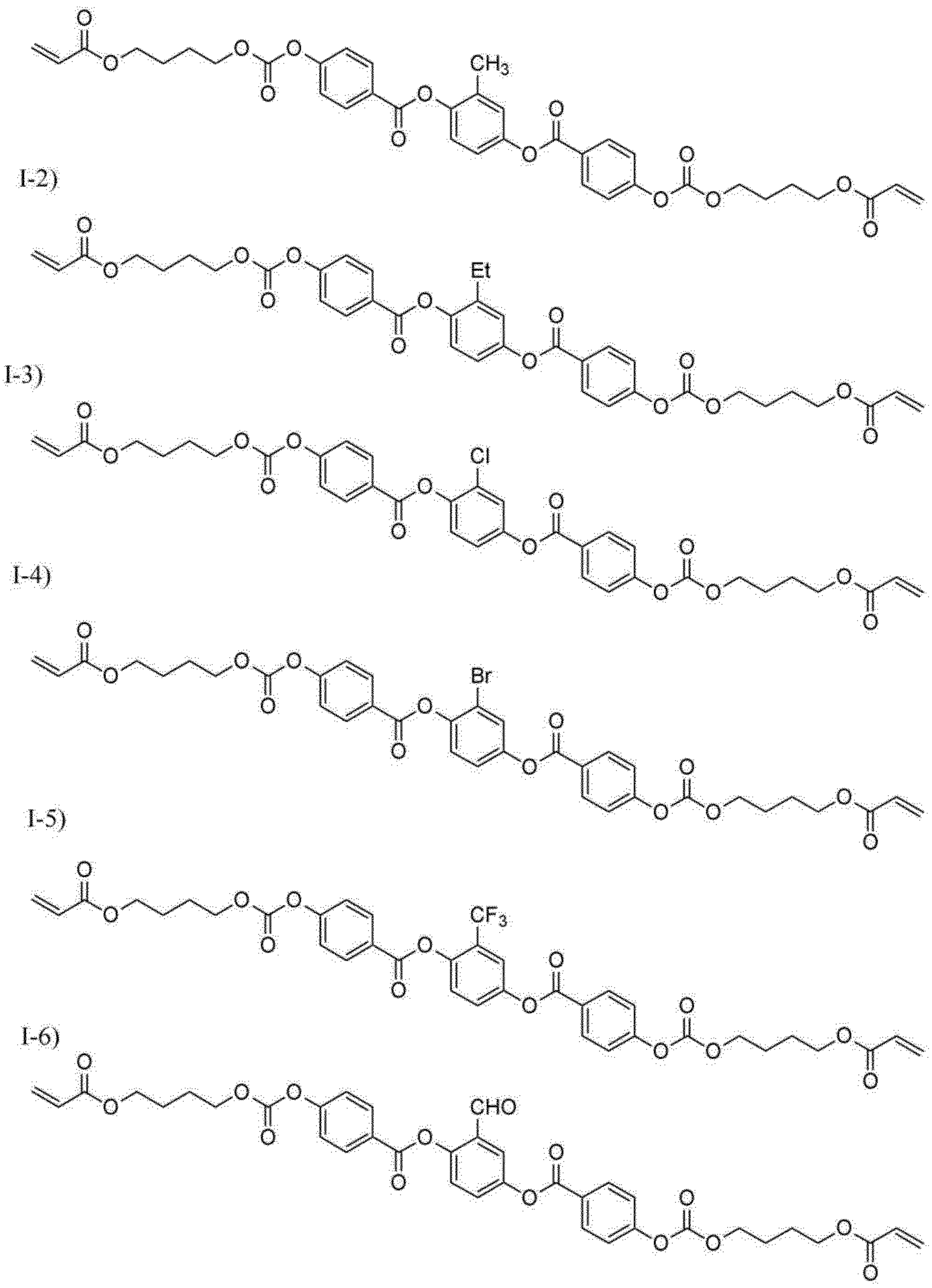

I-2)

I-3)

I-4)

I-5)

I-6)

I-7)

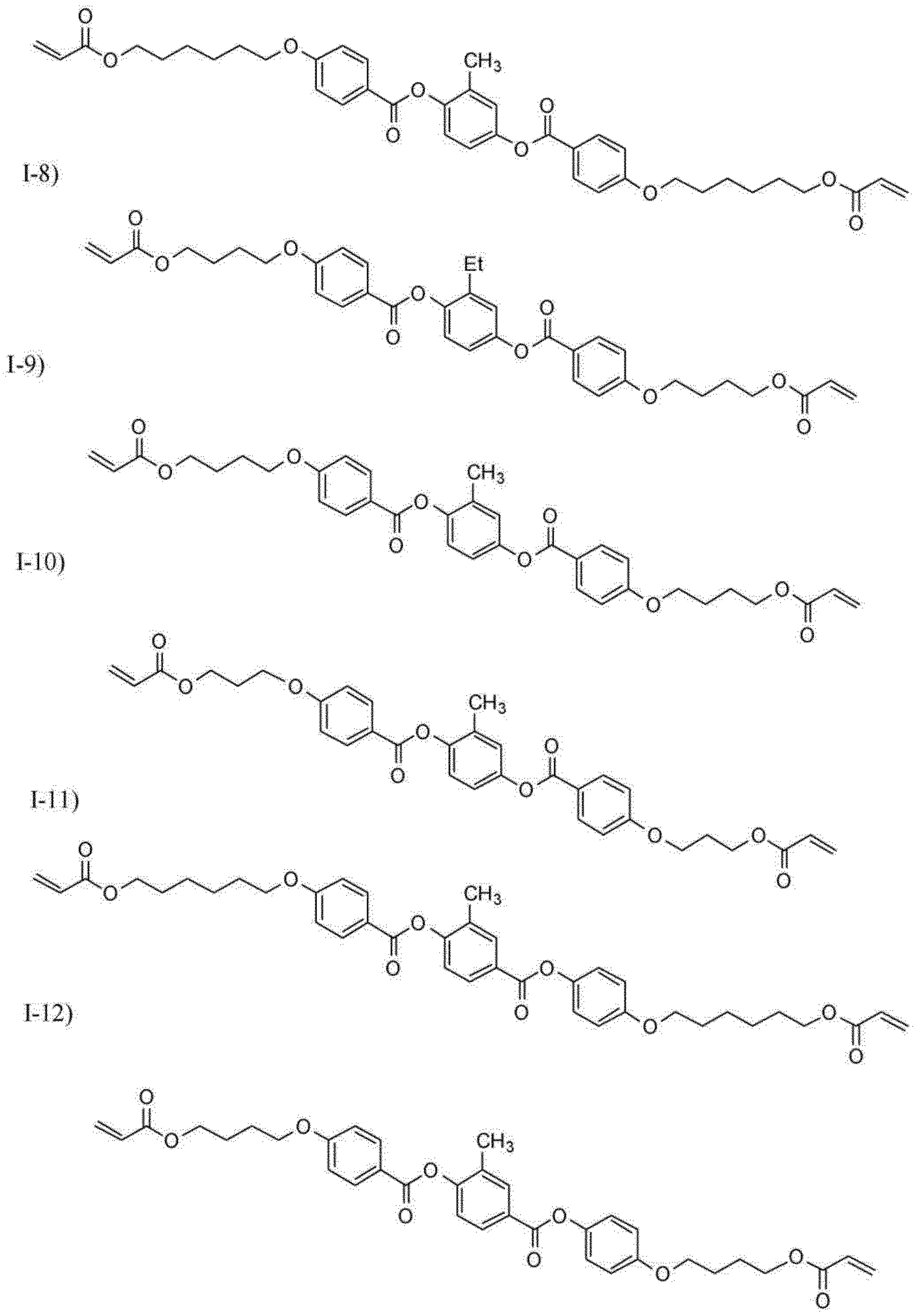

I-8)

I-9)

I-10)

I-11)

I-12)

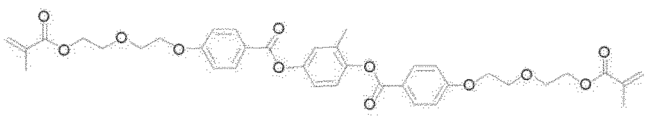

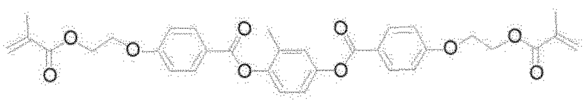

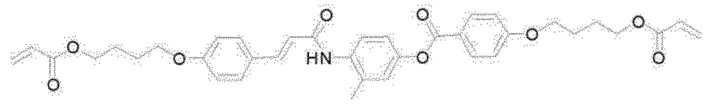

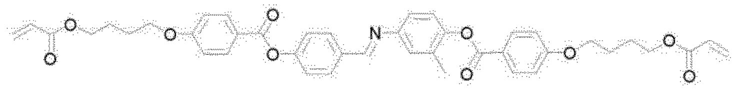

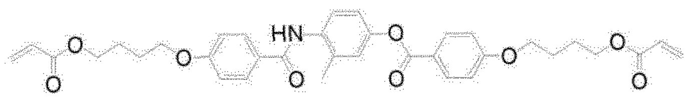

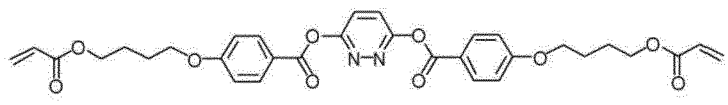

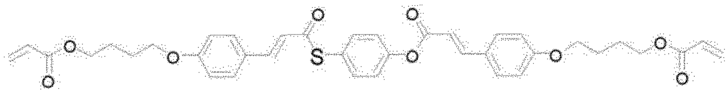

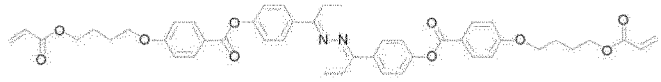

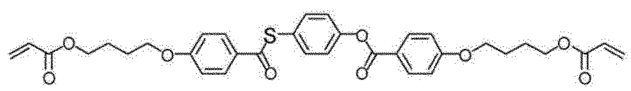

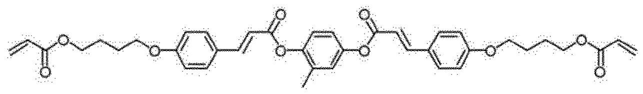

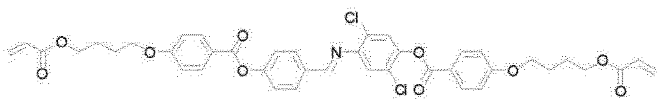

In addition to the polymerizable rod-like liquid crystal compound represented by General Formula (X), it is preferable to use at least one compound represented by General Formula (V) in combination.

General Formula (V) $M^1-(L^1)_p-Cy^1-L^2-(Cy^2-L^3)_n-Cy^3-(L^4)_q-M^2$

(In General Formula (V), $M^1$ and $M^2$ each independently represent a hydrogen atom, a substituted or unsubstituted alkyl group, a substituted or unsubstituted aryl group, a heterocyclic group, a cyano group, a halogen atom, -SCN, $-CF_3$, a nitro group, or $Q^1$, and at least one of $M^1$ or $M^2$ represents a group other than $Q^1$.

Meanwhile, $Q^1$, $L^1$, $L^2$, $L^3$, $L^4$ , $Cy^1$, $Cy^2$ , $Cy^3$, and n have the same definition as in the group represented by General Formula (X). Further, p and q are 0 or 1.)

In the case where $M^1$ and $M^2$ do not represent $Q^1$, $M^1$ and $M^2$ are preferably a hydrogen atom, a substituted or unsubstituted alkyl group, a substituted or unsubstituted aryl group, or a cyano group and more preferably an alkyl group having 1 to 4 carbon atoms or a phenyl group.

p and q are preferably 0.

The mixing ratio of the compound represented by General Formula (V) in the mixture of the polymerizable liquid crystal compound represented by General Formula (X) and the compound represented by represented by General Formula (V) is preferably 0.1 to 40%, more preferably 1% to 30%, and still more preferably 5 to 20%.

Hereinafter, preferred examples of the compound represented by General Formula (V) are shown below, but the present invention is not limited thereto.

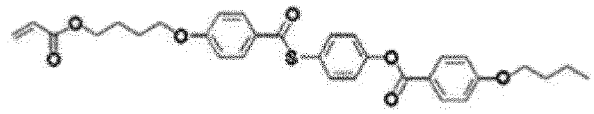

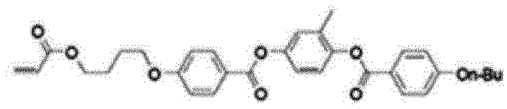

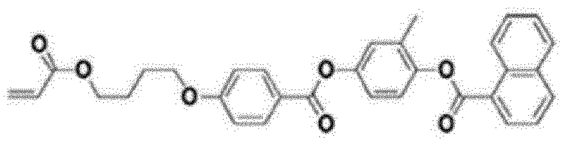

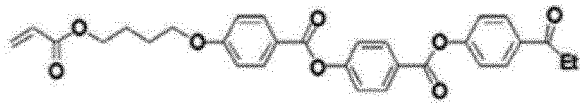

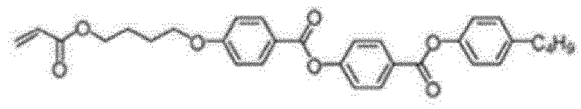

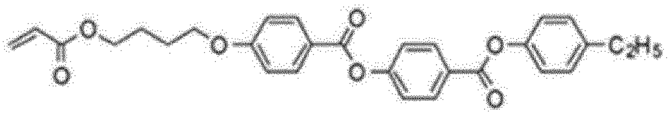

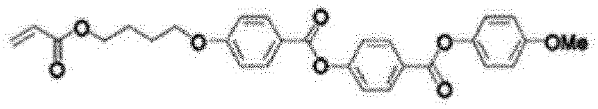

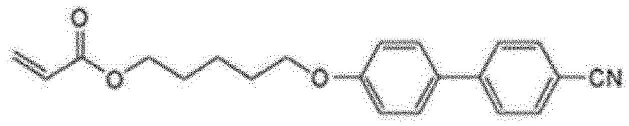

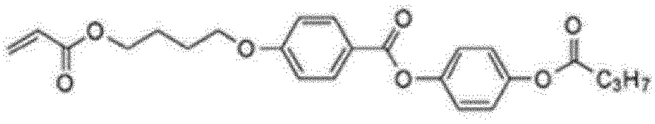

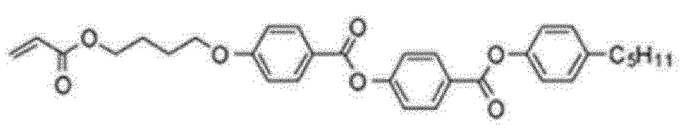

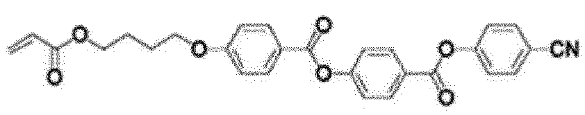

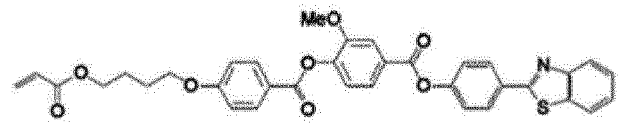

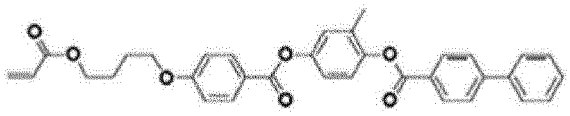

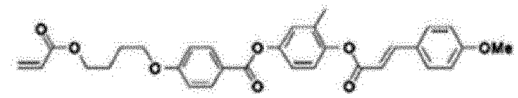

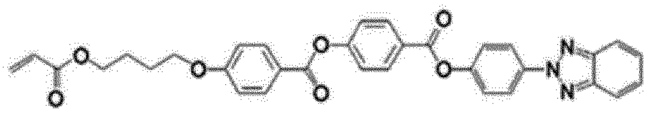

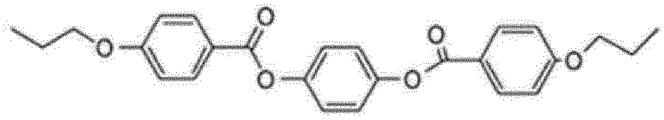

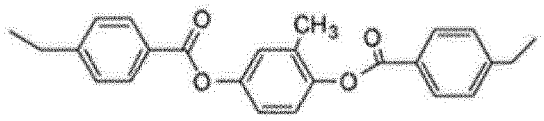

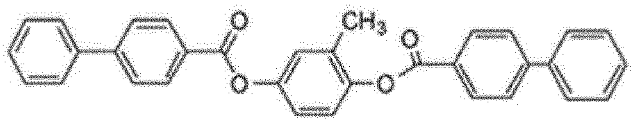

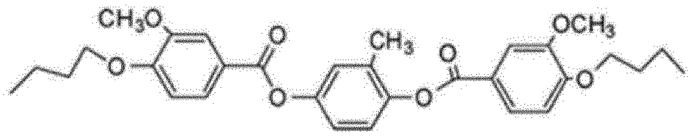

Another suitable embodiment of the liquid crystal compound having a polymerizable group is a compound represented by General Formula (5).

$$P^1\text{-}Sp^1\text{-}Y^1\left(A^1\text{-}X^1\right)_{n^1}A^3\equiv A^4\left(X^2\text{-}A^2\right)_{n^2}Y^2\text{-}Sp^2\text{-}P^2 \quad (5)$$

$A^1$ to $A^4$ each independently represent an aromatic carbon ring or heterocyclic ring which may have a substituent. Examples of the aromatic carbon ring include a benzene ring and a naphthalene ring. Examples of the heterocyclic ring include a furan ring, a thiophene ring, a pyrrole ring, a pyrroline ring, a pyrrolidine ring, an oxazole ring, an isoxazole ring, a thiazole ring, an isothiazole ring, an imidazole ring, an imidazoline ring, an imidazolidine ring, a pyrazole ring, a pyrazoline ring, a pyrazolidine ring, a triazole ring, a furazan ring, a tetrazole ring, a pyran ring, a thiin ring, a pyridine ring, a piperidine ring, an oxazine ring, a morpholine ring, a thiazine ring, a pyridazine ring, a pyrimidine ring, a pyrazine ring, a piperazine ring, and a triazine ring. Among them, $A^1$ to $A^4$ are preferably an aromatic carbon ring and more preferably a benzene ring.

The type of the substituent which may be substituted with an aromatic carbon ring or a heterocyclic ring is not particularly limited, and examples thereof include a halogen atom, a cyano group, a nitro group, an alkyl group, a halogen-substituted alkyl group, an alkoxy group, an alkylthio group, an acyloxy group, an alkoxycarbonyl group, a carbamoyl group, an alkyl-substituted carbamoyl group, and an acylamino group having 2 to 6 carbon atoms.

$X^1$ and $X^2$ each independently represent a single bond, -COO-, -OCO-, $-CH_2CH_2-$, $-OCH_2-$, $-CH_2O-$, -CH=CH-, -CH=CH-COO-, -OCO-CH=CH-, or -C=C-. Among them, a single bond, -COO-, or -C=C- is preferred.

$Y^1$ and $Y^2$ each independently represent a single bond, -O-, -S-, -CO-, -COO-, -OCO-, -CONH-, -NHCO-, -CH=CH-, -CH=CH-COO-, -OCO-CH=CH-, or -C=C-. Among them, -O- is preferred.

$Sp^1$ and $Sp^2$ each independently represent a single bond or a carbon chain having 1 to 25 carbon atoms. The carbon chain may be linear, branched, or cyclic. The carbon chain is preferably a so-called alkyl group. Among them, an alkyl group having 1 to 10 carbon atoms is more preferred.

$P^1$ and $P^2$ each independently represent a hydrogen atom or a polymerizable group, and at least one of $P^1$ or $P^2$ represents a polymerizable group. As the polymerizable group, the polymerizable group contained in the liquid crystal compound having a polymerizable group described above is exemplified.

$n^1$ and $n^2$ each independently represent an integer of 0 to 2, and in the case where $n^1$ or $n^2$ is 2, a plurality of $A^1$'s, $A^2$'s, $X^1$'s, and $X^2$'s may be the same or different.

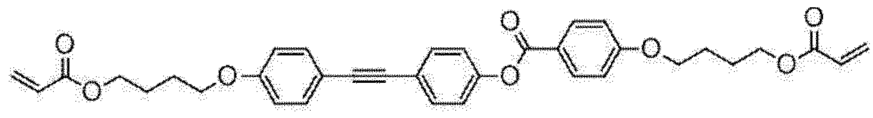
(2-1)

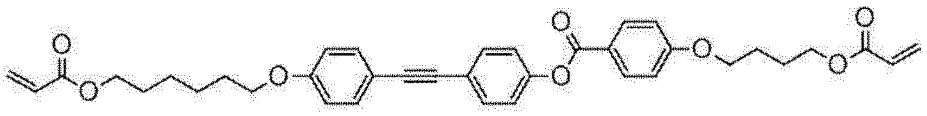
(2-2)

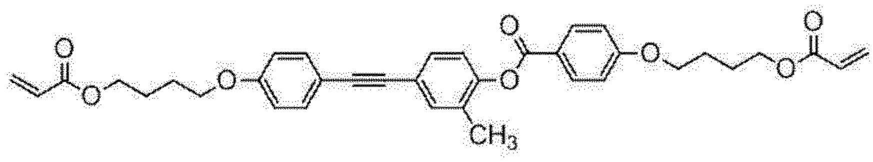
(2-3)

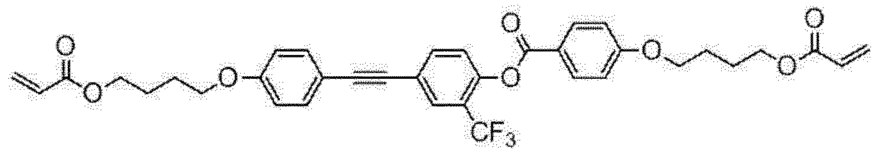
(2-4)

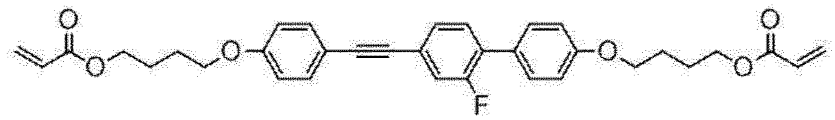
(2-5)

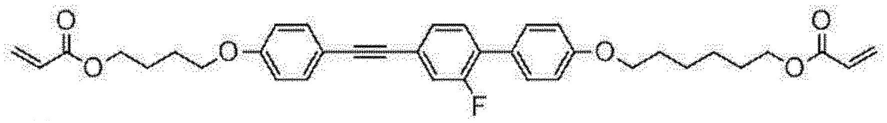
(2-6)

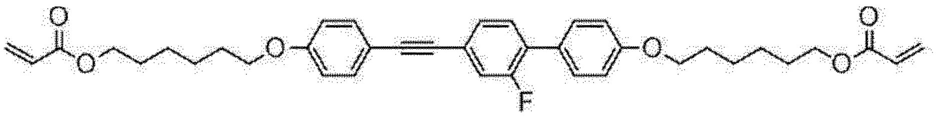
(2-7)

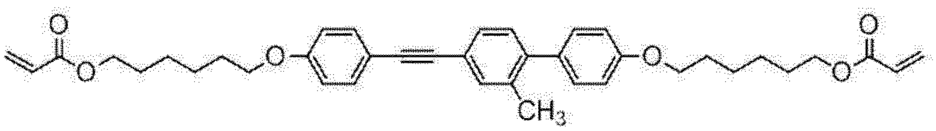
(2-8)

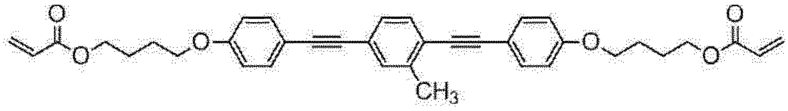
(2-9)

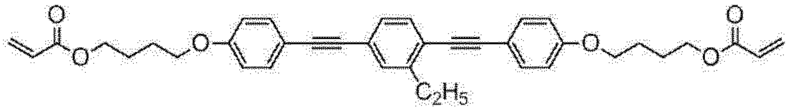
(2-10)

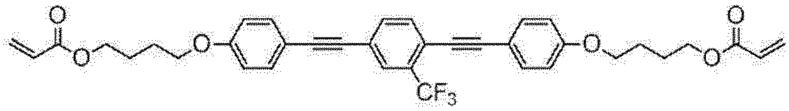
(2-11)

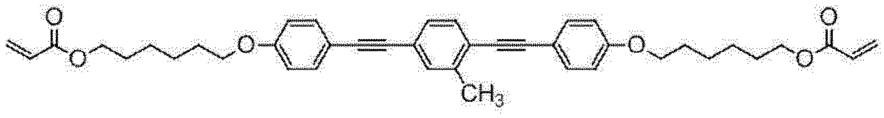
(2-12)

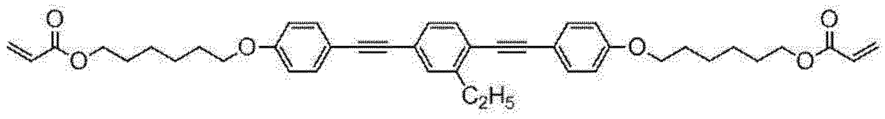
(2-13)

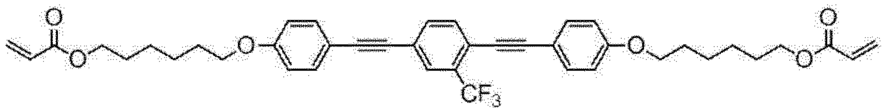
(2-14)

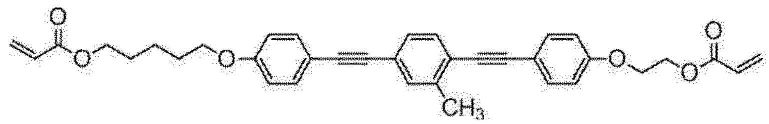
(2-15)

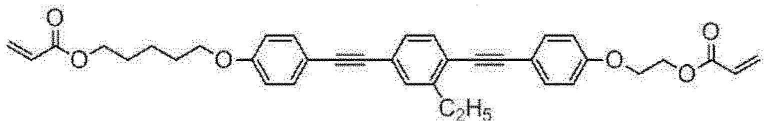
(2-16)

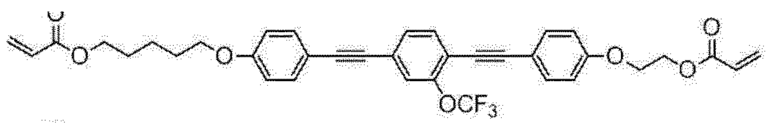
(2-17)

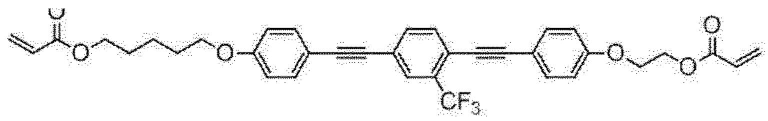
(2-18)

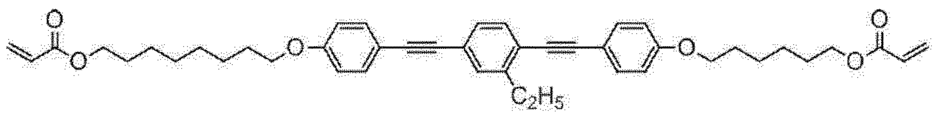
(2-19)

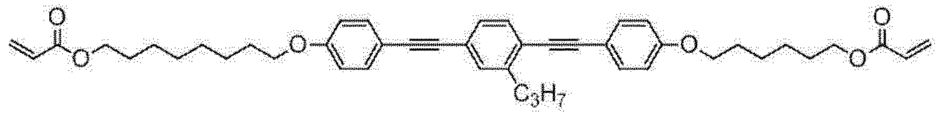

(2-20)

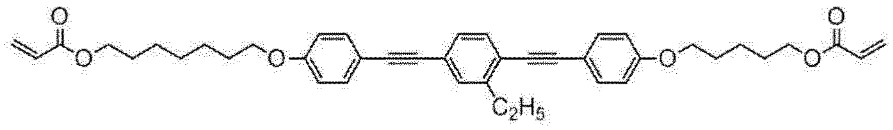

(2-21)

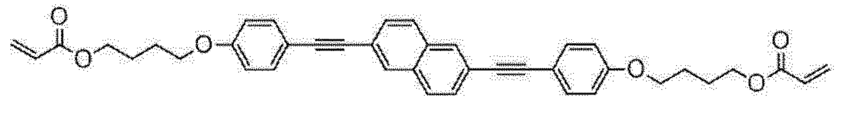

(2-22)

(Chiral agent)

As the chiral agent, various known chiral agents (for example, chiral agents for Twisted Nematic (TN) or Super Twisted Nematic (STN), 199 p, Section 4-3, Chapter 3 in Liquid Crystal Device Handbook edited by the first 42 Committee of Japan Society for the Promotion of Science, 1989) may be used. The chiral agent generally contains an asymmetric carbon atom, but an axially asymmetric compound not containing an asymmetric carbon atom, or a planarly asymmetric compound not containing an asymmetric carbon atom can also be used as the chiral agent. Examples of the axially asymmetric compound or the planarly asymmetric compound include binaphthyl, helicene, paracyclophane, and derivatives thereof.

As described above, a dextrorotatory chiral agent is used as the chiral agent contained in the light reflecting layer Xa, and a levorotatory chiral agent is used as the chiral agent contained in the light reflecting layer Xb.

The chiral agent may have a polymerizable group. In the case where the chiral agent has a polymerizable group, a polymer having a repeating unit derived from a liquid crystal compound and a repeating unit derived from a chiral agent can be formed by a polymerization reaction of a chiral agent having a polymerizable group and a polymerizable liquid crystal compound. In this embodiment, the polymerizable group contained in the chiral agent having a polymerizable group is preferably the same type as the polymerizable group contained in the polymerizable liquid crystal compound. Therefore, the polymerizable group of the chiral agent is also preferably an unsaturated polymerizable group, an epoxy group, or an aziridinyl group, more preferably an unsaturated polymerizable group, and still more preferably an ethylenically unsaturated polymerizable group.

Further, the chiral agent may be a liquid crystal compound.

The amount of the chiral agent to be used is preferably 1 to 30 mol% with respect to the polymerizable liquid crystal compound used in combination. With respect to the amount of the chiral agent to be used, it is preferred that the chiral agent is used in a less amount, since the liquid crystallinity is not affected in many cases. Therefore, the optically active compound used as the chiral agent is preferably a compound having a strong twisting power so that a twisted alignment with a desired helical pitch can be attained even with a small amount of the optically active compound.

Examples of the chiral agent exhibiting a strong twisting power include chiral agents described in JP2010-181852A, JP2003-287623A, JP2002-80851A, JP2002-80478A, and JP2002-302487A, which can be preferably used in the present invention. Furthermore, regarding the isosorbide compounds described in these patent publications, isomannide compounds having a corresponding structure may also be used, and regarding the isomannide compounds described in these patent publications, isosorbide compounds having a corresponding structure may also be used.

The dextrorotatory chiral agent is preferably a dextrorotatory chiral agent having a helical twisting power (HTP) of 30 $\mu m^{-1}$ or more. The levorotatory chiral agent is preferably a levorotatory chiral agent having a helical twisting power (HTP) of 30 $\mu m^{-1}$ or more.

The helical twisting power (HTP) is generally used as an indicator indicating the performance of a chiral agent and is a factor indicating the helically aligning ability expressed by the following equation. Specifically, the description thereof is included in "Development of Photoreactive Reactive Chiral Agent for Cholesteric Liquid Crystal for Color Filter Used for Liquid Crystal Display" (Masatoshi Yumoto and Mitsuyoshi Ichihashi).

$$\text{HTP} = 1/(\text{mass\% of chiral agent in solid content (or light reflecting layer) of the composition} \times \text{helical pitch length})$$

Meanwhile, helical pitch length = selective reflection wavelength/average refractive index of solid content (or light reflecting layer) of composition

Here, dextrorotatory chiral agents with strong twisting power are provided to the market more than levorotatory chiral agents. For example, LC756 (manufactured by BASF Corporation) can be preferably used in the present invention as a dextrorotatory chiral agent having an HTP of 30 $\mu m^{-1}$ or more.

HTP of the dextrorotatory chiral agent is preferably 40 $\mu m^{-1}$ or more, and more preferably 50 $\mu m^{-1}$ or more.

Meanwhile, the levorotatory chiral agent having an HTP of 30 $\mu m^{-1}$ or more is not particularly limited, and a known levorotatory chiral agent may be used or a compound (chiral agent) represented by General Formulae (1) to (4) to be described hereinafter may be used.

The HTP of the levorotatory chiral agent is preferably 33 $\mu m^{-1}$ or more, and more preferably 35 $\mu m^{-1}$ or more.

The levorotatory chiral agent is preferably a compound represented by General Formula (1) or a compound represented by General Formula (2), and more preferably a compound represented by General Formula (3) or a compound represented by General Formula (4).

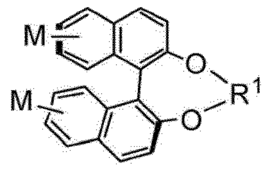 (1)

(In General Formula (1), M's each independently represent a hydrogen atom or a substituent, and $R^1$ represents any one of linking groups shown below.

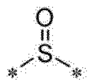 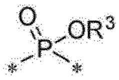 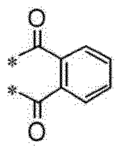 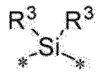 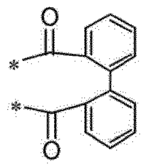

Meanwhile, *'s each independently represent a site of bonding to an oxygen atom in General Formula (1). $R^3$'s each independently represent an alkyl group having 1 to 3 carbon atoms or an aryl group having 6 to 10 carbon atoms.)

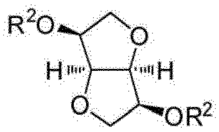 (2)

(In General Formula (2), $R^2$ represents any one of substituents described below, and two $R^2$'s may be the same as or different from each other.

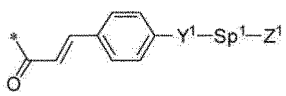 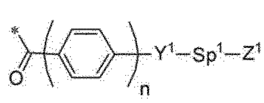

Meanwhile, *'s each independently represent a site of bonding to an oxygen atom in General Formula (2). $Y^1$'s each independently represent a single bond, -O-, -C(=O)O-, -OC(=O)-, or -OC(=O)O-, $Sp^1$'s each independently represent a single bond or an alkylene group having 1 to 8 carbon atoms, $Z^1$'s each independently represent a hydrogen atom or a (meth)acrylic group, and n represents an integer of 1 or more.)

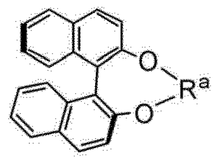 (3)

(In General Formula (3), $R^a$ represents any one of linking groups shown below.

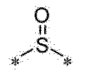

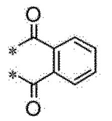

Meanwhile, *'s each independently represent a site of bonding to an oxygen atom in General Formula (3).)

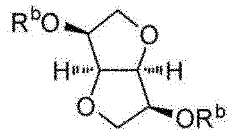 (4)

(In General Formula (4), $R^b$ represents a substituent shown below, and two $R^b$'s may be the same as or different from each other.

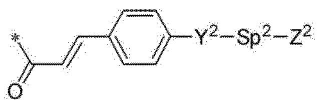

Meanwhile, * represents a site of bonding to an oxygen atom in General Formula (4), $Y^2$ represents a single bond, -O-, or -OC(=O)-, $Sp^2$ represents a single bond or an alkylene group having 1 to 8 carbon atoms, and $Z^2$ represents a hydrogen atom or a (meth)acrylic group.)

The compound represented by General Formula (1) will be described.

In General Formula (1), M's each independently represent a hydrogen atom or a substituent. Among them, M is preferably a hydrogen atom, a halogen atom, an alkyl group having 1 to 12 carbon atoms, an alkynyl group having 1 to 12 carbon atoms, an alkenyl group having 1 to 12 carbon atoms, or an alkyloxy group having 1 to 12 carbon atoms, and each $CH_2$ group in each group may independently be substituted with O, S, OCO, COO, OCOO, CO, or a phenylene group.

Here, in the case where a $CH_2$ group in an alkyl group having 1 to 12 carbon atoms, an alkynyl group having 1 to 12 carbon atoms, an alkenyl group having 1 to 12 carbon atoms, or an alkyloxy group having 1 to 12 carbon atoms is substituted with O, S, OCO, COO, OCOO, CO, or a phenylene group, the position of a $CH_2$ group to be substituted may be a terminal of each group or in the inside of each group. For example, in the case where an alkyl group having one carbon atom is substituted with a phenylene group, M substantially represents a phenyl group; for example, in the case where an alkyl group having 3 carbon atoms is substituted with CO, M substantially represents an ethylcarbonyl group; and for example, in the case where an alkyl group having 4 carbon atoms is substituted with S, M substantially represents a propylthio group, but these substituents are all included in M satisfying General Formula (1).

The alkyl group having 1 to 12 carbon atoms in which a $CH_2$ group is not substituted may be a linear, branched or cyclic alkyl group, examples of which include a methyl group, an ethyl group, a propyl group, a butyl group, a pentyl group, a hexyl group, a heptyl group, an octyl group, a nonyl group, a decyl group, an undecyl group, a dodecyl group, and a cyclohexyl group.

Examples of the alkyl group having 1 to 12 carbon atoms in which a $CH_2$ group is substituted with O include a 2-oxapropyl (=methoxymethyl) group, a 2-oxabutyl (=ethoxymethyl) or 3-oxabutyl (=2-methoxyethyl) group, a 2-, 3-, or 4-oxapentyl group, a 2-, 3-, 4-, or 5-oxahexyl group, a 2-, 3-, 4-, 5-, or 6-oxaheptyl group, a 2-, 3-, 4-, 5-, 6-, or 7-oxaoctyl group, a 2-, 3-, 4-, 5-, 6-, 7-, or 8-oxanonyl group, and a 2-, 3-, 4-, 5-, 6-, 7-, 8-, or 9-oxadecyl group.

Examples of the alkyl group having 1 to 12 carbon atoms in which a $CH_2$ group is substituted with S include a methylthio group, an ethylthio group, a propylthio group, a butylthio group, a pentylthio group, a hexylthio group, a heptylthio group, an octylthio group, a nonylthio group, a decylthio group, and an undecylthio group.

The alkyl group having 1 to 12 carbon atoms in which a $CH_2$ group is substituted with OCO or COO is preferably a linear group having 2 to 6 carbon atoms is preferable. Specific examples thereof include an acetyloxy group, a propionyloxy group, a butyryloxy group, a pentanoyloxy group, a hexanoyloxy group, an acetyloxymethyl group, a propionyloxymethyl group, a butyryloxymethyl group, a pentanoyloxymethyl group, a 2-acetyloxyethyl group, a 2-propionyloxyethyl group, a 2-butyryloxyethyl group, a 3-acetyloxypropyl group, a 3-propionyloxypropyl group, a 4-acetyloxybutyl group, a methoxycarbonyl group, an ethoxycarbonyl group, a propoxycarbonyl group, a butoxycarbonyl group, a pentoxycarbonyl group, a methoxycarbonylmethyl group, an ethoxycarbonylmethyl group, a propoxycarbonylmethyl group, a butoxycarbonylmethyl group, a 2-(methoxycarbonyl)ethyl group, a 2-(ethoxycarbonyl)ethyl group, a 2-(propoxycarbonyl)ethyl group, a 3-(methoxycarbonyl)propyl group, a 3-(ethoxycarbonyl)propyl group, and a 4-(methoxycarbonyl)butyl group.

The alkyl group having 1 to 12 carbon atoms in which a $CH_2$ group is substituted with OCOO may be linear or branched and is preferably linear, and a known group can be used.

Examples of the alkyl group having 1 to 12 carbon atoms in which a $CH_2$ group is substituted with CO include a carbonylmethyl group, a carbonylethyl group, a carbonylpropyl group, a carbonylbutyl group, a carbonylpentyl group, a carbonylhexyl group, a carbonylheptyl group, a carbonyloctyl group, a carbonylnonyl group, a carbonyldecyl group, and a carbonylundecyl group.

Examples of the alkyl group having 1 to 12 carbon atoms in which a $CH_2$ group is substituted with phenylene include a phenyl group.

Further, a $CH_2$ group in an alkyl group having 1 to 12 carbon atoms, an alkynyl group having 1 to 12 carbon atoms, an alkenyl group having 1 to 12 carbon atoms, or an alkyloxy group having 1 to 12 carbon atoms may be substituted with a plurality of same kinds or different kinds of O, S, OCO, COO, OCOO, CO, or a phenylene group.

Examples of the alkyl group having 1 to 12 carbon atoms in which a $CH_2$ group is substituted with a plurality of same kinds or different kinds of O, S, OCO, COO, OCOO, CO, or a phenylene group include an alkyl phenyl carbonyl group, an alkyl phenyloxy carbonyl group, an alkyl phenyl carbonyloxy group, an alkoxy phenyl carbonyl group, an alkoxy phenyloxy carbonyl group, an alkoxy phenyl carbonyloxy group, an alkylthio phenyl carbonyl group, an alkylthio phenyloxy carbonyl group, and an alkylthio phenyl carbonyloxy group.

Examples of the alkynyl group having 1 to 12 carbon atoms in which a $CH_2$ group may be substituted with O, S, OCO, COO, OCOO, CO, or a phenylene group include an ethynyl group, a 1-propynyl group, a 2-propynyl group, a 1-butynyl group, a 2-butynyl group, a 3-butynyl group, a 1-ethynyl-2-propynyl group, a 1-methyl-2-propynyl group, a pentynyl group, a hexynyl group, a heptynyl group, an octynyl group, a nonynyl group, a decynyl group, an undecynyl group, a dodecynyl group, and a cyclooctynyl group. Further, a group obtained by removing hydrogen on a triple bond is preferable, and an ethylnyl group, a 2-propynyl group, a 3-butynyl group, a 4-pentynyl group, a 5-hexynyl group, a 6-heptynyl group, a 7-octynyl group, a 8-nonynyl group, a 9-decynyl group, a 10-undecynyl group, or a 11-dodecynyl group is more preferable.

The alkenyl group having 1 to 12 carbon atoms in which a $CH_2$ group may be substituted with O, S, OCO, COO, OCOO, CO, or a phenylene group may be linear or branched and is preferably linear, and examples thereof include a vinyl group, a prop-1- or prop-2-enyl group; a but-1-, -2-, or but-3-enyl group; a pent-1-, -2-, -3-, or pent-4-enyl group; a hex-1-, -2-, -3-, -4-, or hex-5-enyl group; a hept-1-, -2-, -3-, -4-, -5-, or hept-6-enyl group; an oct-1-, -2-, -3-, -4-, -5-, -6-, or oct-7-enyl group; a non-1-, -2-, -3-, -4-, -5-, -6-, -7-, or non-8-enyl group; and a dec-1-, -2-, -3-, -4-, -5-, -6-, -7-, -8-, or dec-9-enyl group. More examples thereof include C2 to C7-1E-alkenyl, C4 to C7-3E-alkenyl, C5 to C7-4-alkenyl, C6 to C7-5-alkenyl, and C7-6-alkenyl, among which C2 to C7-1E-alkenyl, C4 to C7-3E-alkenyl, or C5 to C7-4-alkenyl is preferred. Particularly preferred examples of the alkenyl group include a vinyl group, a 1E-propenyl group, a 1E-butenyl group, a 1E-pentenyl group, a 1E-hexenyl group, a 1E-heptenyl group, a 3-butenyl group, a 3E-pentenyl group, a 3E-hexenyl group, a 3E-heptenyl group, a 4-pentenyl group, a 4Z-hexenyl group, a 4E-hexenyl group, a 4Z-heptenyl group, a 5-hexenyl group, and a 6-heptenyl group. A group having up to 5 carbon atoms is generally preferred.

Examples of the alkyloxy group having 1 to 12 carbon atoms include a methoxy group, an ethoxy group, a propoxy group, a butoxy group, a pentoxy group, a hexoxy group, a heptoxy group, an octoxy group, a nonoxy group, a decoxy group, an undecoxy group, and a dodecoxy group.

In General Formula (1), M's are each independently preferably a hydrogen atom, a fluorine atom, a bromine atom, an alkyl group having 1 to 12 carbon atoms, an alkynyl group having 1 to 12 carbon atoms, an alkenyl group having 1 to 12 carbon atoms, or an alkyloxy group having 1 to 12 carbon atoms, more preferably a hydrogen atom, a fluorine atom, a bromine atom, an alkyl group having 1 to 8 carbon atoms, an alkynyl group having 1 to 8 carbon atoms, an alkenyl group having 1 to 8 carbon atoms, or an alkyloxy group having 1 to 8 carbon atoms, and still more preferably a hydrogen atom, a fluorine atom, a bromine atom, an alkyl group having 1 to 4 carbon atoms, an alkynyl group having 1 to 4 carbon atoms, an alkenyl group having 1 to 4 carbon atoms, or an alkyloxy group having 1 to 4 carbon atoms.

Additionally, as described above, each $CH_2$ group in the alkyl group, alkynyl group, alkenyl group, and alkyloxy group may independently be substituted with O, S, OCO, COO, OCOO, CO or a phenylene group.

In M, the number of substituents other than a hydrogen atom is preferably 0 to 4, more preferably 0 to 2, and still more preferably 0.

It is preferred that all of M's in General Formula (1) represent a hydrogen atom from a viewpoint of obtaining both high HTP and ease of synthesis.

In General Formula (1), $R^1$ represents any one of linking groups shown below.

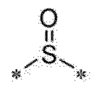
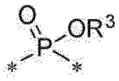
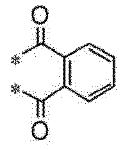
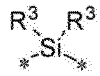
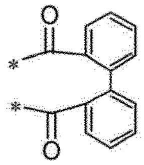

(in which *'s each independently represent a site of bonding to an oxygen atom in General Formula (1), and $R^3$'s each independently represent an alkyl group having 1 to 3 carbon atoms or an aryl group having 6 to 10 carbon atoms), and preferably represents

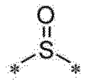
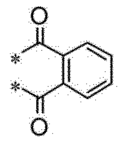

$R^3$'s are each independently preferably an alkyl group having 1 to 3 carbon atoms or a phenyl group, and more preferably an alkyl group, an aryl group, or an alkenyl group.

The compound represented by General Formula (1) is preferably a compound represented by General Formula (3).

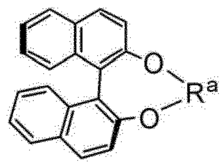
(3)

(In General Formula (3), $R^a$ represents any one of linking groups shown below.

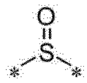
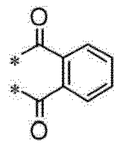

Meanwhile, *'s each represent a site of bonding to an oxygen atom in General Formula (3).)

Hereinafter, specific examples of the compound represented by General Formula (1) are shown, but the present invention is not limited thereto. Further, only an R form or only an S form of the compound represented by General Formula (1) may be exemplified hereinafter, but the corresponding S form or R form can also be used in the present invention. The compound represented by General Formula (1) is preferably levorotatory, but the compound represented by General Formula (1) may be used as a dextrorotatory chiral agent since the compound represented by General Formula (1) shows a high HTP in either case where the compound is an R form or an S form.

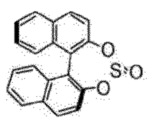
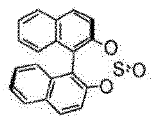
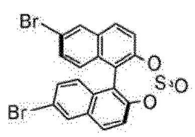
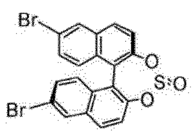

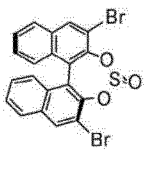 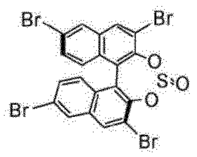 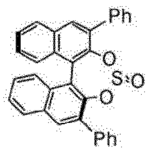 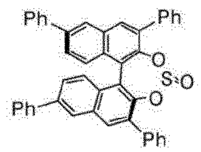

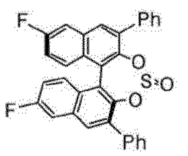 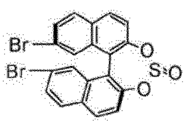 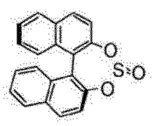 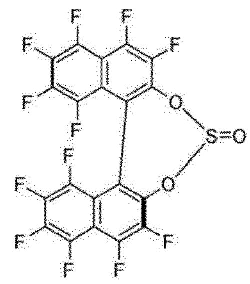

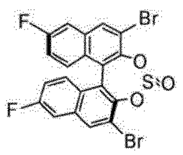 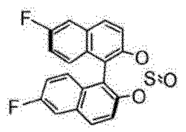

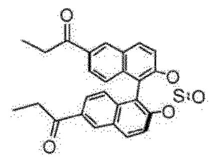 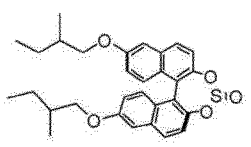 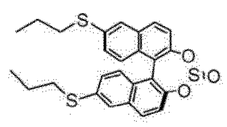

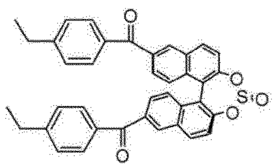 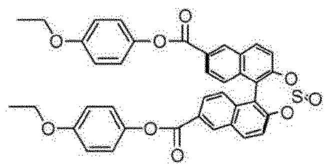 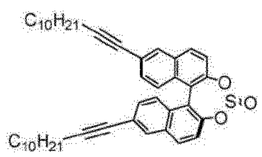

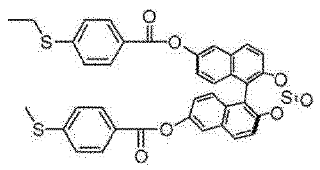 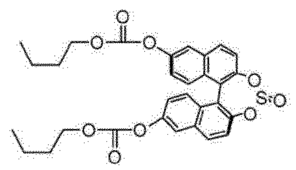 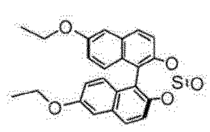

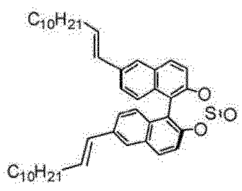 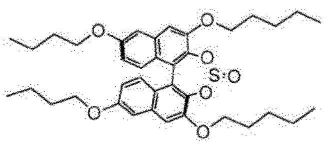 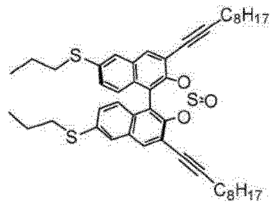

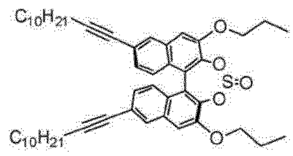

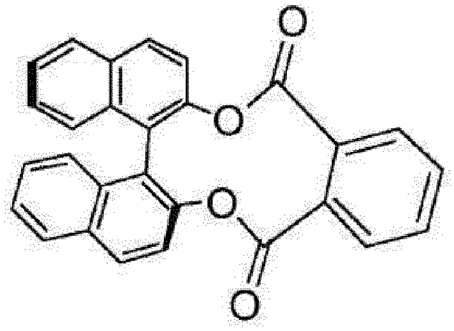

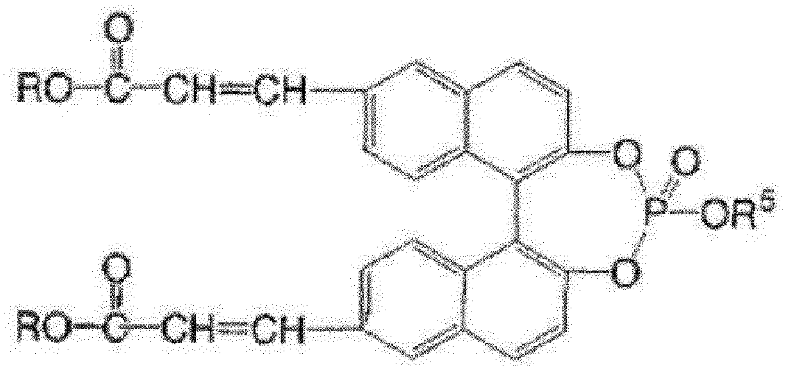

| No. | -R | $-R^5$ | Axial asymmetry of binaphthyl |
|---|---|---|---|
| 1-34 | $-C_2H_5$ | $-C_2H_5$ | R |
| 1-35 | 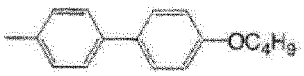 | $-(CH_2)_2OCOCH=CH_2$ | R |
| 1-36 | 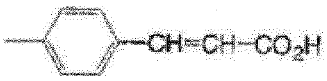 | $-C_8H_{13}(n)$ | S |
| 1-37 | 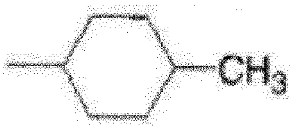 | 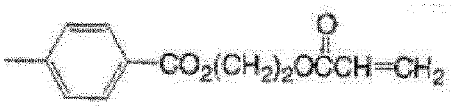 | R |
| 1-38 | 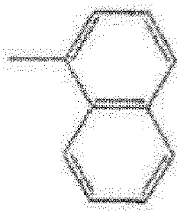 | $-(CH_2)_9OCOCH=CH_2$ | S |

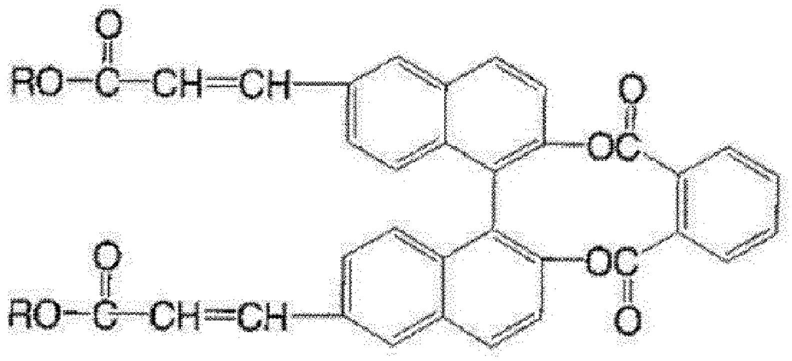

| No. | -R | Axial asymmetry of binaphthyl |
|---|---|---|
| 1-26 | $-C_2H_5$ | R |
| 1-27 | 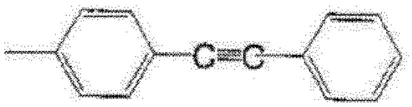 | S |
| 1-28 | 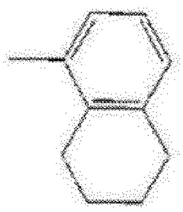 | S |
| 1-29 | 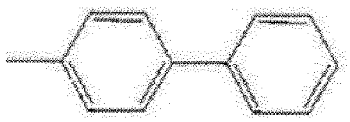 | R |
| 1-30 | 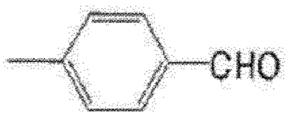 | R |
| 1-31 | 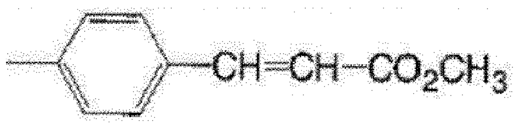 | R |
| 1-32 | 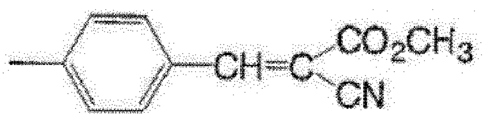 | R |
| 1-33 | 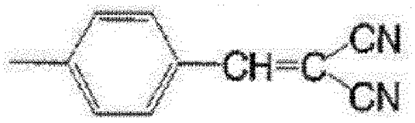 | R |

| | $R^1$ |
|---|---|
| 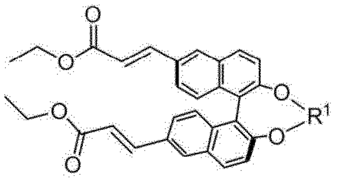 | 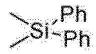 |
| | 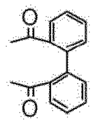 |

The compound represented by General Formula (1) can be synthesized using a method described in a known literature or a similar method. For example, the compound is preferably synthesized using the method described in Heteroatom Chemistry, 2011 vol. 22, p.562.

Further, an R form or an S form of the compound represented by General Formula (1) can be synthesized using a raw material of one of an R form and an S form as a raw material. In addition, the racemic form may be optically resolved using a known method.

Next, a compound represented by General Formula (2) will be described.

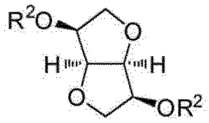

(2)

In General Formula (2), $R^2$ represents any one of substituents shown below, and two $R^2$'s may be the same as or different from each other.

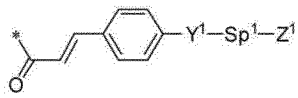

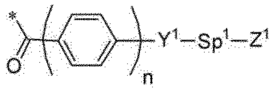

Meanwhile, *'s each independently represent a site of bonding to an oxygen atom in General Formula (2).

$Y^1$'s each independently represent a single bond, -O-, -C(=O)O-, -OC(=O)-, or -OC(=O)O-, preferably a single bond, -O-, or -OC(=O)-, and more preferably -O-.

$Sp^1$'s each independently represent a single bond or an alkylene group having 1 to 8 carbon atoms, preferably an alkylene group having 1 to 5 carbon atoms, and more preferably an alkylene group having 2 to 4 carbon atoms.

$Z^1$'s each independently represent a hydrogen atom or a (meth)acrylic group, and preferably a hydrogen atom.

n represents an integer of 1 or more, preferably 1 to 3, more preferably 1 or 2, and still more preferably 1.

The compound represented by General Formula (2) is preferably a compound represented by General Formula (4).

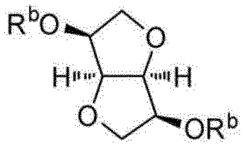

(4)

In General Formula (4), $R^b$ represents a substituent group shown below, and two $R^b$'s may be the same as or different from each other, but are preferably the same.

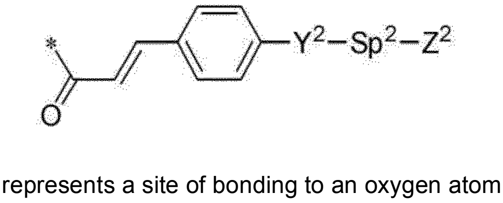

In the above substituent, * represents a site of bonding to an oxygen atom in General Formula (4).

$Y^2$ represents a single bond, -O-, or -OC(=O)-, and preferably -O-.

$Sp^2$ represents a single bond or an alkylene group having 1 to 8 carbon atoms, preferably an alkylene group having 1 to 8 carbon atoms, more preferably an alkylene group having 1 to 5 carbon atoms, and still more preferably an alkylene group having 2 to 4 carbon atoms.

$Z^2$ represents a hydrogen atom or a (meth)acrylic group, and preferably a hydrogen atom.

Specific examples of the compound represented by General Formula (2) are shown below, but the present invention is not limited thereto.

(1)

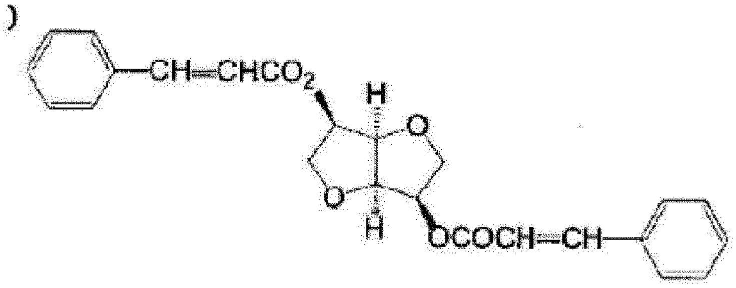

left-twisted

Mw=406.43

(2)

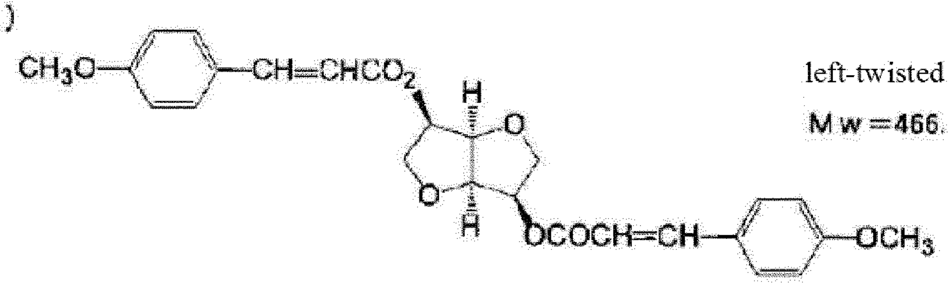

left-twisted

Mw=466.48

(3)

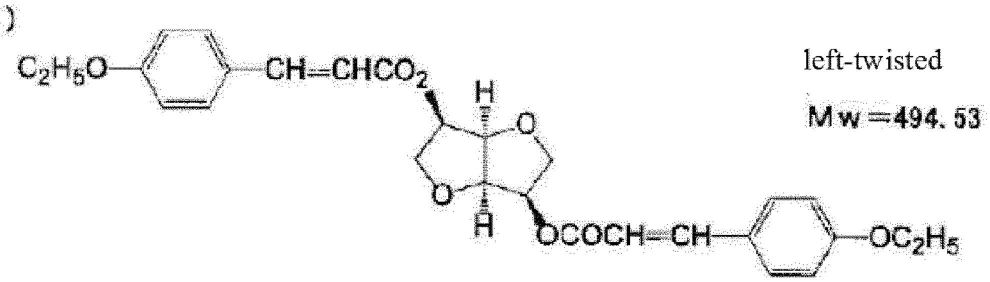

left-twisted

Mw=494.53

(4)

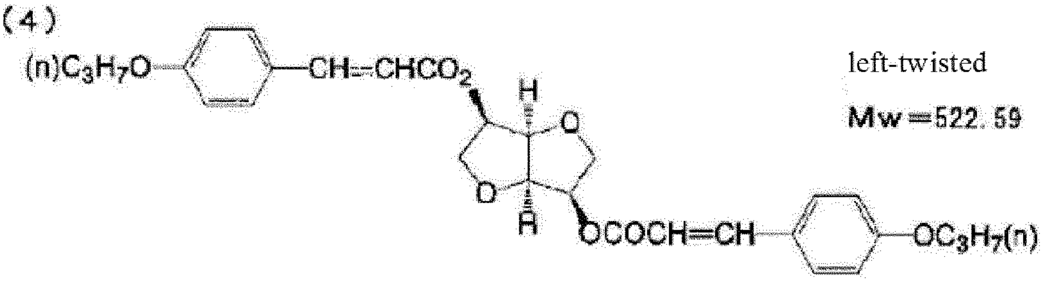

left-twisted

Mw=522.59

(5)

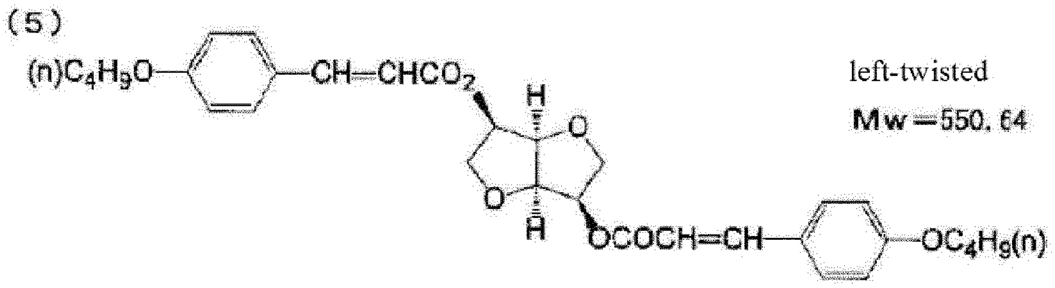

left-twisted

Mw=550.64

(6)

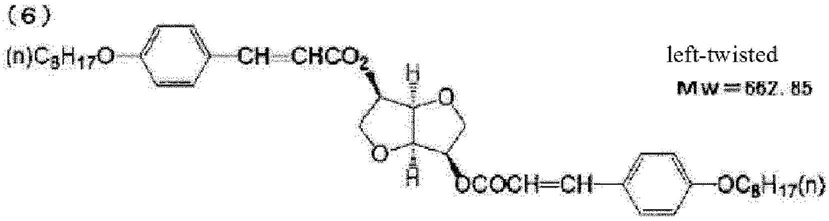

left-twisted

Mw=662.85

(7)

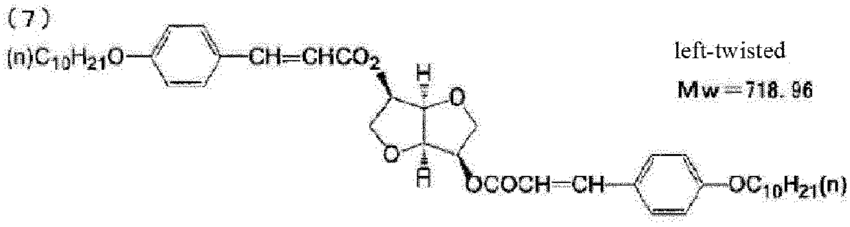

left-twisted

Mw=718.96

(8)

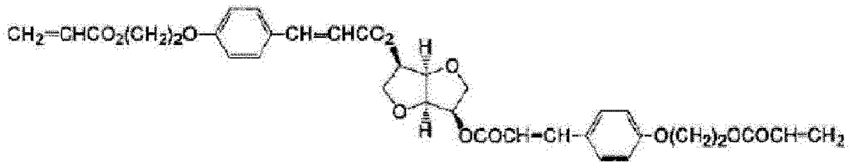

(9)

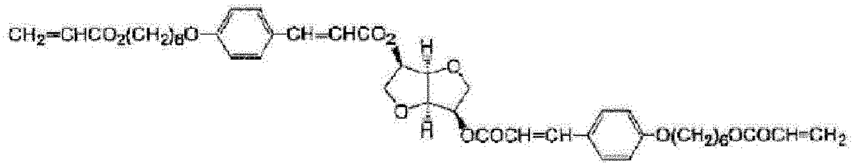

(10)

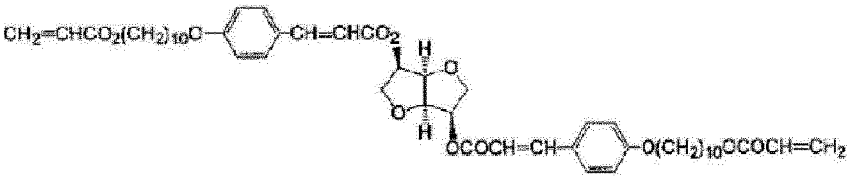

(11)

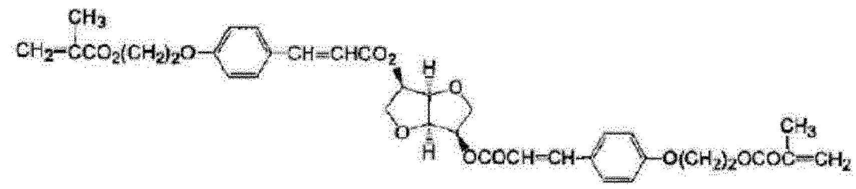

(12)

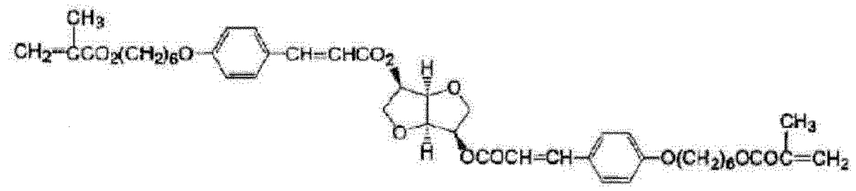

(Alignment controlling agent)

The composition may contain an alignment controlling agent.

Preferred examples of the alignment controlling agent include a fluorine-based alignment controlling agent. Further, two or more kinds of alignment controlling agents may be contained in the composition. The fluorine-based alignment controlling agent can reduce a tilt angle of a molecule of a liquid crystal compound or can cause the compound to be aligned substantially horizontally at the air interface of the light reflecting layer.

In the present specification, the "horizontal alignment" means that the long axis of a liquid crystal molecule and the film surface are parallel to each other, but does not require strict parallelism. In the present specification, the "horizontal alignment" means alignment in which the tilt angle relative to the horizontal plane is less than 20 degrees. In the case where the liquid crystal compound is aligned horizontally near the air interface, an alignment defect is hardly generated, and thus transparency in visible ray region becomes higher and reflectance in the infrared region is increased. On the other hand, in the case where the molecule of a liquid crystal compound is aligned with a small tilt angle, the spiral axis of a cholesteric liquid crystalline phase hardly deviates from the normal line of the film plane, a reduction in reflectance is suppressed, and the occurrence of a fingerprint pattern is also suppressed.

Examples of the alignment controlling agent include the compounds described in paragraphs "0092" and "0093" of JP2005-99248A, the compounds described in paragraphs "0076" to "0078" and paragraphs "0082" to "0085" of JP2002-129162A, the compounds described in paragraphs "0094" and "0095" of JP2005-99248A, and the compounds described in paragraph "0096" of JP2005-99248A.

The fluorine-based alignment controlling agent is also preferably a compound represented by General Formula (I).

General Formula (I) $(Hb^{11}\text{-}Sp^{11}\text{-}L^{11}\text{-}Sp^{12}\text{-}L^{12})_{m11}\text{-}A^{11}\text{-}L^{13}\text{-}T^{11}\text{-}L^{14}\text{-}A^{12}\text{-}(L^{15}\text{-}Sp^{13}\text{-}L^{16}\text{-}Sp^{14}\text{-}Hb^{11})_{n11}$

In General Formula (I), $L^{11}$ , $L^{13}$, $L^{13}$, $L^{14}$, $L^{15}$ , and $L^{16}$ each independently represent a single bond, -O-, -S-, -CO-, -COO-, -OCO-, -COS-, -SCO-, -NRCO-, or -CONR- (R represents a hydrogen atom or an alkyl group having 1 to 6 carbon atoms). Among them, -NRCO- and -CONR- have an effect of decreasing solubility, and -O-, -S-, -CO-, -COO-, -OCO-, -COS-, or -SCO- is preferable since a haze value tends to increase at the time of film production and -O-, -CO-, -COO-, or -OCO- is more preferable from the viewpoint of stability of the compound. The alkyl group which R can take may be linear or branched. The number of carbon atoms in the alkyl group is preferably 1 to 3, and examples of such an alkyl group include a methyl group, an ethyl group, and an n-propyl group.

$Sp^{11}$, $Sp^{12}$, $Sp^{13}$, and $Sp^{14}$ each independently represent a single bond or an alkylene group having 1 to 10 carbon atoms, preferably a single bond or an alkylene group having 1 to 7 carbon atoms, and more preferably a single bond or an alkylene group having 1 to 4 carbon atoms.

Meanwhile, the hydrogen atoms of the alkylene group may be substituted with fluorine atoms. The alkylene group may be branched or unbranched, but it is preferably a linear alkylene group. From the viewpoint of synthesis, it is preferred that $Sp^{11}$ and $Sp^{14}$ are the same, and that $Sp^{12}$ and $Sp^{13}$ are the same.

$A^{11}$ and $A^{12}$ are trivalent or tetravalent aromatic hydrocarbon. The number of carbon atoms in the trivalent or tetravalent aromatic hydrocarbon group is preferably 6 to 22, more preferably 6 to 14, still more preferably 6 to 10, and

particularly preferably 6. The trivalent or tetravalent aromatic hydrocarbon group represented by $A^{11}$ and $A^{12}$ may have a substituent. Examples of such a substituent include an alkyl group having 1 to 8 carbon atoms, an alkoxy group, a halogen atom, a cyano group, and an ester group. For details and preferred ranges of these groups, reference can be made to the descriptions for T below. Examples of the substituent for the trivalent or tetravalent aromatic hydrocarbon group represented by $A^{11}$ and $A^{12}$ include a methyl group, an ethyl group, a methoxy group, an ethoxy group, a bromine atom, a chlorine atom, and a cyano group. Since molecules having a large number of perfluoroalkyl moieties in the molecule can align liquid crystals with a small addition amount and lead to a decrease in haze, it is preferred that $A^{11}$ and $A^{12}$ are tetravalent so as to have a large number of perfluoroalkyl groups in the molecule. From the viewpoint of synthesis, it is preferred that $A^{11}$ and $A^{12}$ are the same.

Preferably, $T^{11}$ represents a divalent group or a divalent aromatic heterocyclic group represented by the following formulae

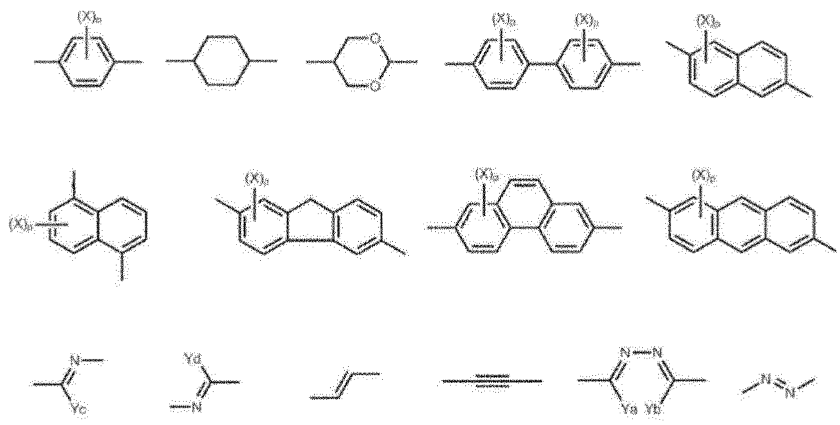

(X contained in $T^{11}$ represents an alkyl group having 1 to 8 carbon atoms, an alkoxy group, a halogen atom, a cyano group, or an ester group, and Ya, Yb, Yc, and Yd each independently represent a hydrogen atom or an alkyl group having 1 to 4 carbon atoms). More preferably, $T^{11}$ is represented by the following formulae.

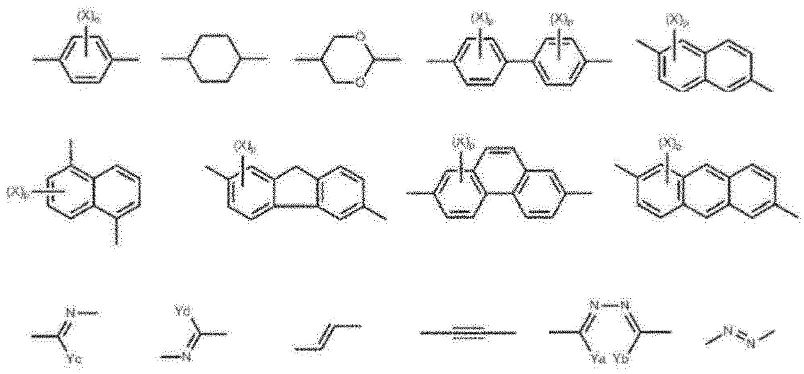

Still more preferably, $T^{11}$ is represented by the following formulae.

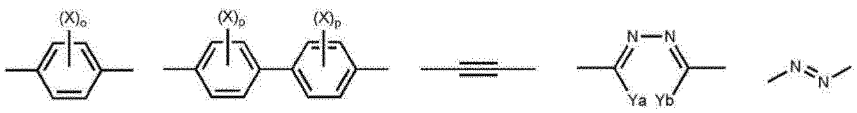

Particularly preferably, $T^{11}$ is represented by the following formula.

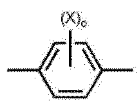

The number of carbon atoms in the alkyl group which X contained in $T^{11}$ can take is 1 to 8, preferably 1 to 5, and more preferably 1 to 3. The alkyl group may be linear, branched, or cyclic and is preferably linear or branched. Preferred examples of the alkyl group include a methyl group, an ethyl group, an n-propyl group, and an isopropyl group. Preferred is a methyl group. For details of the alkyl moiety of the alkoxy group which X contained in $T^{11}$ can take, reference can be made to the descriptions and the preferred ranges of the alkyl group which X contained in $T^{11}$ can take. Examples of the halogen atom which X contained in $T^{11}$ can take include a fluorine atom, a chlorine atom, a bromine atom, and an iodine atom, among which a chlorine atom or a bromine atom is preferred. Examples of the ester group which X contained in $T^{11}$ can take include groups represented by R'COO-. R' may be, for example, an alkyl group having 1 to 8 carbon atoms. For details and preferred ranges of the alkyl group which R' can take, reference can be made to the descriptions and the preferred ranges of the alkyl group which X contained in $T^{11}$ can take. Specific examples of the ester include $CH_3COO$- and $C_2H_5COO$-. The alkyl group having 1 to 4 carbon atoms which Ya, Yb, Yc, and Yd can take may be linear or branched. Examples of the alkyl group include a methyl group, an ethyl group, an n-propyl group, and an isopropyl group.

The divalent aromatic heterocyclic group preferably has a 5-, 6-, or 7-membered heterocyclic ring. Among them, a 5-membered ring or a 6-membered ring is more preferable, and a 6-membered ring is still more preferable. The heteroatom constituting the heterocyclic ring is preferably a nitrogen atom, an oxygen atom, or a sulfur atom. The heterocyclic ring is preferably an aromatic heterocyclic ring. The aromatic heterocyclic ring is typically an unsaturated heterocyclic ring. An unsaturated heterocyclic ring having the maximum number of double bonds is more preferable. Examples of the heterocyclic ring include a furan ring, a thiophene ring, a pyrrole ring, a pyrroline ring, a pyrrolidine ring, an oxazole ring, an isoxazole ring, a thiazole ring, an isothiazole ring, an imidazole ring, an imidazoline ring, an imidazolidine ring, a pyrazole ring, a pyrazoline ring, a pyrazolidine ring, a triazole ring, a furazan ring, a tetrazole ring, a pyran ring, a thiin ring, a pyridine ring, a piperidine ring, an oxazine ring, a morpholine ring, a thiazine ring, a pyridazine ring, a pyrimidine ring, a pyrazine ring, a piperazine ring, and a triazine ring. The divalent heterocyclic group may have a substituent. For details and preferred ranges of such a substituent, reference can be made to the descriptions and the information concerning the possible substituents of the trivalent or tetravalent aromatic hydrocarbon of $A^1$ and $A^2$.

$Hb^{11}$ represents a perfluoroalkyl group having 2 to 30 carbon atoms, preferably a perfluoroalkyl group having 3 to 20 carbon atoms, and more preferably a perfluoroalkyl group having 3 to 10 carbon atoms. The perfluoroalkyl group may be linear, branched, or cyclic and is preferably linear or branched, more preferably linear.

m11 and n11 are each independently 0 to 3, and satisfy $m11+n11\geq1$. Here, a plurality of structures in the parenthesis may be the same as or different from each other, and are preferably the same as each other. m11 and n11 in General Formula (I) are determined by the valency of $A^{11}$ and $A^{12}$. The preferred ranges of m11 and n11 are also determined by the preferred ranges of the valency of $A^{11}$ and $A^{12}$.

o and p contained in $T^{11}$ are each independently an integer of 0 or more. In the case where o and p are 2 or more, the plurality of X's may be the same as or different from each other. o contained in $T^{11}$ is preferably 1 or 2. p contained in $T^{11}$ is preferably an integer of 1 to 4 and more preferably 1 or 2.

The compound represented by General Formula (I) may have symmetry in its molecular structure, or may be asymmetrical. As used herein, the term "symmetry" means any one of point symmetry, line symmetry, and rotational symmetry, and the term "asymmetry" means a shape that does not qualify as any of point symmetry, line symmetry, and rotational symmetry.

The compound represented by General Formula (I) is a compound obtained by combining the foregoing perfluoroalkyl group ($Hb^{11}$), the linking groups $-(-Sp^{11}-L^{11}-Sp^{12}-L^{12})m_{11}-A^{11}-L^{13}-$ and $-L^{14}-A^{12}-(L^{15}-Sp^{13}-L^{16}-Sp^{14}-)n_{11}-$, and, preferably, the divalent group T having an excluded volume effect. The two perfluoroalkyl groups ($Hb^{11}$) present in the molecule are preferably the same as each other. The linking groups $-(-Sp^{11}-L^{11}-Sp^{12}-L^{12})m_{11}-A^{11}-L^{13}-$ and $-L^{14}-A^{12}-(L^{15}-Sp^{13}-L^{16}-Sp^{14}-)n_{11}-$ present in the molecule are also preferably the same as each other. The terminal $Hb^{11}-Sp^{11}-L^{11}-Sp^{12}-$ and $-Sp^{13}-L^{16}-Sp^{14}-Hb^{11}$ are preferably the groups represented by any one of the following general formulae.

$(C_aF_{2a+1})-(C_bH_{2b})-$

$(C_aF_{2a+1})-(C_bH_{2b})-O-(C_rH_{2r})-$

$(C_aF_{2a+1})-(C_bH_{2b})-COO-(C_rH_{2r})-$

$(C_aF_{2a+1})-(C_bH_{2b})-OCO-(C_rH_{2r})-$

In the formulae, a is preferably 2 to 30, more preferably 3 to 20, and still more preferably 3 to 10. b is preferably 0 to 20, more preferably 0 to 10, and still more preferably 0 to 5. a+b is 3 to 30. r is preferably 1 to 10 and more preferably 1 to 4.

The terminal $Hb^{11}-Sp^{11}-L^{11}-Sp^{12}-L^{12}-$ and $-L^{14}-Sp^{13}-L^{16}-Sp^{14}-Hb^{11}$ in General Formula (I) are preferably the groups represented by any one of the following general formulae.

$(C_aF_{2a+1})$-$(C_bH_{2b})$-O
$(C_aF_{2a+1})$-$(C_bH_{2b})$-COO-
$(C_aF_{2a+1})$-$(C_bH_{2b})$-O-$(C_rH_{2r})$-O-
$(C_aF_{2a+1})$-$(C_bH_{2b})$-COO-$(C_rH_{2r})$-COO-
$(C_aF_{2a+1})$-(v)-OCO-$(C_rH_{2r})$-COO-
a, b, and r in these formulae are as defined above.

The content of the alignment controlling agent (in particular, a fluorine-based horizontal alignment agent) in the composition is preferably 0.01 to 10 mass%, more preferably 0.01 to 5 mass%, still more preferably 0.01 to 1 mass%, particularly preferably 0.01 to 0.09 mass%, and most preferably 0.01 to 0.06 mass%, with respect to the polymerizable liquid crystal compound.
From the viewpoint of suppressing the content of the alignment controlling agent (in particular, the fluorine-based horizontal alignment agent) within the above-specified range, it is preferred that the alignment controlling agent (in particular, the fluorine-based horizontal alignment agent) contains a perfluoroalkyl group, and more preferably a perfluoroalkyl group having 3 to 10 carbon atoms.

(Polymerization initiator)

The composition may contain a polymerization initiator.
For example, in an embodiment of proceeding the curing reaction through irradiation with ultraviolet rays to form a light reflecting layer, the polymerization initiator to be used is preferably a photopolymerization initiator capable of initiating a polymerization reaction through irradiation with ultraviolet rays. Examples of the photopolymerization initiator include α-carbonyl compounds (described in US2367661A and US2367670A), acyloin ethers (described in US2448828A), α-hydrocarbon-substituted aromatic acyloin compounds (described in US2722512A), polynuclear quinone compounds (described in US3046127A and US2951758A), a combination of triarylimidazole dimer and p-aminophenylketone (described in US3549367A), acridine and phenazine compounds (described in JP1985-105667A (JP-S 60-105667A) and US4239850A), oxadiazole compounds (described in US4212970A), and acylphosphine oxide compounds (described in JP1988-40799B (JP-S63-40799B), JP1993-29234B (JP-H05-29234B), JP1998-95788A (JP-H10-95788A), and JP1998-29997A (JP-H10-29997A)).
The amount of the photopolymerization initiator to be used is preferably 0.1 to 20 mass% and more preferably 1 to 8 mass%, with respect to the total solid content of the composition.

(Solvent)

The composition may contain a solvent.
As the solvent, for example, an organic solvent is preferably used. Examples of the organic solvent include amides (for example, N,N-dimethylformamide), sulfoxides (for example, dimethylsulfoxide), heterocyclic compounds (for example, pyridine), hydrocarbons (for example, benzene and hexane), alkyl halides (for example, chloroform and dichloromethane), esters (for example, methyl acetate and butyl acetate), ketones (for example, acetone, methyl ethyl ketone, and cyclohexanone), and ethers (for example, tetrahydrofuran and 1,2-dimethoxyethane). Among them, preferred are alkyl halides and ketones. Two or more organic solvents may be used in combination.
In the present invention, it is preferable to use a solvent having a small metal content, and the metal content of the solvent is preferably, for example, 10 ppb or less. If necessary, a solvent having a metal content at the ppt level may be used, and such a high purity solvent is available from, for example, Toyo Gosei Co., Ltd.
Examples of a method for removing impurities such as metals from a solvent include distillation (molecular distillation, thin film distillation, or the like), and filtration using a filter. The filter pore size in filtration using a filter is preferably 10 nm or less, more preferably 5 nm or less, and still more preferably 3 nm or less. A filter made of polytetrafluoroethylene, polyethylene, or nylon is preferred as the filter.
The solvent may contain isomers (compounds having the same number of atoms and different structures). Also, the isomers may be contained singly or in plural kinds.

(Other components)

In addition to the above-mentioned components, the composition may contain other additives (for example, a surfactant, a compound having an alkoxysilyl group, and a cellulose ester).
Specific examples of the surfactant and the compound having an alkoxysilyl group include a surfactant and a compound having an alkoxysilyl group contained in (First embodiment of infrared transmitting composition) to be described hereinafter.

(Method for forming light reflecting layer)

In the method of claim 1 compositions containing a liquid crystal compound having a polymerizable group and a chiral agent are used to form light reflecting layer Xa and light reflecting layer Xb.

Hereinafter, a method using the above composition will be described in detail. In the case of forming the light reflecting layer Xa, a dextrorotatory chiral agent is used as the chiral agent and in the case of forming the light reflecting layer Xb, a levorotatory chiral agent is used as the chiral agent. However, in the following explanation, it will be described simply as "chiral agent".

A method for forming the light reflecting layer preferably has the following steps (1) and (2).

(1) a step of applying a composition containing a liquid crystal compound having a polymerizable group and a chiral agent on the surface of a substrate to form a coating film, and thereafter bringing the coating film into a state of a cholesteric liquid crystalline phase

(2) a step of irradiating the coating film with light to proceed the curing reaction and immobilizing the cholesteric liquid crystalline phase to form a light reflecting layer

By repeating the steps (1) and (2) twice on one surface of the substrate, a laminate having the same configuration as that shown in Fig. 1 can be produced.

The direction of the turning of the cholesteric liquid crystalline phase can be adjusted depending on the type of liquid crystal used or the type of chiral agent added, and the helical pitch (that is, selective reflection wavelength) can be arbitrarily adjusted depending on the concentration of these materials. The wavelength of the reflected light of each light reflecting layer can be shifted by various factors of the production method, and may be shifted by conditions such as the temperature, the illuminance, and the irradiation time at the time of immobilizing the cholesteric liquid crystalline phase, in addition to the addition concentration of the chiral agent or the like.

In the above step (1), first, the composition containing a liquid crystal compound having a polymerizable group and a chiral agent is applied onto the surface of a substrate.

Application of the composition may be carried out by various methods such as a wire bar coating method, an extrusion coating method, a direct gravure coating method, a reverse gravure coating method, a die-coating method, and spin coating method. Also, a coating film can be formed by discharging the composition from nozzles by using an inkjet apparatus.

Next, the composition applied to the substrate surface and turned into a coating film is brought into a state of a cholesteric liquid crystalline phase. In the embodiment in which the composition is prepared as a coating liquid containing a solvent, there may be a case where the coating film can be brought into a state of a cholesteric liquid crystalline phase by drying the coating film and removing the solvent. For making the coating film to have a transition temperature at which the coating film is brought into a cholesteric liquid crystalline phase, the coating film may be heated if desired. For example, once the coating film is heated up to a temperature of the isotropic phase thereof, and then it is cooled down to a cholesteric liquid crystalline phase transition temperature, whereby the coating film could be stably converted into a state of cholesteric liquid crystalline phase. From the viewpoint of the manufacturing suitability or the like, the liquid crystalline phase transition temperature of the composition is preferably within a range of 10°C to 250°C, and more preferably within a range of 10°C to 150°C. If the liquid crystalline phase transition temperature is 10°C or higher, the cooling step is unnecessary and the productivity is excellent. Also, if the liquid crystalline phase transition temperature is within 250°C, waste of thermal energy is suppressed, and deformation and deterioration of the substrate are further suppressed.

Next, in the step (2), the coating film in the state of the cholesteric liquid crystalline phase is irradiated with light (for example, ultraviolet rays) to proceed the curing reaction. The light irradiation is preferably ultraviolet irradiation. For ultraviolet irradiation, a light source such as an ultraviolet lamp is used. In this step, by irradiating the coating film with light, the curing reaction of the composition proceeds, the cholesteric liquid crystalline phase is immobilized, and a light reflecting layer is formed.

The irradiation energy amount of ultraviolet rays is not particularly limited, but it is generally preferably about 100 to 800 $mJ/cm^2$. The time for irradiating the coating film with ultraviolet rays is also not particularly limited, but it may be determined from the viewpoints of both sufficient strength of the light reflecting layer and the productivity thereof.

In order to accelerate the curing reaction, light irradiation may be carried out under a heating condition. Also, in order that the cholesteric liquid crystalline phase may not be disordered, it is preferred that the temperature at the light irradiation is kept within the temperature range at which a cholesteric liquid crystalline phase is presented.

Also, an oxygen concentration in the atmosphere at the light irradiation takes part in a degree of polymerization, and therefore, in the case where the reaction could not secure a desired degree of polymerization in air and where the film hardness is therefore insufficient, it is preferred that the oxygen concentration in the atmosphere is lowered by a method such as purging with nitrogen. The oxygen concentration is preferably 10% or less, more preferably 7% or less,

and still more preferably 3% or less. From the viewpoint of maintaining a mechanical strength of the light reflecting layer, suppressing an outflow of unreacted materials from the layer, or the like, a reaction rate of the curing reaction (for example, a polymerization reaction) which is advanced by irradiation with light is preferably 70% or more, more preferably 80% or more, and still more preferably 90% or more. For the purpose of enhancing the reaction rate, a method of increasing the irradiation amount of light to be irradiated or polymerization under a nitrogen atmosphere or under a heating condition is effective. Also, after being once polymerized, a method of further going ahead with the reaction by a heat polymerization reaction while being kept in a higher temperature state than the polymerization temperature, or a method of again irradiating light (for example, ultraviolet rays) (provided that the ultraviolet rays are irradiated under a condition satisfying the condition of the present invention) can be employed. The measurement of the reaction rate can be carried out by comparing an absorption strength of infrared vibration spectrum of a reactive group (for example, a polymerizable group) before and after progress of the reaction.

In the foregoing step, the cholesteric liquid crystalline phase is immobilized, whereby each light reflecting layer is formed. Here, with respect to the state in which the liquid crystalline phase is "immobilized", a state in which alignment of the liquid crystal compound having been formed into a cholesteric liquid crystalline phase is retained is the most typical and preferred embodiment. However, it should not be construed that the present invention is limited thereto. Specifically, it means a state in which in the temperature range of usually from 0°C to 50°C, and more severely under a condition of -30°C to 70°C, the layer does not have fluidity, a change is not caused in the aligned state by an external field or an external force, and the immobilized aligned state can be continuously kept stable. In the present invention, it is preferable to immobilize the alignment state of the cholesteric liquid crystalline phase by a curing reaction proceeding by ultraviolet irradiation.

Incidentally, in the present invention, it may be sufficient so far as optical properties of the cholesteric liquid crystalline phase are retained in the layer, and finally the composition in each light reflecting layer no longer needs to exhibit liquid crystallinity. For example, the composition may have a high molecular weight due to a curing reaction and may no longer have liquid crystallinity.

<Light absorbing layer>

The light absorbing layer contains a color material. The light absorbing layer is a layer that absorbs light having a predetermined wavelength according to the type of the color material to be used.

The type of the color material (hereinafter, also referred to as a "coloring agent") is not particularly limited, and known pigments and dyes may be mentioned. Above all, pigments are preferred.

The light absorbing layer may contain a binder. The type of binder is not particularly limited and a known binder may be used. Examples of the binder include a (meth)acrylic resin, a styrene resin, a urethane resin, an epoxy resin, a polyolefin resin, and a polycarbonate resin.

In addition, the binder contained in the light absorbing layer may be synthesized by including a polymerizable compound in the composition for forming a light absorbing layer and polymerizing the polymerizable compound. In addition, a pigment dispersant and an alkali-soluble resin which will be described later may be contained as the binder.

The light absorbing layer is an infrared transmitting layer.

The infrared transmitting layer is a film having a high transmittance of an infrared ray of a predetermined wavelength and a low transmittance of a visible ray of a predetermined wavelength. In other words, the infrared transmitting layer can also be said to be a visible ray absorbing layer having a high infrared transmittance.

Here, the infrared ray having a predetermined wavelength is preferably an electromagnetic wave in a region with a wavelength of 700 nm or more, more preferably an electromagnetic wave in a region with a wavelength of 800 nm or more, and still more preferably an electromagnetic wave in a region with a wavelength of 900 nm or more. The visible ray of a predetermined wavelength is more preferably an electromagnetic wave in a region with a wavelength of less than 700 nm. The lower limit value of the visible ray region is preferably 400 nm or more in wavelength.

The high transmittance is intended to mean that the maximum transmittance is 70% or more, preferably 80% or more, and more preferably 90% or more. The low transmittance is intended to mean that the maximum transmittance is 30% or less, preferably 20% or less, and more preferably 10% or less.

More specifically, the light absorbing layer is an infrared transmitting layer having a maximum transmittance of 70% or more (preferably 80% or more, and more preferably 90% or more) at a wavelength of 700 nm or more (preferably a wavelength of 800 nm or more, and more preferably a wavelength of 900 nm or more) and having a maximum transmittance of 30% or less (preferably 20% or less, and more preferably 10% or less) at a wavelength of 400 nm or more and less than 700 nm (preferably a wavelength of 400 nm or more and a wavelength of 650 nm or less).

In the case where the color material is of a chromatic color, examples of the color material include a red coloring agent, a green coloring agent, a blue coloring agent, a yellow coloring agent, a violet coloring agent, and orange color.

In the case where the color material is a pigment, it is preferably an organic pigment, examples of which include those shown below. However, the present invention is not limited thereto.

Color Index (C.I.) Pigment Yellow 1, 2, 3, 4, 5, 6, 10, 11, 12, 13, 14, 15, 16, 17, 18, 20, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, 214, and the like (all of which are yellow pigments),
C. I. Pigment Orange 2, 5, 13, 16, 17:1, 31, 34, 36, 38, 43, 46, 48, 49, 51, 52, 55, 59, 60, 61, 62, 64, 71, 73, and the like (all of which are orange pigments),
C. I. Pigment Red 1, 2, 3, 4, 5, 6, 7, 9, 10, 14, 17, 22, 23, 31, 38, 41, 48:1, 48:2, 48:3, 48:4, 49, 49:1, 49:2, 52:1, 52:2, 53:1, 57:1, 60:1, 63:1, 66, 67, 81:1, 81:2, 81:3, 83, 88, 90, 105, 112, 119, 122, 123, 144, 146, 149, 150, 155, 166, 168, 169, 170, 171, 172, 175, 176, 177, 178, 179, 184, 185, 187, 188, 190, 200, 202, 206, 207, 208, 209, 210, 216, 220, 224, 226, 242, 246, 254, 255, 264, 270, 272, 279, and the like (all of which are red pigments),
C. I. Pigment Green 7, 10, 36, 37, 58, 59, and the like (all of which are green pigments),
C. I. Pigment Violet 1, 19, 23, 27, 32, 37, 42, and the like (all of which are violet pigments),
C. I. Pigment Blue 1, 2, 15, 15:1, 15:2, 15:3, 15:4, 15:6, 16, 22, 60, 64, 66, 79, 80, and the like (all of which are blue pigments)

These organic pigments may be used alone or in a variety of combinations.

In addition to the above, further examples of the color material include a diketopyrrolopyrrole dye compound, a copper compound, a cyanine-based dye compound, a phthalocyanine-based compound, an immonium-based compound, a thiol complex-based compound, a transition metal oxide-based compound, a squarylium-based dye compound, a naphthalocyanine-based dye compound, a quaterrylene-based dye compound, a dithiol metal complex-based dye compound, and a croconium compound.

As the color material, it is preferable to use a coloring agent X (color material X) having an absorption maximum in a wavelength range of 400 nm or more and less than 700 nm from the viewpoint of further reducing the angle dependence.

In addition, it is more preferable to use a coloring agent Y (color material Y) having an absorption maximum in the wavelength range of 800 to 900 nm together with the coloring agent X from the viewpoint of further reducing the angle dependence.

The coloring agent X may be used alone or in combination of two or more thereof.

The content of the color material in the light absorbing layer is not particularly limited, but it is preferably 10 to 80 mass% and more preferably 20 to 70 mass%, with respect to the total mass of the light absorbing layer, since the effect of the present invention is more excellent.

The light absorbing layer is formed using a composition for forming a light absorbing layer containing a color material and components optionally added as required.

Specifically, there is a method in which a composition for forming a light absorbing layer, which will be described later, is applied onto a substrate, and if necessary, a curing treatment is carried out to form a light absorbing layer. The coating method is not particularly limited, and examples thereof include a method of coating with a spin coater, a dip coater, a die coater, a slit coater, a bar coater, a gravure coater, or the like.

The composition for forming a light absorbing layer contains at least a color material, and if necessary, may contain other components (for example, a polymerizable compound, a binder, a polymerization initiator, a pigment dispersant, a pigment derivative, a solvent, a surfactant, an alkali-soluble resin, a compound having an alkoxysilyl group, and the like). Regarding the type of the color material, the color materials described in (First embodiment of infrared transmitting composition) to (Ninth embodiment of infrared transmitting composition) to be described hereinafter can be mentioned. Also regarding the other components, the components described in (First embodiment of infrared transmitting composition) to (Ninth embodiment of infrared transmitting composition) to be described hereinafter can be mentioned.

In the latter part, the (First embodiment of infrared transmitting composition) to (Ninth embodiment of infrared transmitting composition) will be described, but at least two or more compositions selected from the (First embodiment of infrared transmitting composition) to (Ninth embodiment of infrared transmitting composition) may be mixed and used as the composition for forming a light absorbing layer.

In the case where a pigment is used as a color material, a composition for forming a light absorbing layer may be produced in such a manner that once the pigment dispersion liquid is prepared, and a component such as a polymerizable compound is added to the pigment dispersion liquid to prepare the composition for forming a light absorbing layer.

As a process of dispersing the pigment at the time of obtaining the pigment dispersion liquid, processes using compression, squeezing, impact, shearing, cavitation, or the like as the mechanical force used for dispersing can be mentioned. Specific examples of these processes include a beads mill, a sand mill, a roll mill, a ball mill, a paint shaker, a microfluidizer, a high speed impeller, a sand grinder, a flow jet mixer, high pressure wet atomization, and ultrasonic dispersion. In the pulverization of a pigment in a sand mill (beads mill), it is preferable to carry out the treatment under the condition of increasing the pulverization efficiency by using beads having a small diameter, increasing the filling rate of beads, or the like. After the pulverization treatment, it is more preferable to remove elementary particles by filtration, centrifugation, or the like.

In addition, the process and dispersing machine described in "Dispersion Technology Comprehension" issued by Johokiko Co., Ltd., July 15, 2005; "Actual comprehensive data collection on dispersion technology and industrial application centered on suspension (solid/liquid dispersion system), issued by Publication Department, Management Development Center, October 10, 1978"; and paragraph "0022" of JP2015-157893A can be suitably used.

In the pigment dispersion process, miniaturization processing of the pigment by a salt milling step may be carried out. For materials, equipment, processing conditions, and the like used in the salt milling process, those described in, for example, JP2015-194521A and JP2012-046629A can be used.

Suitable embodiments of the infrared transmitting composition are shown below. It goes without saying that the present invention is not limited thereto.

(First Embodiment of infrared transmitting composition)

The infrared transmitting composition of the first embodiment includes a dye represented by General Formula (A1), a polymerizable compound, and a polymerization initiator. The infrared transmitting composition may contain a coloring agent other than the dye represented by General Formula (A1). Further, in the case where the infrared transmitting composition contains a pigment, the pigment may be dispersed together with a pigment dispersant, a solvent, a pigment derivative, and the like to prepare a pigment dispersion liquid, and the resulting pigment dispersion liquid may be mixed with a dye represented by General Formula (A1), a polymerization initiator, and a polymerizable compound. Further, the infrared transmitting composition may further contain other components (an alkali-soluble resin, a surfactant, a compound having an alkoxysilyl group, and the like) other than the foregoing components.

General Formula (A1)

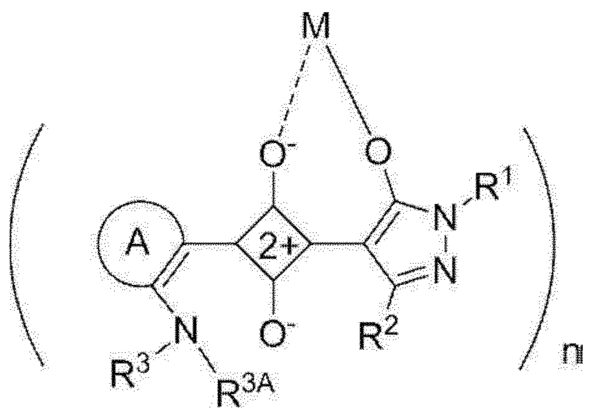

In General Formula (A1), $R^1$ and $R^2$ each independently represent a hydrogen atom, a halogen atom, a cyano group, a nitro group, a carbonyl group having a substituent, an alkyl group, an aryl group, or a heterocyclic group. $R^3$ represents a hydrogen atom, a nitrogen atom, an alkyl group, an aryl group, or a heterocyclic group. $R^3$ may form a ring with the substituent of A, and in the case where $R^3$ represents a nitrogen atom, $R^3$ forms a ring with the substituent of A. $R^{3A}$ represents a hydrogen atom, an alkyl group, or an aryl group. A represents a heterocyclic 5-membered ring or a heterocyclic 6-membered ring. M represents a metal atom. n represents 2 or 3.

The total content of the dye represented by General Formula (A1) in the infrared transmitting composition is preferably 15 to 85 mass% and more preferably 20 to 80 mass%.

The total content of the dye represented by General Formula (A1) in the total coloring agents of the infrared transmitting composition is preferably 4 to 50 mass% and more preferably 7 to 40 mass%.

In the infrared transmitting composition, the dye represented by General Formula (A1) may be contained singly or two or more kinds of dyes may be contained. In the case where two or more kinds of dyes are contained, the total amount thereof is preferably in the above-specified range.

As other coloring agents other than the dye represented by General Formula (A1), pigments and dyes can be mentioned. The other coloring agent may be used alone or in combination of two or more thereof. For another coloring agent, reference may be made to, for example, the examples described in paragraphs "0019" to "0025" of JP2013-064999A. In particular, PB15:6 is exemplified as a blue pigment. As a yellow pigment, Pigment Yellow 139 is exemplified. Pigment Violet 23 is exemplified as a violet pigment.

The infrared transmitting composition preferably contains a yellow pigment, a blue pigment, and a violet pigment

as the another coloring agent. In this case, it is preferred that the mass ratio of the yellow pigment to the whole pigment in the infrared transmitting composition is 0.1 to 0.2, the mass ratio of the blue pigment to the whole pigment is 0.25 to 0.55, and the mass ratio of the violet pigment to the whole pigment is 0.05 to 0.15. It is preferred that the mass ratio of the dye represented by General Formula (A1) to the yellow pigment is 85:15 to 50:50 and it is more preferred that the mass ratio of the total mass of the dye represented by General Formula (A1) and the yellow pigment to the total mass of the blue pigment and the violet pigment is 60:40 to 40:60.

For the polymerizable compound, reference may be made to, for example, the examples described in paragraphs "0466" to "0494" of JP2012-208494A. The polymerizable compound may be used alone or in combination of two or more thereof.

The polymerizable compound may be in the form of either a monomer or a polymer, but is preferably a monomer. The monomer type polymerizable compound preferably has a molecular weight of 200 to 3,000. The upper limit of the molecular weight is more preferably 2,500 or less and still more preferably 2,000 or less. The lower limit of the molecular weight is more preferably 250 or more and still more preferably 300 or more.

For examples of the polymerizable compound, reference may be made to the description of paragraphs "0033" and "0034" of JP2013-253224A, the contents of which are incorporated by reference herein in its entirety. Preferred examples of the above compound include ethyleneoxy-modified pentaerythritol tetraacrylate (NK ester ATM-35E as a commercially available product: manufactured by Shin-Nakamura Chemical Co., Ltd.), dipentaerythritol triacrylate (KAYARAD D-330 as a commercially available product; manufactured by Nippon Kayaku Co., Ltd.), dipentaerythritol tetraacrylate (KAYARAD D-320 as a commercially available product; manufactured by Nippon Kayaku Co., Ltd.), dipentaerythritol penta(meth)acrylate (KAYARAD D-310 as a commercially available product; manufactured by Nippon Kayaku Co., Ltd.), dipentaerythritol hexa(meth)acrylate (KAYARAD DPHA as a commercially available product; manufactured by Nippon Kayaku Co., Ltd., and A-DPH-12E as a commercially available product; manufactured by Shin-Nakamura Chemical Co., Ltd.), and compounds having a structure in which these (meth)acryloyl groups are bonded through ethylene glycol and propylene glycol residues. In addition, oligomer types thereof can also be used. Further, reference may be made to the description of polymerizable compounds in paragraphs "0034" to "0038" of JP2013-253224A. Further, examples thereof include polymerizable monomers and the like described in paragraph "0477" of JP2012-208494A ([0585] of the corresponding US2012/0235099A). Further, diglycerin ethyleneoxide (EO)-modified (meth)acrylate (M-460 as a commercially available product; manufactured by Toagosei Co., Ltd.) is preferable as the polymerizable compound. Pentaerythritol tetraacrylate (A-TMMT, manufactured by Shin-Nakamura Chemical Co., Ltd.) and 1,6-hexanediol diacrylate (KAYARAD HDDA, manufactured by Nippon Kayaku Co., Ltd.) are also preferable. Oligomer types thereof can also be used. Examples thereof include RP-1040 (manufactured by Nippon Kayaku Co., Ltd.) and the like.

The polymerizable compound may have an acid group such as a carboxyl group, a sulfonic acid group, or a phosphoric acid group. The polymerizable compound having an acid group can be obtained by (meth)acrylating a part of hydroxy groups of a polyfunctional alcohol and adding an acid anhydride to the remaining hydroxy groups to obtain a carboxyl group. In addition, an acid group may be introduced by reacting the above-mentioned hydroxy group with a non-aromatic carboxylic acid anhydride or the like. Specific examples of the non-aromatic carboxylic acid anhydride include a tetrahydrophthalic acid anhydride, an alkylated tetrahydrophthalic acid anhydride, a hexahydrophthalic acid anhydride, an alkylated hexahydrophthalic acid anhydride, a succinic acid anhydride, and a maleic acid anhydride.

The polymerizable compound having an acid group is preferably an ester of an aliphatic polyhydroxy compound and an unsaturated carboxylic acid, more preferably a polymerizable compound to which an acid group is added by reacting an unreacted hydroxy group of the aliphatic polyhydroxy compound with a non-aromatic carboxylic acid anhydride, and still more preferably a compound in which the aliphatic polyhydroxy compound in the above-mentioned ester is at least one of pentaerythritol or dipentaerythritol. Examples of commercially available products thereof include ARONIX M-510 and M-520 (manufactured by Toagosei Co., Ltd.), CBX-0 and CBX-1 (manufactured by Shin-Nakamura Chemical Co., Ltd.), and the like. The acid value of the polymerizable compound having an acid group is preferably 0.1 to 40 mgKOH/g. The lower limit is more preferably 5 mgKOH/g or more. The upper limit is more preferably 30 mgKOH/g or less.

As the polymerizable compound, a compound having a caprolactone structure is also a preferred embodiment. The compound having a caprolactone structure is not particularly limited as long as it has a caprolactone structure in the molecule, and examples thereof include ε-caprolactone-modified polyfunctional (meth)acrylates obtained by esterification of a polyhydric alcohol such as trimethylolethane, ditrimethylolethane, trimethylolpropane, ditrimethylolpropane, pentaerythritol, dipentaerythritol, tripentaerythritol, glycerin, diglycerol, or trimethylol melamine with (meth)acrylic acid and ε-caprolactone. For the compound having a caprolactone structure, reference may be made to the description of paragraphs "0042" to "0045" of JP2013-253224A. Examples of the compound having a caprolactone structure include DPCA-20, DPCA-30, DPCA-60, DPCA-120, and the like, which are commercially available as KAYARAD DPCA series from Nippon Kayaku Co., Ltd., SR-494 which is a tetrafunctional acrylate having four ethyleneoxy chains manufactured by Sartomer Company, TPA-330 which is a trifunctional acrylate having three isobutyleneoxy chains, and the like.

Urethane acrylates as described in JP1973-41708B (JP-S48-41708B), JP1976-37193A (JP-S51-37193A), JP1990-32293B (JP-H02-32293B), and JP1990-16765B (JP-H02-16765B), and urethane compounds having an ethylene oxide-based skeleton described in JP1983-49860B (JP-S58-49860B), JP1981-17654B (JP-S56-17654B), JP1987-39417B (JP-S62-39417B), and JP1987-39418B (JP-S62-39418B) are also suitable as the polymerizable compound. In addition, addition polymerizable compounds having an amino structure or a sulfide structure in the molecule described in JP1988-277653A (JP-S63-277653A), JP1988-260909A (JP-S63-260909A), and JP1989-105238A (JP-H01-105238A) may be used.

Examples of commercially available products include urethane oligomer UAS-10 and UAB-140 (manufactured by Sanyo Kokusaku Pulp Co., Ltd.), UA-7200 (manufactured by Shin-Nakamura Chemical Co., Ltd.), DPHA-40H (Nippon Kayaku Co., Ltd.), UA-306H, UA-306T, UA-306I, AH-600, T-600, AI-600, and Light Acrylate DCP-A (manufactured by Kyoeisha Chemical Co., Ltd.).

Further, an isocyanuric acid ethyleneoxy (EO)-modified monomer such as ARONIX M-215, M-305, M-313, M-315, and TO-2349 (manufactured by Toagosei Co., Ltd.), SR-368 (manufactured by Sartomer Company), or A-9300 (manufactured by Shin-Nakamura Chemical Co., Ltd.) can be preferably used as the polymerizable compound.

In the case where the polymerizable compound is contained in the infrared transmitting composition, the content of the polymerizable compound is preferably 0.1 to 90 mass% and more preferably 2 to 50 mass%, with respect to the solid content of the infrared transmitting composition.

As for the polymerization initiator, reference may be made to, for example, the examples described in paragraphs "0500" to "0547" of JP2012-208494A.

The polymerization initiator is preferably an oxime compound. Specific examples of the oxime compound include compounds described in JP2001-233842A, compounds described in JP2000-80068A, and compounds described in JP2006-342166A. Commercially available products include IRGACURE-OXE01 (manufactured by BASF Corporation), IRGACURE-OXE02 (manufactured by BASF Corporation), TR-PBG-304 (manufactured by Changzhou Tronly New Electronic Materials Co., Ltd.), and ADEKA ARKLS NCI-831 and ADEKA ARKLS NCI-930 (both manufactured by ADEKA Corporation).

As the oxime compound, an oxime compound having a nitro group may also be used. It is also preferred that the oxime compound having a nitro group is a dimer. Specific examples of the oxime compound having a nitro group include the compounds described in paragraphs "0031" to "0047" of JP2013-114249A, the compounds described in paragraphs "0008 to "0012" and "0070" to "0079" of JP2014-137466A, the compounds described in paragraphs "0007" to "0025" of JP4223071B, and ADEKA ARKLS NCI-831 (manufactured by ADEKA Corporation).

The polymerization initiator may be used alone or in combination of two or more thereof.

In the case where the polymerization initiator is contained in the infrared transmitting composition, the content of the polymerization initiator is preferably 0.1 to 20 mass% and more preferably 0.5 to 5 mass%, with respect to the solid content of the infrared transmitting composition. Further, in the present invention, an oxime compound having a fluorine atom may be used as the photopolymerization initiator. Specific examples of the oxime compound having a fluorine atom include the compounds described in JP2010-262028A, the compounds 24 and 36 to 40 described in JP2014-500852A, and the compound (C-3) described in JP2013-164471A.

As for a pigment dispersant (hereinafter, also referred to as a dispersant), reference may be made to, for example, the examples described in paragraphs "0404" to "0465" of JP2012-208494A. The pigment dispersant may be used alone or in combination of two or more thereof.

In the case where a pigment dispersant is used, its amount is preferably 1 to 80 parts by mass, more preferably 5 to 70 parts by mass, and still more preferably 10 to 60 parts by mass, with respect to 100 parts by mass of the pigment.

As for the pigment derivative, reference may be made to, for example, the examples described in paragraphs "0124" to "0126" of JP2009-203462A. The pigment derivative may be used alone or in combination of two or more thereof.

In the case where a pigment derivative is used, its amount is preferably 1 to 30 parts by mass, more preferably 3 to 20 parts by mass, and still more preferably 5 to 15 parts by mass, with respect to 100 parts by mass of the pigment.

Further examples of the dispersant include an acidic dispersant (acidic resin) and a basic dispersant (basic resin), in addition to the foregoing dispersant. The dispersant preferably contains at least an acidic dispersant and more preferably only an acidic dispersant. Since the dispersant contains at least the acidic dispersant, the dispersibility of the pigment is improved and excellent developability is obtained, so that pattern formation can be suitably performed by photolithography. The expression that the dispersant is only an acidic dispersant means that, for example, the content of the acidic dispersant in the total mass of the dispersant is preferably 99 mass% or more and more preferably 99.9 mass% or more.

Here, the acidic dispersant (acidic resin) represents a resin in which the amount of the acid group is larger than the amount of the basic group. The acidic dispersant (acidic resin) is preferably a resin in which the amount of the acid group occupies 70 mol% or more when the total amount of the acid group and the basic group is 100 mol%, and more preferably a resin consisting substantially of only an acid group. The acid group contained in the acidic dispersant (acidic resin) is preferably a carboxyl group.

In addition, the basic dispersant (basic resin) represents a resin in which the amount of the basic group is larger than the amount of the acid group. The basic dispersant (basic resin) is preferably a resin in which the amount of the

basic group occupies 50 mol% or more when the total amount of the acid group and the basic group is 100 mol%. The basic group contained in the basic dispersant is preferably an amine.

The acid value of the acidic dispersant (acidic resin) is preferably 40 to 105 mgKOH/g, more preferably 50 to 105 mgKOH/g, and still more preferably 60 to 105 mgKOH/g.

The resin used as a dispersant preferably contains a repeating unit having an acid group. By including the repeating unit having an acid group in the resin, residues generated in the base of the pixel can be further reduced in the case where a pattern is formed by photolithography.

It is also preferred that the resin used as a dispersant is a graft copolymer. Since the graft copolymer has an affinity for the solvent by the graft chain, it is excellent in the dispersibility of the pigment and the dispersion stability after aging. In addition, since the composition has an affinity with a polymerizable compound or an alkali-soluble resin due to the presence of a graft chain, residues are less likely to be generated by alkali development. The graft copolymer includes a resin containing a repeating unit represented by any one of Formulae (1) to (4). For example, the following resins can be mentioned. In addition, the following resins may also be used as alkali-soluble resins.

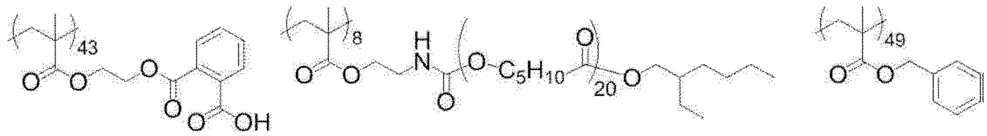

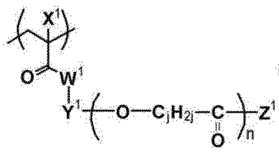
(1)

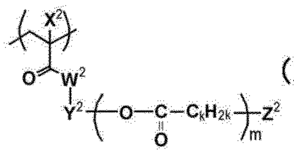
(2)

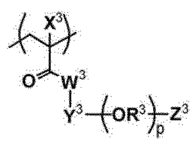
(3)

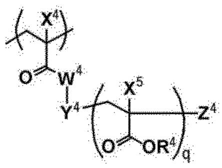
(4)

In Formulae (1) to (4), $W^1$, $W^2$, $W^3$, and $W^4$ each independently represent an oxygen atom or NH, $X^1$, $X^2$, $X^3$, $X^4$, and $X^5$ each independently represent a hydrogen atom or a monovalent group, $Y^1$, $Y^2$, $Y^3$, and $Y^4$ each independently represent a divalent linking group, $Z^1$, $Z^2$, $Z^3$, and $Z^4$ each independently represent a monovalent group, $R^3$ represents an alkylene group, $R^4$ represents a hydrogen atom or a monovalent group, n, m, p, and q each independently represent an integer of 1 to 500, and j and k each independently represent an integer of 2 to 8. In Formula (3), when p is 2 to 500, a plurality of $R^3$'s may be the same as or different from each other. In Formula (4), when q is 2 to 500, a plurality of $X^5$'s and $R^4$'s may be the same as or different from each other.

$W^1$, $W^2$, $W^3$, and $W^4$ are preferably an oxygen atom.

$X^1$, $X^2$, $X^3$, $X^4$, and $X^5$ are each independently preferably a hydrogen atom or an alkyl group having 1 to 12 carbon atoms, more preferably a hydrogen atom or a methyl group, and still more preferably a methyl group.

$Y^1$, $Y^2$, $Y^3$, and $Y^4$ each independently represent a divalent linking group. Examples of the divalent linking group include -CO-, -O-, -NH-, an alkylene group, an arylene group, and a group consisting of a combination thereof.

The structure of the monovalent group represented by $Z^1$, $Z^2$, $Z^3$, and $Z^4$ is not particularly limited, and examples thereof include an alkyl group, a hydroxyl group, an alkoxy group, an aryloxy group, a heteroaryloxy group, an alkylthioether group, an arylthioether group, a heteroarylthioether group, and an amino group.

In Formulae (1) to (4), n, m, p, and q are each independently an integer of 1 to 500. Further, in Formulae (1) and (2), j and k each independently represent an integer of 2 to 8. From the viewpoint of dispersion stability and developability, j and k in Formulae (1) and (2) are preferably an integer of 4 to 6, and most preferably 5.

In Formula (3), $R^3$ represents an alkylene group, preferably an alkylene group having 1 to 10 carbon atoms, and more preferably an alkylene group having 2 or 3 carbon atoms. When p is 2 to 500, a plurality of $R^3$'s may be the same as or different from each other.

In Formula (4), $R^4$ represents a hydrogen atom or a monovalent group. $R^4$ is preferably a hydrogen atom, an alkyl group, an aryl group, or a heteroaryl group, and more preferably a hydrogen atom or an alkyl group. In Formula (4), when q is 2 to 500, a plurality of $X^5$'s and $R^4$'s may be the same as or different from each other.

With regard to the details of the above formula, reference may be made to the description of paragraphs "0025"

to "0069" of JP2012-255128A.

As the dispersant, it is also possible to use an oligoimine-based resin containing a nitrogen atom in at least one of the main chain or the side chain thereof. The oligoimine-based resin is preferably a resin which has a repeating unit having a group X having a partial structure having a functional group having a pKa of 14 or less and has a side chain containing a side chain Y having 40 to 10,000 atoms and a basic nitrogen atom in at least one of the main chain or the side chain. The basic nitrogen atom is not particularly limited as long as it is a nitrogen atom that exhibits basicity.

The oligoimine-based resin may be, for example, a resin containing a repeating unit represented by Formula (I-1), and at least one of a repeating unit represented by Formula (1-2) or a repeating unit represented by Formula (I-2a).

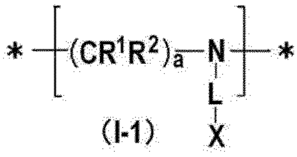
(I-1)
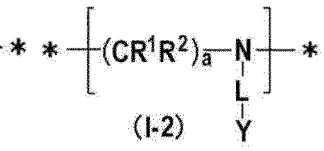
(I-2)
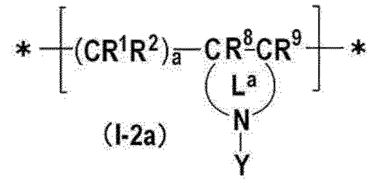
(I-2a)

$R^1$ and $R^2$ each independently represent a hydrogen atom, a halogen atom, or an alkyl group (preferably having 1 to 6 carbon atoms). a's each independently represent an integer of 1 to 5. * represents a linking portion between the repeating units.

$R^8$ and $R^9$ are the same groups as those for $R^1$.

L is a single bond, an alkylene group (preferably having 1 to 6 carbon atoms), an alkenylene group (preferably having 2 to 6 carbon atoms), an arylene group (preferably 6 to 24 carbon atoms), a heteroarylene group (preferably having 1 to 6 carbon atoms), an imino group (preferably having 0 to 6 carbon atoms), an ether group, a thioether group, a carbonyl group, or a linking group according to a combination thereof. Among them, a single bond or $-CR^5R^6-NR^7-$(the imino group becomes toward X or Y) is preferred. Here, $R^5$ and $R^6$ each independently represent a hydrogen atom, a halogen atom, or an alkyl group (preferably having 1 to 6 carbon atoms). $R^7$ is a hydrogen atom or an alkyl group having 1 to 6 carbon atoms.

$L^a$ is a structural moiety that forms a ring structure together with $CR^8CR^9$ and N, and preferably a structural moiety that forms a non-aromatic heterocyclic ring having 3 to 7 carbon atoms together with the carbon atom of $CR^8CR^9$. $L^a$ is more preferably a structural moiety that forms a 5- to 7-membered non-aromatic heterocyclic ring together with the carbon atom of $CR^8CR^9$ and N (nitrogen atom), still more preferably a structural moiety that forms a 5-membered non-aromatic heterocyclic ring, and particularly preferably a structural moiety that forms pyrrolidine. This structural moiety may further have a substituent such as an alkyl group.

X represents a group having a partial structure having a functional group having a pKa of 14 or less.

Y represents a side chain having 40 to 10,000 atoms.

The resin (oligoimine-based resin) may further contain, as a copolymerization component, one or more kinds selected from the repeating units represented by Formulae (1-3), (1-4), and (1-5). When the resin contains such a repeating unit, the dispersion performance of the pigment can be further improved.

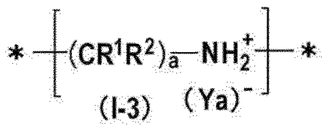
(I-3)
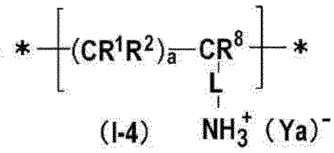
(I-4)
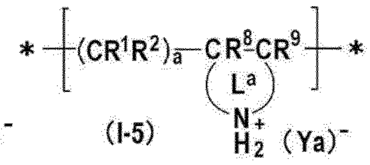
(I-5)

$R^1$, $R^2$, $R^8$, $R^9$, L, La, a, and * have the same definition as in Formulae (I-1), (I-2), and (I-2a).

Ya represents a side chain having an anionic group and having 40 to 10,000 atoms. The repeating unit represented by Formula (I-3) can be formed in such a manner that an oligomer or polymer having a group capable of reacting with an amine to form a salt is added to a resin having a primary or secondary amino group in the main chain portion, followed by reaction.

As for the above-described oligoimine-based resin, reference may be made to the description of paragraphs "0102" to "0166" of JP2012-255128A. Specific examples of the oligoimine-based resin include the following compound given below. In addition, the resins described in paragraphs "0168" to "0174" of JP2012-255128A can be used.

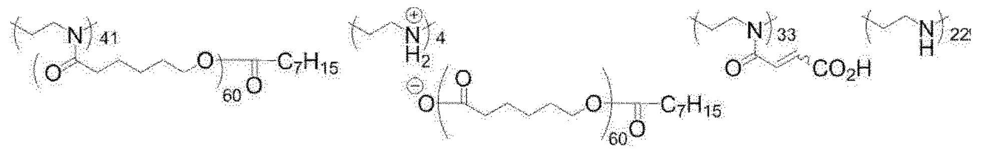

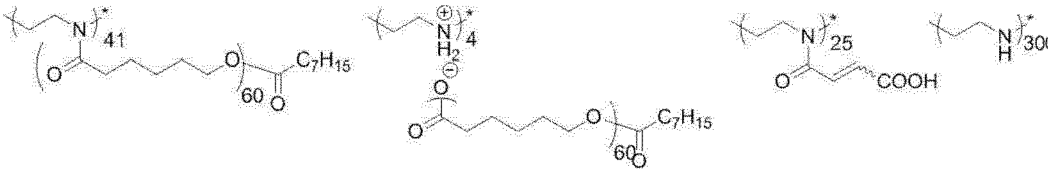

As for the solvent, reference may be made to, for example, the examples described in paragraphs "0496" to "0499" of JP2012-208494A. The solvent may be used alone or in combination of two or more thereof.

In the present invention, it is preferable to use a solvent having a small metal content, and the metal content of the solvent is, for example, preferably 10 ppb or less. If necessary, a solvent having a metal content at the ppt level may be used, and such a high purity solvent is available from, for example, Toyo Gosei Co., Ltd.

Examples of a method for removing impurities such as metals from a solvent include distillation (molecular distillation, thin film distillation, or the like), and filtration using a filter. The filter pore size in filtration using a filter is preferably 10 nm or less, more preferably 5 nm or less, and still more preferably 3 nm or less. A filter made of polytetrafluoroethylene, polyethylene, or nylon is preferred as the filter.

The solvent may contain isomers (compounds having the same number of atoms and different structures). Also, the isomers may be contained singly or in plural kinds.

The blending amount of the solvent is preferably such that the solid content concentration of the composition is 5 to 80 mass%.

As for the alkali-soluble resin, reference may be made to, for example, the examples described in paragraphs "0558" to "0572" of JP2012-208494A.

The alkali-soluble resin may be preferably, for example, a polymer (a) obtained by polymerizing monomer components essentially containing a compound represented by General Formula (ED) and/or a compound represented by General Formula (ED 2) (hereinafter, these compounds may also be referred to as "ether dimer").

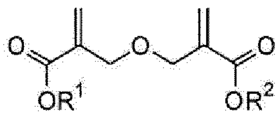

General Formula (ED)

In General Formula (ED), $R^1$ and $R^2$ each independently represent a hydrogen atom or a hydrocarbon group having 1 to 25 carbon atoms which may have a substituent.

General Formula (ED2)

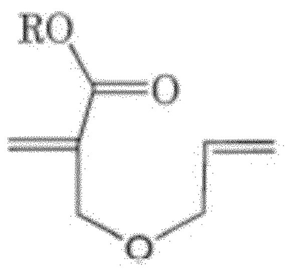

In General Formula (ED2), R represents a hydrogen atom or an organic group having 1 to 30 carbon atoms. As for specific examples of General Formula (ED2), reference may be made to the description of JP2010-168539A.

The alkali-soluble resin may be used alone or in combination of two or more thereof.

In the case where the alkali-soluble resin is contained in the infrared transmitting composition, the content of

the alkali-soluble resin is preferably 1 to 15 mass% with respect to the solid content of the infrared transmitting composition.

Specific examples of the alkali-soluble resin include the compounds given below.

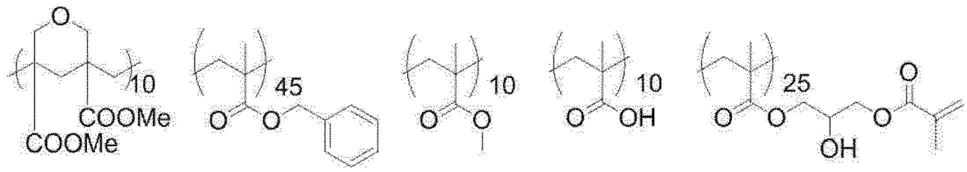

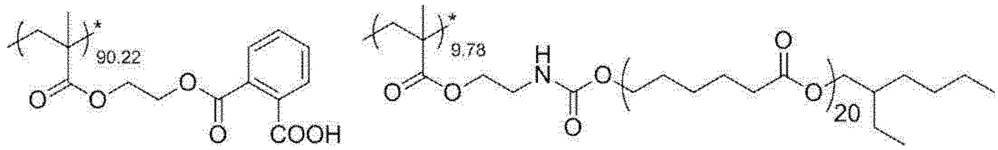

As for the alkali-soluble resin, reference may be made to the description of paragraphs "0558" to "0571" of JP2012-208494A ([0685] to [0700] of the corresponding US2012/0235099A). Further, the copolymer (B) described in paragraphs "0029" to "0063" of JP2012-32767A and the alkali-soluble resin used in the Examples thereof; the binder resin described in paragraphs "0088" to "0098" of JP2012-208474A and the binder resin used in the Examples thereof; the binder resin described in paragraphs "0022" to "0032" of JP2012-137531A and the binder resin used in the Examples thereof; the binder resin described in paragraphs "0132" to "0143" of JP2013-024934A and the binder resin used in Examples thereof; the binder resin described in paragraphs "0092" to "0098" of JP2011-242752A and the binder resin used in Examples thereof; and the binder resin described in paragraphs "0030" to "0072" of JP2012-032770A may also be used.

As the alkali-soluble resin, an alkali-soluble resin having a polymerizable group may be used. Examples of the polymerizable group include a (meth)allyl group and a (meth)acryloyl group. As the alkali-soluble resin having a polymerizable group, an alkali-soluble resin or the like containing a polymerizable group in the side chain is useful. Examples of the alkali-soluble resin containing a polymerizable group include DIANAL NR series (manufactured by Mitsubishi Rayon Co., Ltd.), Photomer 6173 (COOH-containing polyurethane acrylic oligomer, manufactured by Diamond Shamrock Co., Ltd.), VISCOAT R-264 and KS RESIST 106 (both manufactured by Osaka Organic Chemical Industry, Ltd.), CYCLOMER P series (for example, ACA230AA) and PLACCEL CF 200 series (all manufactured by Daicel Co., Ltd.), Ebecryl 3800 (manufactured by Daicel-UCB Co., Ltd.), and ACRYCURE RD-F8 (manufactured by Nippon Shokubai Co., Ltd.).

Various surfactants such as a fluorine-based surfactant, a nonionic surfactant, a cationic surfactant, an anionic surfactant, and a silicone-based surfactant may be used as a surfactant.

By using a fluorine-based surfactant, the liquid properties (particularly, the fluidity) when the composition is prepared are further improved, and the uniformity of the coating thickness and the liquid saving properties can be further improved. That is, in the case of forming a film using a composition containing a fluorine-based surfactant, the interfacial tension between the surface to be coated and the composition is lowered, and the wettability to the surface to be coated is improved, whereby the coatability to the surface to be coated is improved. Therefore, it is possible to more suitably form a uniform thickness film having small thickness unevenness.

The fluorine-based surfactant suitably has a fluorine content of 3 to 40 mass%, more preferably 5 to 30 mass%, and still more preferably 7 to 25 mass%. A fluorine-based surfactant having a fluorine content within this range is effective from the viewpoint of the uniformity of the thickness of the coating film and liquid saving properties, and has good solubility in the composition.

Specific examples of the fluorine-based surfactant include the surfactants described in paragraphs "0060" to "0064" of JP2014-41318A (paragraphs "0060" to "0064" of the corresponding WO2014/17669A), and the surfactants described in paragraphs "0117" to "0132" of JP2011-132503A. Examples of commercially available products of the fluorine-based surfactant include MEGAFACE F171, MEGAFACE F172, MEGAFACE F173, MEGAFACE F176, MEGAFACE F177, MEGAFACE F141, MEGAFACE F142, MEGAFACE F143, MEGAFACE F144, MEGAFACE R30, MEGAFACE F437, MEGAFACE F475, MEGAFACE F479, MEGAFACE F482, MEGAFACE F554, MEGAFACE F780, and MEGAFACE RS-72-K (all manufactured by DIC Corporation), FLUORAD FC430, FLUORAD FC431 and FLUORAD FC171 (all manufactured by Sumitomo 3M Limited), SURFLON S-382, SURFLON SC-101, SURFLON SC-103, SURFLON SC-104, SURFLON SC-105, SURFLON SC1068, SURFLON SC-381, SURFLON SC-383, SURFLON S393, and SURFLON KH-40 (all manufactured by Asahi Glass Co., Ltd.), and PolyFox PF636, PF656, PF6320, PF6520, and PF7002 (all manufactured by OMNOVA Solutions Inc.).

A block polymer can also be used as the fluorine-based surfactant and specific examples thereof include the

compounds described in JP2011-89090A. As the fluorine-based surfactant, a fluorine-containing polymer compound containing a repeating unit derived from a (meth)acrylate compound having a fluorine atom and a repeating unit derived from a (meth)acrylate compound having two or more (preferably five or more) alkyleneoxy groups (preferably ethyleneoxy groups or propyleneoxy groups) can also be preferably used. The following compounds are also exemplified as the fluorine-based surfactant used in the present invention.

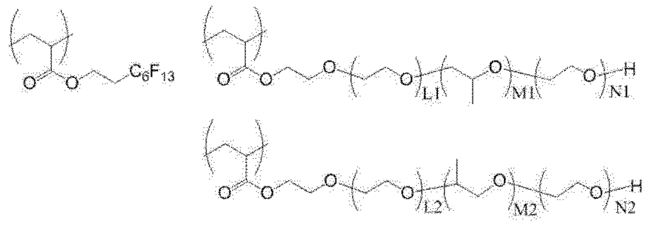

L1+N1+L2+N2=14
M1+M2=17

62% 38%

The weight-average molecular weight of the above compound is preferably 3,000 to 50,000, for example, 14,000. In the above compounds, % indicating the proportion of the repeating unit is mass%.

As the fluorine-based surfactant, it is also possible to suitably use an acrylic compound having a molecular structure containing a functional group of a fluorine atom in which a fluorine atom is volatilized due to a part of the functional group being broken when heat is applied. As the acrylic compound having a molecular structure containing a functional group of a fluorine atom in which a fluorine atom is volatilized due to a part of the functional group being broken when heat is applied, a MEGAFACE DS series manufactured by DIC Corporation (Chemical Industry Daily, February 22, 2016) (Nikkei Sangyo Shimbun, February 23, 2016), for example, MEGAFACE DS-21 may be used.

As for an example of the surfactant, reference may be made to, for example, the examples described in paragraphs "0549" to "0557" of JP2012-208494A. Further, as another example of the surfactant, reference may be made to the examples described in paragraphs "0117" to "0132" of JP5809794B.

The surfactants may be used alone or in combination of two or more thereof.

In the case where the surfactant is contained in the infrared transmitting composition, the content of the surfactant is preferably 0.001 to 2.0 mass% with respect to the solid content of the infrared transmitting composition.

A compound having an alkoxysilyl group functions as a crosslinkable compound. The number of carbon atoms of the alkoxy group in the alkoxysilyl group is preferably 1 to 5, more preferably 1 to 3, and still more preferably 1 or 2. It is preferred that two or more alkoxysilyl groups are contained in one molecule, and it is more preferred that two or three alkoxysilyl groups are contained in one molecule. Specific examples of the compound having an alkoxysilyl group include methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, trifluoropropyltrimethoxysilane, hexamethyldisilazane, vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3 -aminopropyltrimethoxysilane, 3 -aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, hydrochloride of N-(vinylbenzyl)-2-aminoethyl-3-aminopropyltrimethoxysilane, tris-(trimethoxysilylpropyl)isocyanurate, 3-ureidopropyltriethoxysilane, 3-mercaptopropylmethyldimethoxysilane, 3-mercaptopropyltrimethoxysilane, bis(triethoxysilylpropyl) tetrasulfide, and 3-isocyanatepropyltriethoxysilane. In addition to the above, an alkoxy oligomer can be used. The following compounds can also be used.

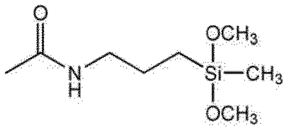 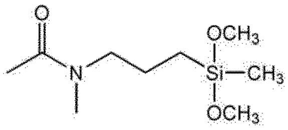 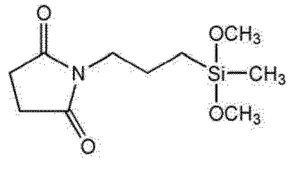

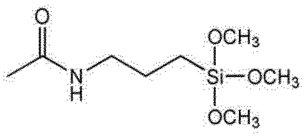

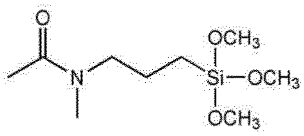

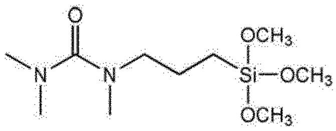

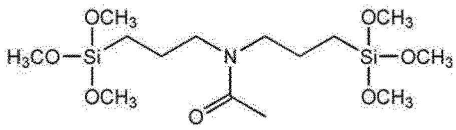

Examples of commercially available products of the compound having an alkoxysilyl group include KBM-13, KBM-22, KBM-103, KBE-13, KBE-22, KBE-103, KBM-3033, KBE-3033, KBM-3063, KBM-3066, KBM-3086, KBE-3063, KBE-3083, KBM-3103, KBM-3066, KBM-7103, SZ-31, KPN-3504, KBM-1003, KBE-1003, KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, KBE-9007, X-40-1053, X-41-1059A, X-41-1056, X-41-1805, X-41-1818, X-41-1810, X-40-2651, X-40-2655A, KR-513, KC-89S, KR-500, X-40-9225, X-40-9246, X-40-9250, KR-401N, X-40-9227, X-40-9247, KR-510, KR-9218, KR-213, X-40-2308, and X-40-9238 (manufactured by Shin-Etsu Silicone Co., Ltd.).

A polymer having an alkoxysilyl group in the side chain may also be used as the compound having an alkoxysilyl group.

In the case where a compound having an alkoxysilyl group is contained in the infrared transmitting composition, the content of the compound having an alkoxysilyl group is preferably 0.1 to 30 mass% with respect to the solid content of the infrared transmitting composition.

(Second embodiment of infrared transmitting composition)

The infrared transmitting composition of the second embodiment contains a coloring agent and an alkali-soluble resin, in which the coloring agent includes at least a red pigment and at least one of a blue pigment represented by General Formula (A2) or a blue pigment represented by General Formula (A3), and the content of the red pigment in the total coloring agent is 20 to 50 mass% and the content of the blue pigment is 25 to 55 mass%.

The infrared transmitting composition preferably contains a coloring agent other than the blue pigment and the red pigment. Further, the infrared transmitting composition may further contain components other than the above components.

The blue pigment is a compound represented by General Formula (A2) or General Formula (A3).

General Formula (A2)

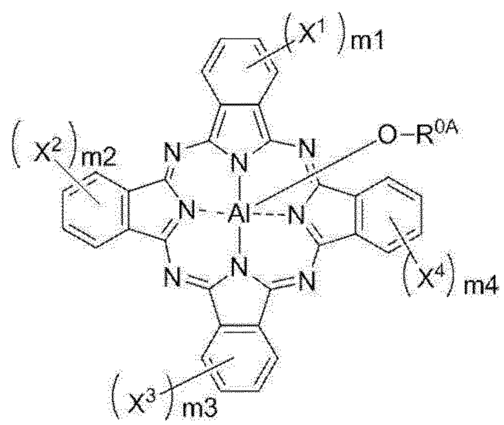

In General Formula (A2), $X^1$ to $X^4$ each independently represent a substituent. $R^{0A}$ represent a hydrogen atom or a monovalent substituent. m1 to m4 each independently represent an integer of 0 to 4. When m1 to m4 are 2 or more, $X^1$ to $X^4$ may be respectively the same or different.

General Formula (A3)

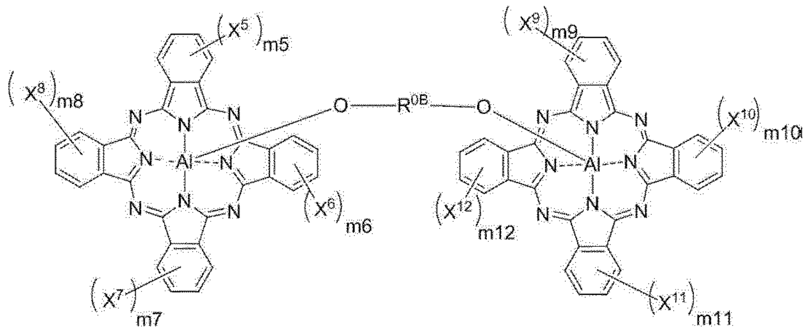

In General Formula (A3), $X^5$ to $X^{12}$ each independently represent a substituent. $R^{0B}$ represent a divalent substituent. m5 to m12 each independently represent an integer of 0 to 4. When m5 to m12 are 2 or more, $X^5$ to $X^{12}$ may be respectively the same or different.

The red pigment preferably includes a red pigment having a symmetric structure and a red pigment having an asymmetric structure.

In particular, it is preferable to contain C. I. Pigment Red 254, and a compound which is not C. I. Pigment Red 254, as a compound represented by General Formula (A4).

General Formula (A4)

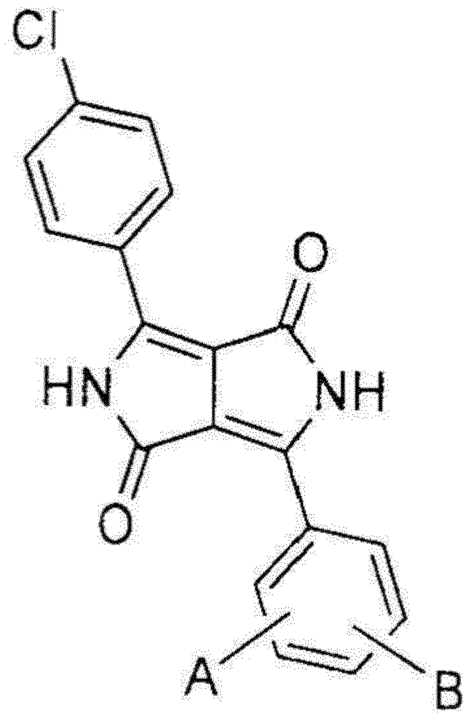

In General Formula (A4), A and B each independently represent a hydrogen atom, a fluorine atom, a chlorine atom, a bromine atom, an alkyl group having 1 to 4 carbon atoms, an alkoxy group having 1 to 4 carbon atoms, a cyano group, $-CF_3$, or $-CON(R^1)R^2$. $R^1$ and $R^2$ each independently represent a hydrogen atom, an alkyl group having 1 to 20 carbon atoms, or a phenyl group.

In the case of containing a compound having a symmetric structure and a compound having an asymmetric structure as the red pigment, the mass ratio of the compound having a symmetric structure to the compound having an asymmetric structure is preferably 99:1 to 80:15 and more preferably 98:2 to 90:10.

As another coloring agent, the another coloring agent of the above-described first embodiment may be used.

The total content of the red pigment and the coloring agent other than the blue pigment in total coloring agents of the infrared transmitting composition is preferably 5 to 45 mass% and more preferably 15 to 35 mass%.

As the alkali-soluble resin, the alkali-soluble resin described in the first embodiment can be used, and the preferred range is also the same as in the first embodiment.

As other components than those mentioned above, a polymerizable compound, a polymerization initiator, a pigment dispersant, a pigment derivative, a solvent, a surfactant, a compound having an alkoxysilyl group, and the like described in the first embodiment can be used. These preferred ranges are also the same as in the first embodiment.

(Third embodiment of infrared transmitting composition)

The infrared transmitting composition of the third embodiment contains a coloring agent and a resin, in which the ratio A/B of a minimum value A of absorbance in a wavelength range of 400 to 830 nm to a maximum value B of absorbance in a wavelength range of 1000 to 1,300 nm is 4.5 or more.

The above-mentioned conditions of absorbance may be achieved by any means, but the above-mentioned conditions of absorbance can be suitably attained, for example, by including one or more first coloring agents having an absorption maximum in the wavelength range of 800 to 900 nm and two or more second coloring agents having an absorption maximum in the wavelength range of 400 to 700 nm in the infrared transmitting composition and adjusting the kind and content of each coloring agent.

The infrared transmitting composition may contain a coloring agent (third coloring agent) other than the first coloring agent and the second coloring agent.

Further, the infrared transmitting composition may further contain components other than the coloring agent and the resin.

Examples of the first coloring agent include a diketopyrrolopyrrole dye compound, a copper compound, a cyanine-based dye compound, a phthalocyanine-based compound, an immonium-based compound, a thiol complex-based compound, a transition metal oxide-based compound, a squarylium-based dye compound, a naphthalocyanine-based dye compound, a quaterrylene-based dye compound, a dithiol metal complex-based dye compound, and a croconium compound.

The diketopyrrolopyrrole dye compound may be a pigment or a dye, but it is preferably a pigment from the viewpoint of easily obtaining an infrared transmitting composition capable of forming a film having excellent heat resistance. The diketopyrrolopyrrole dye compound is preferably a compound represented by General Formula (A5).

General Formula (A5)

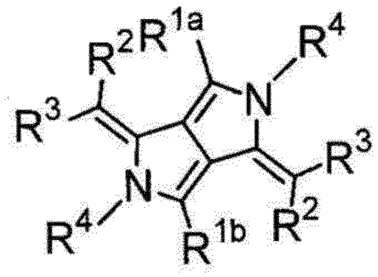

In General Formula (A5), $R^{1a}$ and $R^{1b}$ each independently represent an alkyl group, an aryl group, or a heteroaryl group, $R^2$ and $R^3$ each independently represent a hydrogen atom or a substituent, at least one of $R^2$ or $R^3$ is an electron-withdrawing group, $R^2$ and $R^3$ may be bonded to each other to form a ring, $R^4$ represents a hydrogen atom, an alkyl group, an aryl group, a heteroaryl group, substituted boron, or a metal atom, and $R^4$ may be bonded covalently or coordinately to one or more selected from $R^{1a}$, $R^{1b}$, and $R^3$.

As for the compound represented by General Formula (A5), reference may be made to, for example, the examples described in paragraphs "0016" to "0058" of JP2009-263614A.

In the infrared transmitting composition, the content of the first coloring agent is preferably 0 to 60 mass% and more preferably 10 to 40 mass%, with respect to the total solid content of the infrared transmitting composition.

In the infrared transmitting composition, the first coloring agent may be used alone or in combination of two or more thereof. In the case where two or more coloring agents are used in combination, the total content thereof is preferably within the above-specified range.

The second coloring agent may be a pigment or a dye, but it is preferably a pigment. The second coloring agent preferably contains two or more coloring agents selected from a red coloring agent, a yellow coloring agent, a blue coloring agent, and a violet coloring agent. As the second coloring agent, the other coloring agent described in the above-mentioned first embodiment can be used.

In the case where the second coloring agent is a combination of a red coloring agent, a yellow coloring agent, a blue coloring agent, and a violet coloring agent, it is preferred that the mass ratio of the red coloring agent to the total amount of the second coloring agent is 0.1 to 0.4, the mass ratio of the yellow coloring agent to the total amount of the second coloring agent is 0.1 to 0.4, the mass ratio of the blue coloring agent to the total amount of the second coloring agent is 0.20 to 0.60, and the mass ratio of the violet coloring agent to the total amount of the second coloring agent 0.01 to 0.30.

The content of the second coloring agent is preferably 10 to 60 mass% and more preferably 30 to 50 mass% of the total solid content of the infrared transmitting composition.

In the infrared transmitting composition, the total amount of the first coloring agent and the second coloring agent is preferably 1 to 80 mass%, more preferably 20 to 70 mass%, and still more preferably 30 to 70 mass%, with respect to the total solid content of the infrared transmitting composition.

As the third coloring agent, a coloring agent having an absorption maximum in a wavelength range of 400 to 700 nm and a wavelength range other than the wavelength range of 800 to 900 nm can be used.

Examples of the resin contained in the infrared transmitting composition include a pigment dispersant and an alkali-soluble resin. As the pigment dispersant and the alkali-soluble resin, the pigment dispersant and the alkali-soluble resin described in the first embodiment can be used.

As other components, a polymerizable compound, a polymerization initiator, a pigment derivative, a solvent, a surfactant, a compound having an alkoxysilyl group, and the like described in the first embodiment can be used. These preferred ranges are also the same as in the first embodiment.

(Fourth embodiment of infrared transmitting composition)

The infrared transmitting composition of the fourth embodiment contains a coloring agent and a polymerizable compound, in which the polymerizable compound includes a polymerizable compound having a chain containing two or more alkyleneoxy groups as a repeating unit (hereinafter, also referred to as an alkyleneoxy chain), the ratio A/B of the minimum value A of absorbance in the wavelength range of 400 nm or more and less than 580 nm to the minimum value B of absorbance in the wavelength range of 580 nm to 770 nm, of the infrared transmitting composition, is 0.3 to 3, and the ratio C/D of the minimum value C of absorbance in the wavelength range of 400 nm to 750 nm to the maximum value D of absorbance in the wavelength range of 850 nm to 1,300 nm is 5 or more.

The infrared transmitting composition may further contain components other than the coloring agent and the polymerizable compound.

The coloring agent has the same definition as the other coloring agent of the above-described first embodiment. The content of the pigment is preferably 95 mass% or more, more preferably 97 mass% or more, and still more preferably 99 mass% or more, with respect to the total amount of the coloring agent.

The polymerizable compound includes a polymerizable compound having an alkyleneoxy chain. The polymerizable compound having an alkyleneoxy chain preferably has a partial structure represented by General Formula (A7). * in the formula is a bond.

General Formula (A7)

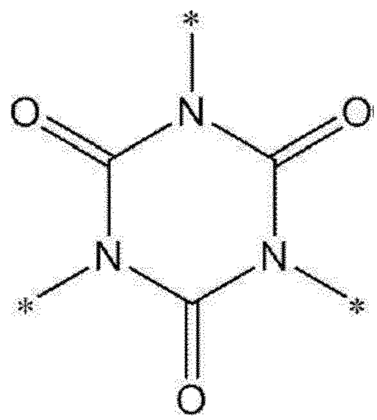

The polymerizable compound having a partial structure represented by General Formula (A7) may be, for example, a polymerizable compound represented by General Formula (A8).

General Formula (A8)

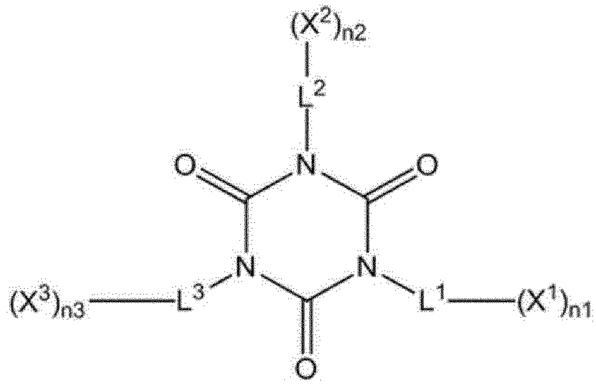

In General Formula (A8), $X^1$ to $X^3$ each independently represent a hydrogen atom or a polymerizable group, and at least one of $X^1$, $X^2$, or $X^3$ represents a polymerizable group.

$L^1$ represents a (1+n1)-valent linking group, $L^2$ represents a (1+n2)-valent linking group, $L^3$ represents a (1+n3)-valent linking group, and at least one of $L^1$, $L^2$, or $L^3$ represents a linking group containing $-((CH_2)_a-O)_b-$. a represents an integer of 2 or more, and b represents an integer of 2 or more. In General Formula (A8), n1 to n3 each independently represent an integer of 1 or more, and are preferably 1 or 2.

It is preferred that the linking group containing $-((CH_2)_a-O)_b-$ which at least one of $L^1$, $L^2$, or $L^3$ has is preferably an ethyleneoxy group or a propyleneoxy group.

As the polymerizable compound having an alkyleneoxy chain, the polymerizable compound described in the first embodiment may also be used.

As other components, a polymerization initiator, a pigment dispersant, a pigment derivative, a solvent, an alkali-soluble resin, surfactant, a compound having an alkoxysilyl group, and the like described in the first embodiment can be used. These preferred ranges are also the same as in the first embodiment.

(Fifth embodiment of infrared transmitting composition)

The infrared transmitting composition of the fifth embodiment contains a coloring agent and a polymerizable compound, in which the polymerizable compound includes a polymerizable compound having a chain containing two or more alkyleneoxy groups as a repeating unit, the coloring agent includes at least one or more coloring agents A selected from a red coloring agent and a violet coloring agent, a yellow coloring agent, and a blue coloring agent, the coloring agent A/total coloring agents, which is a mass ratio of a coloring agent A selected from a red coloring agent and a violet coloring agent to the total amount of coloring agents, is 0.01 to 0.7, the yellow coloring agent/total coloring agents, which is a mass ratio of the yellow coloring agent to the total amount of coloring agents, is 0.05 to 0.5, and the blue coloring agent/total coloring agents, which is a mass ratio of the blue coloring agent to the total amount of coloring agents, is 0.05 to 0.6.

The infrared transmitting composition may further contain components other than the coloring agent and the polymerizable compound.

The coloring agent has the same definition as the other coloring agent of the above-described first embodiment.

The polymerizable compound has the same definition as the polymerizable compound having an alkyleneoxy chain described in the fourth embodiment.

As other components, a polymerization initiator, a pigment dispersant, a pigment derivative, a solvent, an alkali-soluble resin, surfactant, and a compound having an alkoxysilyl group, and the like described in the first embodiment can be used. These preferred ranges are also the same as in the first embodiment.

(Sixth embodiment of infrared transmitting composition)

The infrared transmitting composition of the sixth embodiment contains a coloring agent and a polymerizable compound, in which the ratio P/M of the mass P of the coloring agent to the mass M of the polymerizable compound is 0.05 to 0.35, the content of the polymerizable compound in the total solid content of the infrared transmitting composition is 25 to 65 mass%, the ratio A/B of the minimum value A of absorbance in the wavelength range of 400 nm or more and less than 580 nm to the minimum value B of absorbance in the wavelength range of 580 nm to 770 nm, of the infrared transmitting composition, is 0.3 to 3, and the ratio C/D of the minimum value C of absorbance in the wavelength range of 400 nm to 750 nm to a maximum value D of absorbance in a wavelength range of 850 nm to 1,300 nm is 5 or more.

The infrared transmitting composition may further contain components other than the coloring agent and the polymerizable compound.
The coloring agent and the polymerizable compound have respectively the same definition the other coloring agent and the polymerizable compound of the above-described first embodiment.
As other components, a polymerization initiator, a pigment dispersant, a pigment derivative, a solvent, an alkali-soluble resin, a surfactant, a compound having an alkoxysilyl group, and the like described in the first embodiment can be used. These preferred ranges are also the same as in the first embodiment.

(Seventh embodiment of infrared transmitting composition)

The infrared transmitting composition of the seventh embodiment contains a coloring agent and a polymerizable compound, in which the ratio P/M of the mass P of the coloring agent to the mass M of the polymerizable compound is 0.05 to 0.35, the content of the polymerizable compound in the total solid content of the infrared transmitting composition is 25 to 65 mass%, the coloring agent includes at least a yellow coloring agent and a blue coloring agent, the yellow coloring agent/total coloring agents, which is a mass ratio of the yellow coloring agent to the total amount of coloring agents is from 0.1 to 0.5, and the blue coloring agent/total coloring agents, which is a mass ratio of the blue coloring agent to the total amount of coloring agents is 0.1 to 0. 6.
The infrared transmitting composition may further contain components other than the coloring agent and the polymerizable compound.
The coloring agent and the polymerizable compound have respectively the same definition the other coloring agent and polymerizable compound of the above-described first embodiment.
As other components, a polymerization initiator, a pigment dispersant, a pigment derivative, a solvent, an alkali-soluble resin, a surfactant, a compound having an alkoxysilyl group, and the like described in the first embodiment can be used. These preferred ranges are also the same as in the first embodiment.

(Eighth embodiment of infrared transmitting composition)

The infrared transmitting composition of the eighth embodiment is a composition in which, in the case where a film with a film thickness of 1 μm is formed, the maximum value of the light transmittance in the thickness direction of the film in the wavelength range of 400 to 750 nm is 20% or less, and the minimum value of the light transmittance in the thickness direction of the film in the wavelength range of 900 to 1,300 nm is 90% or more.
Methods for measuring spectroscopic characteristics, a film thickness, and the like of the film are described below.
The composition is applied onto a glass substrate by a method such as spin coating so that the film thickness after drying was 1 μm, a film is formed, and then the obtained film is dried on a hot plate at 100°C for 120 seconds.
The film thickness of the film is measured using the substrate having a film after drying by a stylus surface profiler (DEKTAK 150 manufactured by ULVAC Inc.).
The transmittance is measured in a wavelength range from 300 to 1,300 nm using the substrate having a film after drying by a spectrophotometer (ref. glass substrate) of a UV-VIS-near IR spectrophotometer (U-4100 manufactured by Hitachi High-Technologies Corporation).
Conditions of light transmittance may be achieved by any means. For example, the conditions of light transmittance can be suitably achieved by including two or more pigments in the composition and adjusting the kind and content of each pigment.
The infrared transmitting composition may further contain a coloring agent and components other than the coloring agent.
The coloring agent has the same definition as the other coloring agent of the above-described first embodiment.
As other components, a polymerizable compound, a polymerization initiator, a pigment dispersant, a pigment derivative, a solvent, an alkali-soluble resin, surfactant, a compound having an alkoxysilyl group, and the like described in the first embodiment can be used. These preferred ranges are also the same as in the first embodiment.

(Ninth embodiment of infrared transmitting composition)

The infrared transmitting composition of the ninth embodiment is a composition containing a pigment, a photopolymerization initiator, and a polymerizable compound, in which the infrared transmitting layer satisfies the following conditions (1) to (5) in the case where an infrared transmitting layer having a spectral transmittance of 30% at a wavelength of 600 nm is formed.

(1) The spectral transmittance at 400 nm is 20% or less.

(2) The spectral transmittance at 550 nm is 10% or less.
(3) The spectral transmittance at 700 nm is 70% or more.
(4) The wavelength showing the spectral transmittance of 50% is in the range of 650 nm to 680 nm.
(5) The infrared transmitting layer has a film thickness in the range of 0.55 μm to 1.8 μm.

For details of the infrared transmitting composition, reference may be made to, for example, the examples described in paragraphs "0020" to "0230" of JP2013-077009A.

<Other layers>

The laminate may include layers other than the above-described multilayer reflective film and light absorbing layer.
The laminate preferably further includes, for example, at least one of a substrate, an easily adhesive layer, a hard coat layer, an ultraviolet absorbing layer, a pressure sensitive layer, or a surface protective layer.
Hereinafter, the other layers will be described in detail.

(Substrate)

The laminate may have a substrate.
The type of the substrate is not particularly limited, and a known substrate (preferably, a transparent substrate) can be used. For example, a glass substrate or a resin substrate can be suitably used.

(Easily adhesive layer)

The laminate may have an easily adhesive layer as the outermost layer of one side or both sides thereof. The easily adhesive layer has, for example, a function of improving the adhesiveness between the laminate and the interlayer film for a laminated glass. More specifically, the easily adhesive layer has a function of improving the adhesiveness between the light reflecting layer and/or substrate and the interlayer film for a laminated glass.
As a material that can be used for forming the easily adhesive layer, a polyvinyl butyral (PVB) resin can be mentioned. The polyvinyl butyral resin is a kind of polyvinyl acetal that is formed through the reaction of polyvinyl alcohol (PVA) and butyraldehyde in the presence of an acid catalyst, and is a resin containing a repeating unit having the following structure.

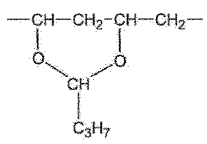

The easily adhesive layer is preferably formed by coating. For example, the easily adhesive layer may be formed by coating on the surface of the light reflecting layer and/or the rear surface of the substrate (surface on the side in which the light reflecting layer is not formed). More specifically, one polyvinyl butyral resin is dissolved in an organic solvent to prepare a coating liquid, and the coating liquid is applied onto the surface of the light reflecting layer and/or the rear surface of the substrate which may be then heated and dried as needed, whereby an easily adhesive layer can be formed. Examples of the solvent used for preparation of the coating liquid include methoxy propyl acetate (PGMEA), methyl ethyl ketone (MEK), and isopropanol (IPA).
With respect to the coating method, a variety of known methods can be used. A preferred range of the temperature at the time of drying varies depending on the materials used for preparation of the coating liquid, but the temperature thereof is usually preferably about 140°C to 160°C. The drying time is not particularly limited, but the time thereof is usually about 5 to 10 minutes.
The easily adhesive layer may also be a so-called undercoat layer which is a layer formed of an acrylic resin, a styrene/acrylic resin, a urethane resin, or a polyester resin. The easily adhesive layer formed of these materials can be formed by coating. In addition, some commercially available polymer films may have an undercoat layer formed therein, and such commercially available products may be used as the substrate.
The thickness of the easily adhesive layer is preferably 0.1 to 2.0 μm.

(Undercoat layer)

The laminate may have an undercoat layer between the light reflecting layer and the substrate. If the adhesive force between the light reflecting layer and the substrate is weak, peeling failure may occur in the step of laminating and producing the light reflecting layer or the strength (impact resistance) in the case of using a laminated glass may be reduced. Accordingly, a layer capable of improving adhesiveness between the light reflecting layer and the substrate can be used as the undercoat layer. On the other hand, in the case where the substrate or the substrate and the undercoat layer are peeled off from the laminate, and a member such as an interlayer film sheet is integrated with the obtained light reflecting layer, adhesiveness whose degree is not so strong that the layer is peelable is required at the interface between the substrate and the undercoat layer or the undercoat layer and the light reflecting layer. In this case, it is preferable to be peelable at the interface between the undercoat layer and the substrate in consideration of the post-process.
Examples of the material usable in forming the undercoat layer include an acrylic acid ester copolymer, polyvinylidene chloride, styrene-butadiene rubber (SBR), and aqueous polyester. In an embodiment where the surface of the undercoat layer is adhered to an interlayer film, it is preferred that the adhesiveness between the undercoat layer and the interlayer film is good. From this viewpoint, it is preferred that the undercoat layer contains a polyvinyl butyral resin in addition to the above-described materials.
In addition, since the adhesive force of the undercoat layer is necessary to be appropriately adjusted as described above, it is preferred that the layer is hardened with a suitable hardener, for example, with dialdehydes such as glutaraldehyde and 2,3-dihydroxy-1,4-dioxane, or with boric acid or the like. The amount of the hardener to be added is preferably 0.2 to 3.0 mass% with respect to the dry mass of the undercoat layer.
The thickness of the undercoat layer is preferably 0.05 to 0.5 μm.

(Alignment layer)

The laminate may include an alignment layer between the light reflecting layer and the substrate. The alignment layer has a function of more precisely defining the alignment direction of the liquid crystal compound in the light reflecting layer. The alignment layer can be provided by means of a rubbing treatment of an organic compound (preferably, a polymer), oblique vapor deposition of an inorganic compound, and a formation of a layer with microgrooves. Further, an alignment layer in which an alignment function is generated due to application of an electric field, application of a magnetic field, or light irradiation is known. As the alignment layer, those which generate alignment by light irradiation are preferred, and known ones can be suitably used.
Since the alignment layer is preferably to be in close contact with the light reflecting layer, it is preferred that the alignment layer is preferably provided between the light reflecting layer and the substrate or the undercoat layer. However, the undercoat layer may have a function of the alignment layer.
It is preferred that the alignment layer has a certain degree of adhesive force with respect to all of the light reflecting layer and undercoat layer (or substrate) adjacent thereto.
As a material used for the alignment layer, a polymer is preferable, and a polymer which can be crosslinked by itself or a polymer which is crosslinked using a crosslinking agent is frequently used. Certainly, a polymer having both functions is also used.
Examples of the polymer include a polymer such as a polymethyl methacrylate, an acrylic acid/methacrylic acid copolymer, a styrene/malein imide copolymer, polyvinyl alcohol and modified polyvinyl alcohol, poly(N-methylol acrylamide), a styrene/vinyl toluene copolymer, chlorosulfonated polyethylene, nitrocellulose, polyvinyl chloride, chlorinated polyolefin, polyester, polyimide, a vinyl acetate/vinyl chloride copolymer, an ethylene/vinyl acetate copolymer, carboxymethyl cellulose, gelatin, polyethylene, polypropylene, and polycarbonate. The polymer is preferably a water-soluble polymer such as poly(N-methylol acrylamide), carboxymethyl cellulose, gelatin, polyvinyl alcohol, or modified polyvinyl alcohol, more preferably gelatin, polyvinyl alcohol, or modified polyvinyl alcohol, and still more preferably polyvinyl alcohol or modified polyvinyl alcohol.
In addition, in an embodiment of adhering the interlayer film to the surface of the alignment layer, it is preferred that the adhesiveness between the alignment layer and the interlayer film is good. From this viewpoint, it is preferred that the alignment layer contains a polyvinyl butyral resin in addition to the above-described materials.
The thickness of the alignment layer is preferably 0.1 to 2.0 μm.

(Hard coat layer)

The laminate may have a hard coat layer. The hard coat layer is usually used to add scratch resistance to the laminate and is often disposed on the outermost surface side of the laminate.
The hard coat layer is not particularly limited and the kind or the formation method thereof can be appropriately

selected according to the purpose. Examples of the resin used for forming the hard coat layer include thermosetting or photosetting resins such as an acrylic resin, a silicone-based resin, a melamine-based resin, a urethane-based resin, an alkyd-based resin, and a fluorine-based resin.

The hard coat layer may contain metal oxide particles.

The thickness of the hard coat layer is not particularly limited and can be appropriately selected according to the purpose. The thickness of the hard coat layer is preferably 1 to 50 μm.

In the case where an antiglare layer is further formed on the hard coat layer, a laminate having anti-glare characteristics in addition to scratch resistance can be obtained.

(Ultraviolet absorbing layer)

The laminate may include a layer containing an ultraviolet absorber (ultraviolet absorbing layer)

The layer containing an ultraviolet absorber can be appropriately selected according to the purpose. However, since alignment of the liquid crystal is influenced depending on the kinds of the ultraviolet absorbers, it is preferable to be added to a member (a layer, a substrate, or the like) other than the light reflecting layer. According to the embodiment of the present invention, various modes may be adopted, but it is preferable to be added to a member to which light is incident before the light reflecting layer. For example, an ultraviolet absorber is preferably added to a layer disposed between a glass plate disposed on the outdoor side and the light reflecting layer. Alternatively, an ultraviolet absorber is also preferably to be contained in the interlayer film to be adhered to the glass plate disposed on the outdoor side or the glass plate itself disposed on the outdoor side.

Examples of the ultraviolet absorber include an ultraviolet absorber such as a benzotriazole-based ultraviolet absorber, a benzodithiol-based ultraviolet absorber, a coumarin-based ultraviolet absorber, a benzophenone-based ultraviolet absorber, a salicylic acid ester-based ultraviolet absorber, or a cyanoacrylate-based ultraviolet absorber; titanium oxide, and zinc oxide. Preferred examples of the ultraviolet absorber include Tinuvin 326, 328, and 479 (all manufactured by Ciba Japan KK). Further, the kind and the blending amount of the ultraviolet absorber are not particularly limited, and can be appropriately selected according to purposes. Particularly, in the case where a member containing the ultraviolet absorber has an effect of adjusting the transmittance of ultraviolet rays having a wavelength of 380 nm or less to be 0.1% or less, deterioration of the light reflecting layer can be remarkably reduced and yellowing of the laminate due to ultraviolet rays can be remarkably reduced, which are preferable.

An ultraviolet absorber such as an aminodiene-based ultraviolet absorber, a salicylate-based ultraviolet absorber, a benzophenone--based ultraviolet absorber, a benzotriazole-based ultraviolet absorber, an acrylonitrile-based ultraviolet absorber, or a triazine-based ultraviolet absorber can be used as the ultraviolet absorber. Specific examples of the ultraviolet absorber include the compounds described in JP2013-68814A. As the benzotriazole-based ultraviolet absorber, MYUA series manufactured by Miyoshi Oils and Fats (Chemical Industry Daily, February 1, 2016) may be used.

(Pressure sensitive adhesive layer)

The laminate may include a pressure sensitive adhesive layer (hereinafter, also referred to as a pressure sensitive layer).

The materials which can be used for forming the pressure sensitive layer are not particularly limited and can be appropriately selected according to the purpose, and examples thereof include a polyvinyl butyral (PVB) resin, an acrylic resin, a styrene/acrylic resin, a urethane resin, a polyester resin, and a silicone resin. These may be used alone or in combination of two or more thereof. The pressure sensitive layer made of these materials can be formed by coating.

Further, the pressure sensitive layer may contain, if necessary, an ultraviolet absorber, an antistatic agent, a lubricant, an anti-blocking agent, or the like.

The thickness of the pressure sensitive layer is preferably 0.1 to 10 μm.

(Antireflection layer)

The laminate may include an antireflection layer. The antireflection layer is preferably disposed on the outermost side (outermost surface side) in the laminate. Since the laminate has the antireflection layer, the transmittance of the transmissive portion of the laminate can be improved, which is preferable.

The antireflection layer preferably has a refractive index in a wavelength range desired to be transmitted which is a value between the underlying layer and the air, and it is preferred that the refractive index is 1.1 to 1.5.

Materials used for the antireflection layer are not particularly limited, and known ones can be suitably used.

<Method for producing laminate>

As described above, the laminate has a multilayer reflective film and a light absorbing layer, and each layer can be prepared by the above-described method.

In particular, from the viewpoint that the laminate can be produced more easily, it is preferable to use a composition kit including a first composition containing a liquid crystal compound having a polymerizable group and a dextrorotatory chiral agent, a second composition containing a liquid crystal compound having a polymerizable group and a levorotatory chiral agent, and a third composition containing a color material. As described later, this composition kit is suitably used in the method of the invention for forming a bandpass filter.

The first composition includes a liquid crystal compound having a polymerizable group and a dextrorotatory chiral agent. The description of the liquid crystal compound having a polymerizable group and the dextrorotatory chiral agent is as described above.

The second composition includes a liquid crystal compound having a polymerizable group and a levorotatory chiral agent. The description of the liquid crystal compound having a polymerizable group and the levorotatory chiral agent is as described above.

The third composition includes a color material. The color material is as defined above and is preferably a pigment. If necessary, the third composition may contain other components (for example, a polymerizable compound, a binder, a polymerization initiator, a pigment dispersant, a pigment derivative, a solvent, surfactant, an alkali-soluble resin, and a compound having an alkoxysilyl group). As the other components, the various components described in the foregoing section (First embodiment of infrared transmitting composition) can be mentioned. Also, the third composition may be selected from the group consisting of (First embodiment of infrared transmitting composition) to (Ninth embodiment of infrared transmitting composition).

It is preferred that the first composition and the second composition each contain a photopolymerization initiator.

In addition, it is preferred that the first composition and the second composition each contain a fluorine-containing compound. The fluorine-containing compound is a compound containing a fluorine atom, and examples thereof include the fluorine-based alignment controlling agent described above.

A method for producing a laminate using the above composition kit includes a step of forming a light reflecting layer Xa in which the first composition is applied to form a coating film, if necessary, heat is applied to the coating film to bring the coating film into a state of a cholesteric liquid crystalline phase, the coating film is irradiated with light (irradiated with actinic radiation), and the cholesteric liquid crystalline phase is immobilized to form the light reflecting layer Xa; a step of forming a light reflecting layer Xb in which the second composition is applied to form a coating film, if necessary, heat is applied to the coating film to bring the coating film into a state of a cholesteric liquid crystalline phase, the coating film is irradiated with light (irradiated with actinic radiation), and the cholesteric liquid crystalline phase is immobilized to form the light reflecting layer Xb; and a step of forming a light absorbing layer in which the third composition is applied and if necessary, a curing treatment is carried out to form the light absorbing layer.

In the above production method, the step of forming the light reflecting layer Xa and the step of forming the light reflecting layer Xb may be carried out plural times.

In the above production method, the first composition and/or the second composition is applied onto the light reflecting layer so that the light reflecting layers are in contact with each other. That is, a step of forming a light absorbing layer is carried out after carrying out a multilayer reflective film forming step including a step of forming the light reflecting layer Xa and a step of forming the light reflecting layer Xb, or a step of forming a light absorbing layer is carried out before carrying out the multilayer reflective film forming step.

The order of carrying out the step of forming the light reflecting layer Xa and the step of forming the light reflecting layer Xb is not particularly limited.

<Use>

The laminate described above can be suitably used as a so-called bandpass filter. The invention is directed to a method for producing such a bandpass filter. In particular, since the laminate has the light reflecting layer formed by immobilizing the cholesteric liquid crystalline phase, it is possible to transmit only the selected wavelength with a smaller number of layers. Further, inclusion of a light absorbing layer containing a color material also improves the angle dependence.

(Bandpass filter)

The reflective laminated film reflects light in at least part of a wavelength range of 650 to 1200nm, and the light absorbing layer has a maximum transmittance of 70% or more at a wavelength of 700 nm or more and a maximum transmittance of 30% or less at a wavelength of 400 nm or more and less than 700 nm. In addition, the number of the

light reflecting layers included in the bandpass filter formed in the method of the present invention is not particularly limited and can be determined according to the band where light is reflected.

In one embodiment, the method may be used to produce a bandpass filter X in which the ratio (R1) of the absorbance at a wavelength of 830 nm relative to the absorbance at a wavelength of 730 nm is 3 or more.

In the bandpass filter X, it is further preferred that the ratio (R2) of the absorbance at a wavelength of 630 nm relative to the absorbance at a wavelength of 730 nm is 3 or more.

In another embodiment, the method may be used to produce a bandpass filter Y in which the ratio (R3) of the absorbance at a wavelength of 950 nm relative to the absorbance at a wavelength of 850 nm is 3 or more.

In the bandpass filter Y, it is further preferred that the ratio (R4) of the absorbance at a wavelength of 750 nm relative to the absorbance at a wavelength of 850 nm is 3 or more.

In another embodiment, the method may be used to produce a bandpass filter Z in which the ratio (R5) of the absorbance at a wavelength of 1040 nm relative to the absorbance at a wavelength of 940 nm is 3 or more.

In the bandpass filter Z, it is further preferred that the ratio (R6) of the absorbance at a wavelength of 840 nm relative to the absorbance at a wavelength of 940 nm is 3 or more.

In the bandpass filters X to Z, angle dependence is further reduced, which is preferable.

The suitable range of the ratios (R1) to (R6) is the same as the suitable range of the ratios (R1) to (R6) described in the suitable embodiment of the laminate.

(Infrared sensor)

Since the bandpass filter of the present invention can transmit only light of a specific wavelength range, it can be preferably used for a sensor, particularly an infrared sensor.

The configuration of the infrared sensor is not particularly limited as long as it has the laminate of the present invention and functions as a solid image pickup element.

A specific configuration of the infrared sensor is, for example, a configuration in which a substrate is provided; on the substrate are provided a plurality of photodiodes constituting a light receiving area of a solid image pickup element (a charge-coupled device (CCD) sensor, a complementary metal oxide semiconductor (CMOS) sensor, an organic CMOS sensor, or the like) and a transfer electrode formed of polysilicon or the like; on the photodiodes and the transfer electrode is provided a light-shielding film formed of a tungsten or the like in which only a light receiving unit of the photodiode is opened; on the light-shielding film is provided a device protective film formed of silicon nitride or the like which is formed so as to cover the entire surface of the light-shielding film and the light receiving unit of the photodiode; and on the device protective film is provided a bandpass filter having the laminate of the present invention.

Moreover, a configuration having a light collecting means (for example, a micro-lens) under the laminate of the present invention (the side closer to the substrate) on the device protective film, or a configuration having the light collecting means on the laminate may also be included.

The organic CMOS sensor is configured to include a thin film of panchromatic light-sensitive organic photoelectric conversion film as a photoelectric conversion layer and a CMOS signal read-out substrate, has a hybrid structure of two-layer configuration where an organic material plays a role to capture light and convert it to an electrical signal, and an inorganic material plays a role to extract the electrical signal outside, and in principle, the opening ratio with respect to incidence light may be made to be 100%. The organic photoelectric conversion film is a continuous film of structure free and can be laid on the CMOS signal read-out substrate, therefore, an expensive microfabrication process is not necessary and is suitable for pixel miniaturization.

(Imaging device)

Next, an imaging device will be described as an example of applying the infrared sensor. As the imaging device, a camera module or the like can be mentioned.

Fig. 4 is a functional block diagram of the imaging device. The imaging device includes a lens optical system 1, a solid image pickup element 110, a signal processing unit 120, a signal switching unit 130, a control unit 140, a signal accumulation unit 150, a light emission control unit 160, an infrared LED 170 of a light emitting element that emits infrared light, and image output units 180 and 181. As the solid image pickup element 110, the infrared sensor described above can be used. All or part of the configuration other than the solid image pickup element 110 and the lens optical system 1 may be formed on the same semiconductor substrate. For each configuration of the imaging device, reference may be made to examples described in paragraphs "0032" to "0036" of JP2011-233983A.

EXAMPLES

Hereinafter, the features of the present invention will be described in more detail with reference to Examples

and Comparative Examples. The materials, the used amount, the ratio, the contents of a treatment, and the procedures of a treatment described in Examples below may be suitably modified. Accordingly, the scope of the present invention should not be limitatively interpreted by the specific examples described below.

<Preparation of coating liquid (R1)>

Compound 1, Compound 2 in the compound group B, a fluorine-based horizontal alignment agent, a chiral agent, a polymerization initiator, and a solvent were mixed to prepare a coating liquid (R1) having the following composition.

| | |
|---|---|
| • Compound 1 shown below | 80 parts by mass |
| • Compound 2 in the following compound group B | 20 parts by mass |
| • Fluorine-based horizontal alignment agent 1 shown below | 0.1 parts by mass |
| • Fluorine-based horizontal alignment agent 2 shown below | 0.007 parts by mass |
| • Dextrorotatory chiral agent LC 756 (manufactured by BASF Corporation) | 2.4 parts by mass |
| • Polymerization initiator IRGACURE 819 (manufactured by BASF Corporation) | 4 parts by mass |
| • Solvent (cyclohexanone) | added to make a solute concentration of 40 mass% |

<Preparation of coating liquid (R2)>

Compound 1, Compound 2 in the compound group B, a fluorine-based horizontal alignment agent, a chiral agent, a polymerization initiator, and a solvent were mixed to prepare a coating liquid (R2) having the following composition.

| | |
|---|---|
| • Compound 1 shown below | 80 parts by mass |
| • Compound 2 in the following compound group B | 20 parts by mass |
| • Fluorine-based horizontal alignment agent 1 shown below | 0.1 parts by mass |
| • Fluorine-based horizontal alignment agent 2 shown below | 0.007 parts by mass |
| • Dextrorotatory chiral agent LC 756 (manufactured by BASF Corporation) | 2.5 parts by mass |
| • Polymerization initiator IRGACURE 819 (manufactured by BASF Corporation) | 4 parts by mass |
| • Solvent (cyclohexanone) | added to make a solute concentration of 40 mass% |

<Preparation of coating liquid (R3)>

Compound 1, Compound 2 in the compound group B, a fluorine-based horizontal alignment agent, a chiral agent, a polymerization initiator, and a solvent were mixed to prepare a coating liquid (R3) having the following composition.

| | |
|---|---|
| • Compound 1 shown below | 80 parts by mass |
| • Compound 2 in the following compound group B | 20 parts by mass |
| • Fluorine-based horizontal alignment agent 1 shown below | 0.1 parts by mass |
| • Fluorine-based horizontal alignment agent 2 shown below | 0.007 parts by mass |
| • Dextrorotatory chiral agent LC 756 (manufactured by BASF Corporation) | 2.6 parts by mass |
| • Polymerization initiator IRGACURE 819 (manufactured by BASF Corporation) | 4 parts by mass |
| • Solvent (cyclohexanone) | added to make a solute concentration of 40 mass% |

· Compound 1

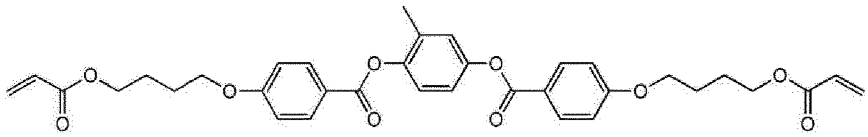

Compound group B

· Compound 2

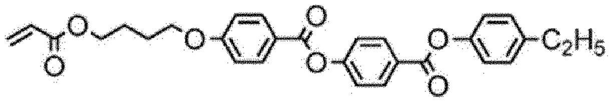

Fluorine-based horizontal alignment agent 1

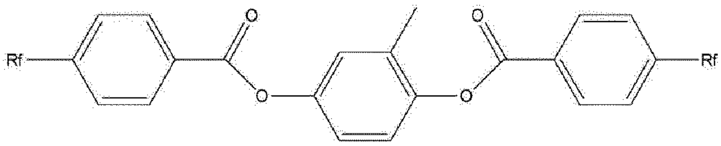

Rf = 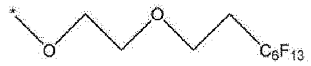

Fluorine-based horizontal alignment agent 2

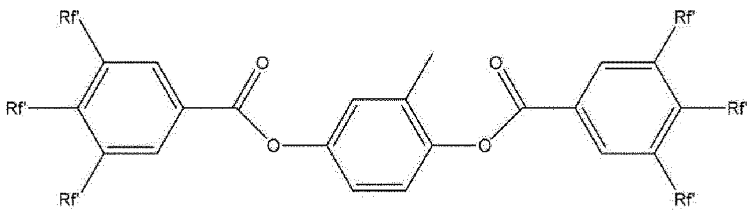

Rf' = 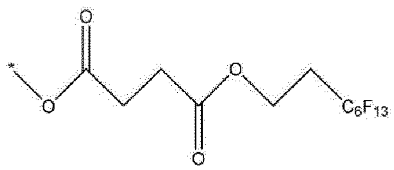

<Preparation of coating liquid (L1)>

Compound 1, Compound 2 in the compound group B, a fluorine-based horizontal alignment agent, a chiral agent, a polymerization initiator, and a solvent were mixed to prepare a coating liquid (L1) having the following composition.

| | |
|---|---|
| • Compound 1 shown above | 80 parts by mass |
| • Compound 2 in the above compound group B | 20 parts by mass |
| • Fluorine-based horizontal alignment agent 1 shown above | 0.1 parts by mass |
| • Fluorine-based horizontal alignment agent 2 shown above | 0.007 parts by mass |
| • Levorotatory chiral agent (A) shown below | 4.5 parts by mass |
| • Polymerization initiator IRGACURE 819 (manufactured by BASF Corporation) | 4 parts by mass |

(continued)

| | |
|---|---|
| • Solvent (cyclohexanone) | added to make a solute concentration of 40 mass% |

<Preparation of coating liquid (L2)>

Compound 1, Compound 2 in the compound group B, a fluorine-based horizontal alignment agent, a chiral agent, a polymerization initiator, and a solvent were mixed to prepare a coating liquid (L2) having the following composition.

| | |
|---|---|
| • Compound 1 shown above | 80 parts by mass |
| • Compound 2 in the above compound group B | 20 parts by mass |
| • Fluorine-based horizontal alignment agent 1 shown above | 0.1 parts by mass |
| • Fluorine-based horizontal alignment agent 2 shown above | 0.007 parts by mass |
| • Levorotatory chiral agent (A) shown below | 5 parts by mass |
| • Polymerization initiator IRGACURE 819 (manufactured by BASF Corporation) | 4 parts by mass |
| • Solvent (cyclohexanone) | added to make a solute concentration of 40 mass% |

<Preparation of coating liquid (L3)>

Compound 1, Compound 2 in the compound group B, a fluorine-based horizontal alignment agent, a chiral agent, a polymerization initiator, and a solvent were mixed to prepare a coating liquid (L3) having the following composition.

| | |
|---|---|
| • Compound 1 shown above | 80 parts by mass |
| • Compound 2 in the above compound group B | 20 parts by mass |
| • Fluorine-based horizontal alignment agent 1 shown above | 0.1 parts by mass |
| • Fluorine-based horizontal alignment agent 2 shown above | 0.007 parts by mass |
| • Levorotatory chiral agent (A) shown below | 5.5 parts by mass |
| • Polymerization initiator IRGACURE 819 (manufactured by BASF Corporation) | 4 parts by mass |
| • Solvent (cyclohexanone) | added to make a solute concentration of 40 mass% |

Levorotatory chiral agent (A)

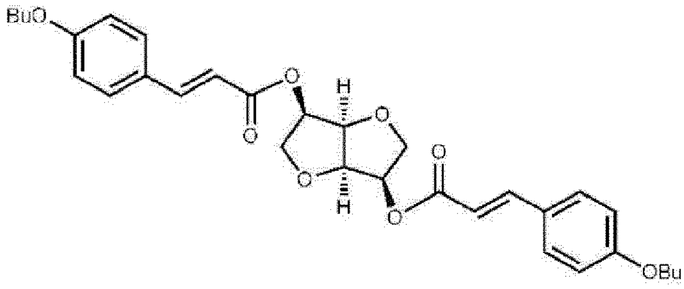

<Production of film>

(1) Using a spin coater, a coating liquid (R1) was applied onto a glass substrate at room temperature so that the thickness of the coating film after drying was 5 μm, thereby forming a coating film.

(2) The glass substrate having the coating film was dried at room temperature for 30 seconds to remove the solvent from the coating film. Next, the glass substrate having the coating film was heated at 90°C for 2 minutes to form a cholesteric liquid crystalline phase. Next, the coating film was irradiated with UV (ultraviolet rays) at an output of 60% for 6 to 12 seconds using an electrodeless lamp "D bulb" (90 mW/cm2) manufactured by Fusion UV Systems

Co., Ltd., whereby a film (F1) formed by immobilizing the cholesteric liquid crystalline phase was produced on a glass substrate.

Further, a film (F1b) was prepared in the same manner as described above, except that the coating liquid (L1) was used in place of the coating liquid (R1).

<Preparation of laminate (Part 1)>

(1) Using a spin coater, the coating liquid (L1) was applied onto the film (F1) at room temperature so that the thickness of the coating film after drying was 5 μm, thereby forming a coating film.

(2) The film (F1) having the coating film was dried at room temperature for 30 seconds to remove the solvent from the coating film. Next, the film (F1) having the coating film was heated at 90°C for 2 minutes and then the coating film was heated at a temperature of 35°C to form a cholesteric liquid crystalline phase. Next, the coating film was irradiated with UV at an output of 60% for 6 to 12 seconds using an electrodeless lamp "D bulb" (90 $mW/cm^2$) manufactured by Fusion UV Systems Co., Ltd., and the cholesteric liquid crystalline phase was immobilized to thereby produce a laminate (A) in which the film formed by immobilizing the cholesteric liquid crystalline phase was laminated in two layers on a glass substrate. No significant defects and streaks were found in the produced laminate (A), and the surface state was satisfactory.

<Evaluation of film and laminate>

The transmission spectra of the films (F1) and (F1b) were measured and the selective reflection wavelengths thereof were 1075 nm and 1070 nm, respectively. Further, when the transmission spectrum of the laminate (A) was measured, one intense peak was observed around 1070 nm. From this fact, it was demonstrated that the film (light reflecting layer) formed using the coating liquid (R1) and the film (light reflecting layer) formed using the coating liquid (L1) have equal selective reflection wavelengths.

Next, when the haze value of the laminate (A) was measured by a haze meter, the average value measured three times was 0.3 (%).

Further, HTP of the chiral agent used for the coating liquid (R1) and the coating liquid (L1) was calculated according to the following equation, and it was 55 $\mu m^{-1}$ and 37 $\mu m^{-1}$, respectively, and HTP was 30 $\mu m^{-1}$ or more in both cases.

Equation: HTP = 1/{(helical pitch length (μm)) × (mass% concentration of chiral agent in solid content contained in coating liquid)}

(helical pitch length (μm) is calculated by (selective reflection wavelength (μm))/(average refractive index of solid content contained in coating liquid), assuming that the average refractive index of the solid content is 1.5)

Note that the above-mentioned solid content is intended to be a component that can constitute a film among the components contained in the coating liquid, and does not include a solvent. Even if the component is in liquid form, it is assumed to be solid content in the case of capable of constituting a film.

<Preparation of laminate (Part 2)>

Films (F2), (F3), (F2b), and (F3b) were respectively prepared in the same manner as in the method of preparing the film (F1), except that the coating liquid (R2), the coating liquid (R3), the coating liquid (L2), and the coating liquid (L3) were respectively used in place of the coating liquid (R1).

The selective reflection wavelengths of the films (F2b) and (F3b) each containing a levorotatory chiral agent were equal to the selective reflection wavelengths of the films (F2) and (F3) each containing a dextrorotatory chiral agent, respectively.

A laminate (B) was produced by laminating the film (F2) and the film (F2b) on the laminate (A) in the same manner as in the above-mentioned production method of the laminate (A).

Further, a laminate (C) was produced by laminating a film (F3) and a film (F3b) on the laminate (B).

The transmittance of the laminate (A), the laminate (B), and the laminate (C) in the wavelength range of 400 to 1100 nm was measured using a spectrophotometer (ref. glass substrate) of a UV-VIS-near IR spectrophotometer (U-4100 manufactured by Hitachi High-Technologies Corporation). The measurement results of the laminate (A), the laminate (B), and the laminate (C) are shown in Figs. 5 to 7, respectively.

<Preparation of pigment dispersion liquid 1-1>

Using a beads mill (a high pressure disperser equipped with a pressure-reducing system NANO-3000-10 (manufactured by Nippon BEE Chemical Co., Ltd.)) and using zirconia beads having a diameter of 0.3 mm, a mixed liquid having the composition shown in Table 1 below was mixed until the IR (infrared ray) coloring agent reaches the average particle size shown in Table 1, thereby preparing a pigment dispersion liquid. In the table, the used amount (unit: part by mass) of the corresponding component is shown.

The average particle size of the pigment in the pigment dispersion liquid was measured on a volume basis using MICROTRACUPA 150 manufactured by Nikkiso Co., Ltd.

<Preparation of pigment dispersion liquids 2-1 to 2-4>

Using a beads mill (a high pressure disperser equipped with a pressure-reducing system NANO-3000-10 (manufactured by Nippon BEE Chemical Co., Ltd.)) and using zirconia beads having a diameter of 0.3 mm, a mixed liquid having the composition shown in Table 1 below was mixed for 3 hours to prepare a pigment dispersion liquid. In the table, the used amount (unit: part by mass) of the corresponding component is shown.

[Table 1]

| | Coloring agent | | | Resin | Organic solvent |
|---|---|---|---|---|---|
| | IR coloring agent | | Second coloring agent | | |
| | Type | Average particle size (nm) | | | |
| Pigment dispersion liquid 1-1 | Diketopyrrolopyrrole pigment 1 (13.5) | 75 | | Dispersion resin 1 (4.0) | PGMEA (82.5) |
| Pigment dispersion liquid 2-1 | | - | PR254 (13.5) | Dispersion resin 2 (2.0) Alkali-soluble resin 1 (2.0) | PGMEA (82.5) |
| Pigment dispersion liquid 2-2 | | - | PB15:6 (13.5) | Dispersion resin 3 (4.0) | PGMEA (82.5) |
| Pigment dispersion liquid 2-3 | | - | PY139 (14.8) | Dispersion resin 1 (3.0) Alkali-soluble resin 1 (2.2) | PGMEA (80.0) |
| Pigment dispersion liquid 2-4 | | - | PV23(14.8) | Dispersion resin 1 (3.0) Alkali-soluble resin 1 (2.2) | PGMEA (80.0) |

Abbreviations of each component in the table are as follows.

[IR coloring agent]

Diketopyrrolopyrrole pigment 1: Structure shown below (synthesized by the method described in JP2009-263614A) (a coloring agent having an absorption maximum in the wavelength range of 800 to 900 nm)

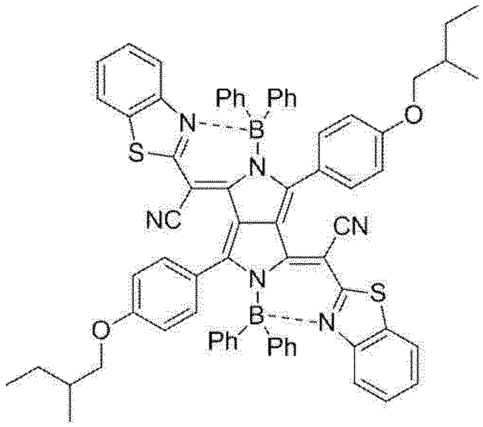

[Second coloring agent (coloring agent having absorption maximum in wavelength range of 400 to 700 nm)]

- PR254: C. I. Pigment Red 254
- PB15:6: C. I. Pigment Blue 15:6
- PY139: Pigment Yellow 139
- PV23: Pigment Violet 23

[Resin]

- Dispersion resin 1: BYK-111 (manufactured by BYK Chemie GmbH)
- Dispersion resin 2: Structure shown below (weight-average molecular weight (Mw): 7950)

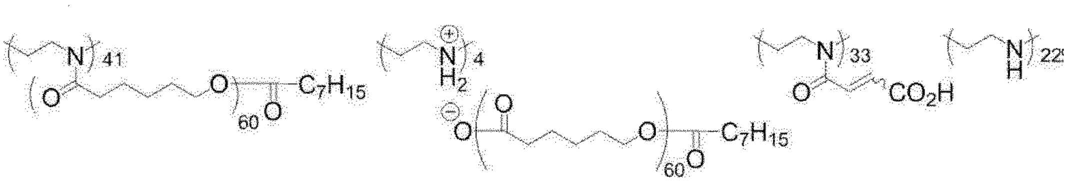

- Dispersion resin 3: Structure shown below (Mw: 30,000)

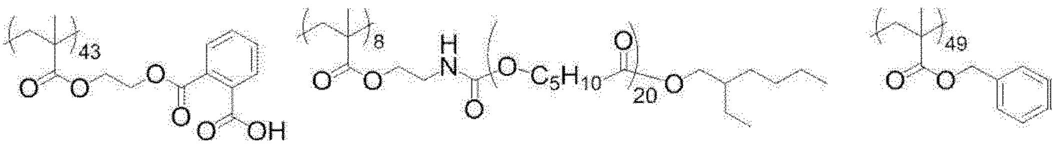

- Alkali-soluble resin 1: Structure shown below

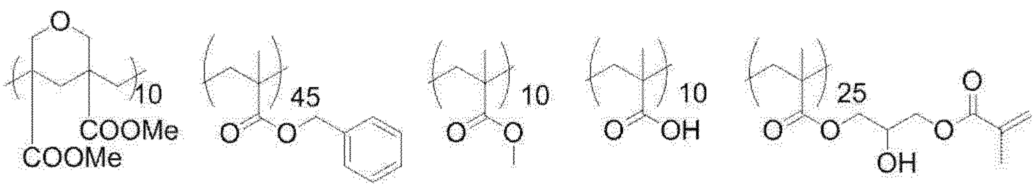

<Preparation of infrared transmitting composition A>

The components shown in Table 2 below were mixed in the proportions (unit: part by mass) shown in Table 2

below to prepare an infrared transmitting composition A.

[Table 2]

| | Coloring composition A |
|---|---|
| Pigment dispersion liquid 1-1 | 22.67 |
| Pigment dispersion liquid 2-1 | 11.33 |
| Pigment dispersion liquid 2-2 | 22.67 |
| Pigment dispersion liquid 2-3 | 10.34 |
| Pigment dispersion liquid 2-4 | 6.89 |
| Polymerizable compound 1 | 1.37 |
| Alkali-soluble resin 1 | 3.52 |
| Photopolymerization initiator 1 | 0.86 |
| Surfactant 1 | 0.42 |
| Polymerization initiator 1 | 0.001 |
| Organic solvent 1 | 19.93 |

- Polymerizable compound 1: M-305 (triacrylate 55 to 63 mass%) (manufactured by Toagosei Co., Ltd.), Structure shown below

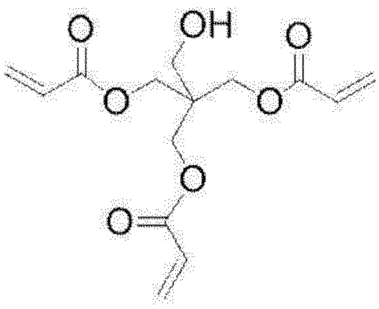

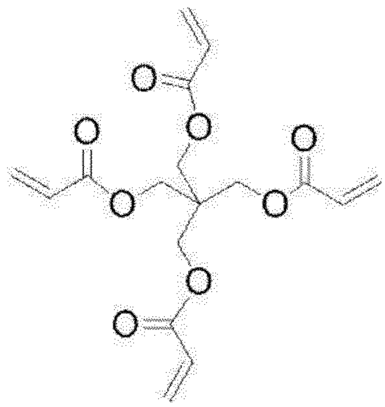

- Photopolymerization initiator 1: Irgacure OXE01 (manufactured by BASF Corporation), Structure shown below

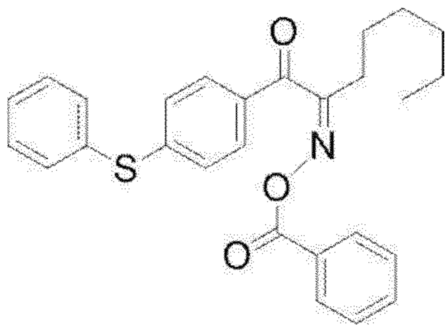

- Surfactant 1: fluorine-based surfactant
- Polymerization inhibitor 1: p-methoxyphenol
- Organic solvent 1: propylene glycol methyl ether acetate

<Production of infrared transmitting film A>

The infrared transmitting composition A was applied onto a glass substrate by spin coating. Next, the glass substrate coated with the infrared transmitting composition A was dried at 100°C for 120 seconds using a hot plate and further heat-treated (post-baked) at 200°C for 300 seconds to obtain an infrared transmitting film A (film thickness of 3.0 μm).

Using a spectrophotometer (ref. glass substrate) of a UV-VIS-near IR spectrophotometer (U-4100 manufactured by Hitachi High-Technologies Corporation), the transmittance of the glass substrate having the infrared transmitting film A in the wavelength range of 400 to 1100 nm was measured. The results are shown in Fig. 8.

<Preparation of pigment dispersion liquid B-1>

Using a beads mill (a high pressure disperser equipped with a pressure-reducing system NANO-3000-10 (manufactured by Nippon BEE Chemical Co., Ltd.)) and using zirconia beads having a diameter of 0.3 mm, a mixed liquid having the following composition was mixed for 3 hours to prepare pigment dispersion liquid B-1.

| | |
|---|---|
| • Mixed pigment consisting of a red pigment (C. I. Pigment Red 254) and a yellow pigment (C. I. Pigment Yellow 139) | 11.8 parts by mass |
| • Dispersant: BYK-111 manufactured by BYK Chemie GmbH | 9.1 parts by mass |
| • Organic solvent: propylene glycol methyl ether acetate | 79.1 parts by mass |

<Preparation of pigment dispersion liquid B-2>

Using a beads mill (a high pressure disperser equipped with a pressure-reducing system NANO-3000-10 (manufactured by Nippon BEE Chemical Co., Ltd.)) and using zirconia beads having a diameter of 0.3 mm, a mixed liquid having the following composition was mixed for 3 hours to prepare pigment dispersion liquid B-2.

| | |
|---|---|
| • Mixed pigment consisting of a blue pigment (C. I. Pigment Blue 15:6) and a violet pigment (C. I. Pigment Violet 23) | 12.6 parts by mass |
| • Dispersant: BYK-111 manufactured by BYK Chemie GmbH | 2.0 parts by mass |
| • Dispersion resin 4 shown below | 3.3 parts by mass |
| • Organic solvent: cyclohexanone | 31.2 parts by mass |
| • Organic solvent: propylene glycol methyl ether acetate (PGMEA) | 50.9 parts by mass |

• Dispersion resin 4 (the ratio in each repeating unit is a molar ratio)

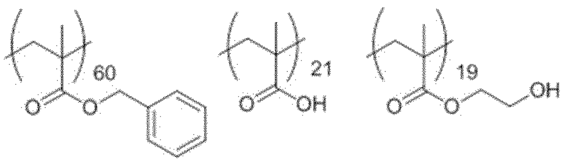

(Mw : 14000)

<Preparation of infrared transmitting composition B>

The following components were mixed to prepare an infrared transmitting composition B.

| | |
|---|---|
| • Pigment dispersion liquid B-1 | 46.5 parts by mass |
| • Pigment dispersion liquid B-2 | 37.1 parts by mass |
| • Alkali-soluble resin 1 shown above | 1.1 parts by mass |
| • Polymerizable compound 2 shown below | 1.8 parts by mass |

(continued)

| | |
|---|---|
| • Polymerizable compound 3 shown below | 0.6 parts by mass |
| • Photopolymerization Initiator: photopolymerization initiator 2 shown below | 0.9 parts by mass |
| • Surfactant 1: fluorine-based surfactant | 4.2 parts by mass |
| • Polymerization inhibitor: p-methoxyphenol | 0.001 parts by mass |
| • Organic solvent 1: PGMEA | 7.8 parts by mass |

• Polymerizable compound 2: molar ratio of left compound to right compound = 7:3.

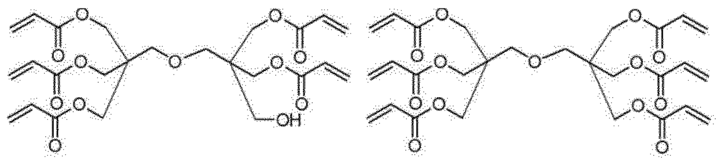

- Polymerizable compound 3

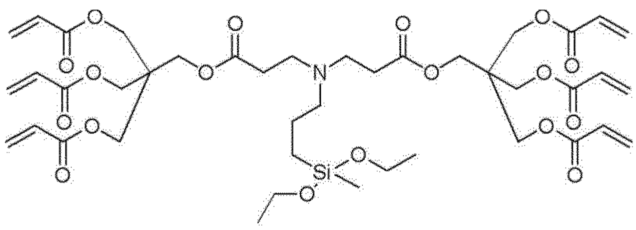

- Photopolymerization initiator 2

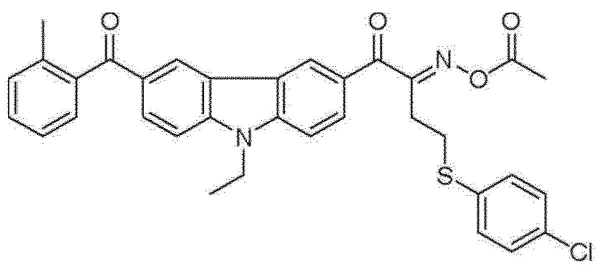

<Production of infrared transmitting film B>

The infrared transmitting composition B was applied onto a glass substrate by spin coating. Next, the glass substrate coated with the infrared transmitting composition B was dried at 100°C for 120 seconds using a hot plate and further heat-treated (post-baked) at 200°C for 300 seconds to obtain an infrared transmitting film B (film thickness of 1.0 μm).

Using a spectrophotometer (ref. glass substrate) of a UV-VIS-near IR spectrophotometer (U-4100 manufactured by Hitachi High-Technologies Corporation), the transmittance of the glass substrate having the infrared transmitting film B in the wavelength range of 400 to 1100 nm was measured. The results are shown in Fig. 9.

<Preparation of infrared transmitting film C>

A color filter (infrared transmitting film C) was prepared according to the description of paragraphs "0255" to "0259" (Example 1) of JP2013-077009A.

Using a spectrophotometer (ref. glass substrate) of a UV-VIS-near IR spectrophotometer (U-4100 manufactured by Hitachi High-Technologies Corporation), the transmittance of the substrate having the infrared transmitting film C in

the wavelength range of 400 to 1100 nm was measured. The results are shown in Fig. 10.

[Example 1: Bandpass filter A]

According to the procedure for preparing the laminate (A) (<Preparation of laminate (Part 1)>) and the procedure for preparing an infrared transmitting film A (Preparation of infrared transmitting film A), the laminate (A) and the infrared transmitting film A were formed on a substrate to prepare a bandpass filter A.

The transmittance of the bandpass filter A in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 11.

[Example 2: Bandpass filter B]

According to the procedure for preparing the laminate (B) (<Preparation of laminate (Part 2)>) and the procedure for preparing an infrared transmitting film B (Preparation of infrared transmitting film B), the laminate (B) and the infrared transmitting film B were formed in on a substrate to prepare a bandpass filter B.

The transmittance of the bandpass filter B in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 12.

[Example 3: Bandpass filter C]

According to the procedure for preparing the laminate (C) (<Preparation of laminate (Part 2)>) and the procedure for preparing an infrared transmitting film C (Preparation of infrared transmitting film C), the laminate (C) and the infrared transmitting film C were formed on a substrate to prepare a bandpass filter C.

The transmittance of the bandpass filter C in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 13.

[Comparative Example 1: Vapor deposition laminate]

By a vapor deposition method, a layer of high refractive index made of $TiO_2$ and a layer of low refractive index made of $SiO_2$ were alternately disposed on a substrate to prepare a bandpass filter having a transmission wavelength of 850 nm.

[Comparative Example 2]

<Preparation of coating liquid>

Compound 1, Compound 2 in the compound group B, a fluorine-based horizontal alignment agent, a polymerization initiator, and a solvent were mixed as described below. Various coating liquids were prepared by further mixing with the chiral agent of the kind and concentration as shown in Table 3 below.

- Compound 1 shown above — 80 parts by mass
- Compound 2 in the above compound group B — 20 parts by mass
- Fluorine-based horizontal alignment agent 1 shown above — 0.1 parts by mass
- Fluorine-based horizontal alignment agent 2 shown above — 0.003 parts by mass
- Polymerization initiator IRGACURE 819 (manufactured by BASF Corporation) — 3 parts by mass
- Solvent (methyl ethyl ketone) added to make a solute concentration of 30 mass%

[Table 3]

| Coating liquid | Chiral agent | Amount added |
|---|---|---|
| R1-1 | LC756 | 6.6 parts by mass |

(continued)

| Coating liquid | Chiral agent | Amount added |
|---|---|---|
| R4 | LC756 | 6.1 parts by mass |
| R5 | LC756 | 5.5 parts by mass |
| R6 | LC756 | 5.1 parts by mass |
| R7 | LC756 | 4.6 parts by mass |
| R8 | LC756 | 4.1 parts by mass |
| R9 | LC756 | 7.2 parts by mass |
| R10 | LC756 | 3.8 parts by mass |
| L1-1 | Chiral agent (A) | 10.1 parts by mass |
| L4 | Chiral agent (A) | 9.2 parts by mass |
| L5 | Chiral agent (A) | 8.4 parts by mass |
| L6 | Chiral agent (A) | 7.5 parts by mass |
| L7 | Chiral agent (A) | 6.9 parts by mass |
| L8 | Chiral agent (A) | 6.3 parts by mass |
| L9 | Chiral agent (A) | 11.2 parts by mass |
| L10 | Chiral agent (A) | 5.9 parts by mass |

<Preparation of laminate>

A rubbing treatment (rayon cloth, pressure: 0.1 kgf, rotation speed: 1,000 rpm, transporting speed: 10 m/min, the number of times: 1 reciprocating) was directly applied onto the surface of a polyethylene terephthalate (PET) film (without an undercoat layer, manufactured by FUJIFILM Corporation, thickness: 50 μm, size 320 mm × 400 mm). Then, using the coating liquid (R4), the cholesteric liquid crystalline phase was immobilized according to the following procedure, and further using the coating liquid (L4), a liquid crystal film was produced by laminating the layer formed by immobilizing the cholesteric liquid crystalline phase in two layers. This liquid crystal film functions as a visible ray reflecting layer.

(1) A coating liquid (R4) was applied onto a PET film at room temperature using a wire bar so that the thickness of the coating film after drying was 5 μm, thereby forming a coating film.
(2) The PET film on which the coating film was disposed was dried at room temperature for 30 seconds to remove the solvent from the coating film. Next, the PET film on which the coating film was disposed was heated at 90°C for 2 minutes, and thereafter a cholesteric liquid crystalline phase was formed at the heating temperature of the coating film of 35°C. Next, UV irradiation was carried out on the coating film for 6 to 12 seconds at an output of 60% using an electrodeless lamp "D bulb" (90 mW/$cm^2$) manufactured by Fusion UV Systems Co., Ltd., whereby a film (F4) formed by immobilizing the cholesteric liquid crystalline phase was prepared on a PET film.
(3) The coating liquid (L4) was applied onto the film (F4) prepared in the above (2) at room temperature by using a wire bar so that the thickness of the coating film after drying was 5 μm, thereby forming a coating film.
(4) The PET film on which the coating film was disposed was dried at room temperature for 30 seconds to remove the solvent from the coating film. Next, the PET film on which the coating film was disposed was heated at 90°C for 2 minutes, and thereafter a cholesteric liquid crystalline phase was formed at the heating temperature of the coating film of 35°C. Next, the coating film was irradiated with UV at an output of 60% for 6 to 12 seconds using an electrodeless lamp "D bulb" (90 mW/$cm^2$) manufactured by Fusion UV Systems Co., Ltd., and the cholesteric liquid crystalline phase was immobilized, whereby a laminate (G4) in which the film formed by immobilizing the cholesteric liquid crystalline phase was laminated in two layers on the PET film was prepared. The produced laminate (G4) had no significant defects and streaks, and exhibited a good surface state. Also, when the laminate (G4) was placed on black paper, a strong selective reflection color was confirmed.

A film (F4b) was prepared in the same manner as in the above steps (1) and (2), except that the coating liquid (R4) was changed to the coating liquid (L4).
Further, films (F1-1) and (F5) to (F10) were respectively prepared in the same manner as in the above steps

(1) and (2), except that the coating liquid (R4) was changed to coating liquids (R1-1) and (R5) to (R10).

Further, films (F1-1b) and (F5b) to (F10b) were prepared in the same manner as in the preparation of the film (F4b), except that the coating liquid (L4) was changed to the coating liquids (L1-1) and (L5) to (L10) in the production of the film (F4b).

Further, the laminates (G1-1) and (G5) to (G10) were prepared in the same manner as in the above steps (1) to (4), except that the first layer coating liquid and the second layer coating liquid were changed to those shown in Table 3 below.

The produced laminates (G1-1) and (G4) to (G10) had no significant defects and streaks and exhibited a good surface state. Also, when the laminates (G1-1) and (G4) to (G7) were respectively placed on black paper, a strong selective reflection color was confirmed.

The haze values of the laminates (G1-1) and (G4) to (G10) were measured with a haze meter, and the average values measured three times are shown in Table 4 below.

The selective reflection wavelengths of the films (F1-1b) and (F5b) to (F10b) each containing a levorotatory chiral agent are respectively the same as the selective reflection wavelengths of the films (F1-1) and (F5) to (F10) each containing a dextrorotatory chiral agent.

[Table 4]

| Cholesteric liquid crystal laminate | First layer coating liquid | Second layer coating liquid | Selective reflection wavelength (nm) | Haze (%) |
|---|---|---|---|---|
| G1-1 | R1-1 | L1-1 | 455 | 0.3 |
| G4 | R4 | L4 | 503 | 0.4 |
| G5 | R5 | L5 | 540 | 0.3 |
| G6 | R6 | L6 | 595 | 0.4 |
| G7 | R7 | L7 | 648 | 0.3 |
| G8 | R8 | L8 | 694 | 0.3 |
| G9 | R9 | L9 | 427 | 0.5 |
| G10 | R10 | L10 | 742 | 0.2 |

<Evaluation of transmission spectrum>

The measurement results of the transmission spectra of the laminates (G1-1) and (G4) to (G10) are shown in Fig. 14. Since the two films constituting the laminates (G4) to (G7) respectively have the same selective reflection wavelength, the transmission spectrum of the laminate has one intense peak observed at the selective reflection wavelength shown in Table 4 and therefore it has been found to have high reflection performance.

<Preparation of combination G13>

A double-sided pressure sensitive adhesive sheet (PDS-1, manufactured by Lintec Corporation) was stuck on the laminate (G1-1), a laminate (G4) on a PET film was laminated to the other adhesive surface, and the PET film was peeled off to prepare a laminated film. Further, the laminates (G5) to (G10) were laminated in the same manner to prepare a combination (G13).

The measurement results of the transmission spectrum of the combination (G13) are shown in Fig. 15.

(Preparation of bandpass filter of only liquid crystal of Comparative Example)

A bandpass filter of 850 nm was produced by combining the above-prepared combination (G13) and the laminate (B). The number of layers was 20 layers.

[Evaluation]

The following evaluations were carried out using each of the above-prepared bandpass filters.

(Ease of fabrication)

"A" is given in the case where the number of layers in the formed bandpass filter is 10 or less and "B" is given in the case where the number of layers is more than 10 layers. (Angle dependence)

Using the bandpass filters obtained in the respective Examples and Comparative Examples, the incidence angle with respect to the surface of the bandpass filter was set to be vertical (angle of 0°) and 30°, and the shift amount of the half value wavelength of the transmission band was evaluated according to the following standards. More specifically, the shift amount is intended to be the difference between the half value wavelength X at the time of incidence from the vertical direction and the half value wavelength Y at the time of incidence from the oblique direction.

2: less than 5 nm
1: 5 nm or more

The half value wavelength of the transmission band means the wavelength when the transmittance is 50% ((Tmax) × 0.5) with respect to the maximum transmittance (Tmax) in the transmission band, and the half value wavelength on the short wavelength side of the half value wavelength is the half value wavelength A and the half value wavelength on the long wavelength side is the half value wavelength B.

In this evaluation, it is assumed that the case where the above evaluation using the half value wavelength A is "2" is "A" and the case where it is "1" is "B".

Table 6 shows the absorbances at the transmission wavelengths of the bandpass filters A to C, the absorbances at (transmission wavelength-100 nm), and the absorbances at (transmission wavelength+100 nm).

[Table 5]

| Table 5 | Light absorbing layer | Light reflecting layer | Number of layers | Transmission wavelength | Ease of fabrication | Angle dependence |
|---|---|---|---|---|---|---|
| Example 1 | Infrared transmitting filter A | Laminate (A) | 3 | 940 nm | A | A |
| Example 2 | Infrared transmitting filter B | Laminate (B) | 5 | 850 nm | A | A |
| Example 3 (reference) | Infrared transmitting filter C | Laminate (C) | 7 | 730 nm | A | A |
| Comparative Example 1 | Vapor deposition film | None | 20 | 850 nm | B | B |
| Comparative Example 2 | Liquid crystal layer | Liquid crystal layer | 20 | 850 nm | B | B |

[Table 6]

| Table 6 | Transmission wavelength | A Absorbance at wavelength of (transmission wavelength-100 nm) | B Absorbance at transmission wavelength | C Absorbance at wavelength of (transmission wavelength+100 nm) | A/B | C/B |
|---|---|---|---|---|---|---|
| Example 1 | 940 nm | 1.5 | 0.17 | 0.91 | 8.8 | 5.4 |
| Example 2 | 850 nm | 1.28 | 0.21 | 1.23 | 6.1 | 5.9 |
| Example 3 (reference) | 730 nm | 1.32 | 0.19 | 0.8 | 6.9 | 4.2 |

<Preparation of coating liquid (R1-2)>

Compound 2-11, a fluorine-based horizontal alignment agent shown below, a chiral agent, a polymerization initiator, and a solvent were mixed to prepare a coating liquid (R1-2) having the following composition. The refractive index anisotropy $\Delta n$ of the following compound 2-11 was 0.375.

| | |
|---|---|
| • Compound 2-11 | 100 parts by mass |
| • Fluorine-based horizontal alignment agent 1 shown above | 0.1 parts by mass |
| • Fluorine-based horizontal alignment agent 2 shown above | 0.007 parts by mass |
| • Dextrorotatory chiral agent LC 756 (manufactured by BASF Corporation) | 2.2 parts by mass |
| • Polymerization initiator: ADEKA ARKLS NCI-831 (manufactured by ADEKA Corporation) | 4 parts by mass |
| • Solvent (cyclohexanone) added to make a solute concentration of 40 mass% | |

· Compound 2-11

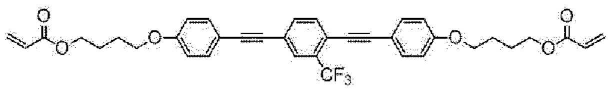

Compound group B

· Compound 2

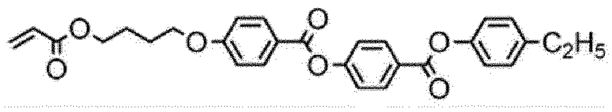

The coating liquid (R2-2) was prepared in the same manner as in the coating liquid (R1-2), except that the amount of the dextrorotatory chiral agent LC 756 was changed from 2.2 parts by mass to 2.5 parts by mass.

Further, the coating liquid (R3-2) was prepared in the same manner as in the coating liquid (R1-2), except that the amount of the dextrorotatory chiral agent LC 756 was changed from 2.2 parts by mass to 3.0 parts by mass.

<Preparation of coating liquid (L1-2)>

Compound 2-11, a fluorine-based horizontal alignment agent shown below, a chiral agent, a polymerization initiator, and a solvent were mixed to prepare a coating liquid (L1-2) having the following composition.

| | |
|---|---|
| • Compound 2-11 | 100 parts by mass |
| • Fluorine-based horizontal alignment agent 1 shown above | 0.1 parts by mass |
| • Fluorine-based horizontal alignment agent 2 shown above | 0.007 parts by mass |
| • Levorotatory chiral agent (A) shown below | 3.3 parts by mass |
| • Polymerization initiator: ADEKA ARKLS NCI-831 (manufactured by ADEKA Corporation) | 4 parts by mass |
| • Solvent (cyclohexanone) added to make a solute concentration of 40 mass% | |

Levorotatory chiral agent (A)

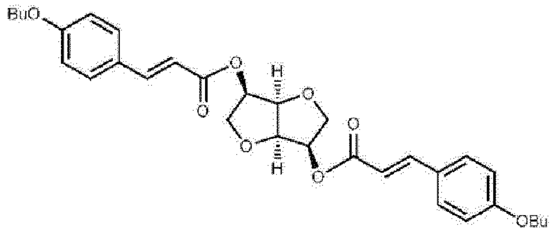

The coating liquid (L2-2) was prepared in the same manner as in the coating liquid (R1-2), except that the amount of the levorotatory chiral agent (A) was changed from 3.3 parts by mass to 3.8 parts by mass.
The coating liquid (L3-2) was prepared in the same manner as in the coating liquid (R1-2), except that the amount of the levorotatory chiral agent (A) was changed from 3.3 parts by mass to 4.5 parts by mass.

<Preparation of Laminate (Part 3)>

Films (F2), (F3), (F1-2), (F2-2), (F3-2), (F2b), (F3b), (F1-2b), (F2-2b), and (F3-2b) were respectively prepared in the same manner as in the method of producing the film (F1), except that coating liquids (R2), (R3), (R1-2), (R2-2), (R3-2), (L2), (L3), (L1-2), (L2-2), and (L3-2) were respectively used in place of the coating liquid (R1).
The selective reflection wavelengths of the films (F2b), (F3b), (F1-2b), (F2-2b), and (F3-2b) each containing the levorotatory chiral agent were equal to the selective reflection wavelengths of the films (F2), (F3), (R1-2), (R2-2), and (R3-2) each containing the dextrorotatory chiral agent, respectively.
A laminate (B) was produced by laminating the film (F2) and the film (F2b) on the laminate (A) in the same manner as in the above-mentioned production method of the laminate (A).
Further, a laminate (C) was produced by laminating the film (F3) and the film (F3b) on the laminate (B).
Further, a laminate (D) was produced by laminating the film (F1-2) and the film (F1-2b) on the laminate (C).
Further, a laminate (E) was produced by laminating the film (F2-2) and the film (F2-2b) on the laminate (D).
Further, a laminate (F) was produced by laminating the film (F3-2) and the film (F3-2b) on the laminate (E).

[Example 4: Bandpass filter D]

According to the procedure for preparing the laminate (D) (<Preparation of laminate (Part 3)>) and the procedure for preparing an infrared transmitting film A (Preparation of infrared transmitting film A), the laminate (D) and the infrared transmitting film A were formed on a substrate to prepare a bandpass filter D.
The transmittance of the bandpass filter A in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 16.

[Example 5: Bandpass filter E]

According to the procedure for preparing the laminate (E) (<Preparation of laminate (Part 3)>) and the procedure for preparing an infrared transmitting film B (Preparation of infrared transmitting film B), the laminate (E) and the infrared transmitting film B were formed on a substrate to prepare a bandpass filter E.
The transmittance of the bandpass filter B in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 17.

[Example 3: Bandpass filter F]

According to the procedure for preparing the laminate (F) (<Preparation of laminate (Part 3)>) and the procedure for preparing an infrared transmitting film C (Preparation of infrared transmitting film C), the laminate (F) and the infrared transmitting film C were formed on a substrate to prepare a bandpass filter F.
The transmittance of the bandpass filter C in the wavelength range of 400 to 1100 nm was measured using a spectrophotometer (ref. glass substrate) of a UV-VIS-near IR spectrophotometer (U-4100 manufactured by Hitachi High-Technologies Corporation). The results are shown in Fig. 18.
Using the obtained bandpass filters D to F, the various evaluations described above were carried out. The

results are summarized in Tables 7 and 8.

[Table 7]

| Table 7 | Light absorbing layer | Light reflecting layer | Number of layers | Transmission wavelength | Ease of fabrication | Angle dependence |
|---|---|---|---|---|---|---|
| Example 4 | Infrared transmitting filter A | Laminate (D) | 3 | 940 nm | A | A |
| Example 5 | Infrared transmitting filter B | Laminate (E) | 5 | 850 nm | A | A |
| Example 6 | Infrared transmitting filter C | Laminate (F) | 7 | 730 nm | A | A |

[Table 8]

| Table 8 | Transmission wavelength | A Absorbance at wavelength of (transmission wavelength-100 nm) | B Absorbance at transmission wavelength | C Absorbance at wavelength of (transmission wavelength+100 nm) | A/B | C/B |
|---|---|---|---|---|---|---|
| Example 1 | 940 nm | 0.95 | 0.10 | 2.25 | 9.8 | 23.2 |
| Example 2 | 850 nm | 1.29 | 0.11 | 2.27 | 11.6 | 20.5 |
| Example 3 | 730 nm | 0.95 | 0.10 | 2.25 | 9.8 | 23.2 |

As shown in the above results, it was confirmed that the desired effect can be obtained by the composition kit that may be used in, and the laminate that is formed in, the method of the present invention.

Even in the case where the compound represented by General Formula (1) was used, the same results as in Example 1 were obtained.

Explanation of References

| | |
|---|---|
| 1 | lens optical system |
| 10, 10a, 10b | laminate |
| 12 | substrate |
| 14 | multilayer reflective film |
| 16 | light absorbing layer |
| 18a, 20a, 22a | light reflecting layer Xa |
| 18b, 20b, 22b | light reflecting layer Xb |
| 110 | solid image pickup element |
| 120 | signal processing unit |
| 130 | signal switching unit |
| 140 | control unit |
| 150 | signal accumulation unit |
| 160 | light emission control unit |
| 170 | infrared LED |
| 180, 181 | image output unit |

## Claims

1. A method for producing a bandpass filter comprising a laminate including a reflective laminated film formed of a plurality of light reflecting layers disposed adjacent to one another and a light absorbing layer, the method comprising:

   a step of applying a first composition containing a liquid crystal compound having a polymerizable group and a dextrorotatory chiral agent to form a coating film and forming a light reflecting layer Xa formed by irradiating the coating film with light and immobilizing a dextrorotatory cholesteric liquid crystalline phase;
   a step of applying a second composition containing a liquid crystal compound having a polymerizable group and a levorotatory chiral agent to form a coating film and forming a light reflecting layer Xb formed by irradiating the coating film with light and immobilizing a levorotatory cholesteric liquid crystalline phase; and
   a step of applying a third composition containing a color material to form the light absorbing layer;
   wherein the reflective laminated film reflects light in at least a part of a wavelength range of 650 to 1200 nm; and
   wherein the light absorbing layer has a maximum transmittance of 70% or more at a wavelength of 700 nm or more and a maximum transmittance of 30% or less at a wavelength of 400 nm or more and less than 700 nm.

2. The method for producing a bandpass filter according to claim 1, wherein the helical twisting power of the dextrorotatory chiral agent is 30 $\mu m^{-1}$ or more.

3. The method for producing a bandpass filter according to claim 1 or 2, wherein the helical twisting power of the levorotatory chiral agent is 30 $\mu m^{-1}$ or more.

4. The method for producing a bandpass filter according to any one of claims 1 to 3, wherein the levorotatory chiral agent is selected from the group consisting of a compound represented by General Formula (1) and a compound represented by General Formula (2),

   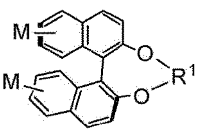 (1)

   in General Formula (1), M's each independently represent a hydrogen atom or a substituent, and $R^1$ represents any one of the linking groups shown below,

   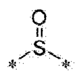 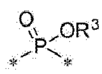 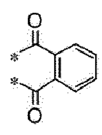 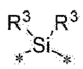 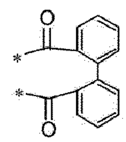

   here, *'s each independently represent a site of bonding to an oxygen atom in General Formula (1), and $R^3$'s each independently represent an alkyl group having 1 to 3 carbon atoms or an aryl group having 6 to 10 carbon atoms, and

   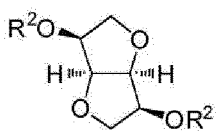 (2)

   in General Formula (2), $R^2$ represents any one of substituents described below, and two $R^2$'s may be the same as or different from each other,

   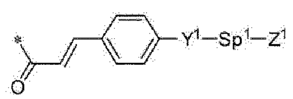 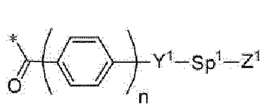

here, *'s each independently represent a site of bonding to an oxygen atom in General Formula (2), $Y^1$'s each independently represent a single bond, -O-, -C(=O)O-, -OC(=O)-, or -OC(=O)O-, $Sp^1$'s each independently represent a single bond or an alkylene group having 1 to 8 carbon atoms, $Z^1$'s each independently represent a hydrogen atom or a (meth)acrylic group, and n represents an integer of 1 or more.

**5.** The method for producing a bandpass filter according to any one of claims 1 to 4, wherein the levorotatory chiral agent is selected from the group consisting of a compound represented by General Formula (3) and a compound represented by General Formula (4),

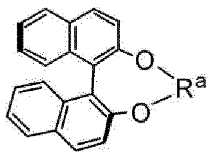

(3)

in General Formula (3), $R^a$ represents any one of linking groups shown below,

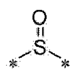

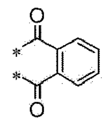

here, *'s each independently represent a site of bonding to an oxygen atom in General Formula (3); and

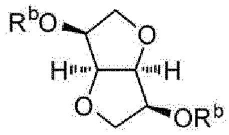

(4)

in General Formula (4), $R^b$ represents a substituent shown below, and two $R^b$'s may be the same as or different from each other,

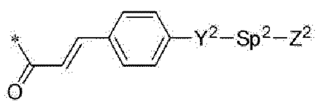

here, * represents a site of bonding to an oxygen atom in General Formula (4), $Y^2$ represents a single bond, -O-, or -OC(=O)-, $Sp^2$ represents a single bond or an alkylene group having 1 to 8 carbon atoms, and $Z^2$ represents a hydrogen atom or a (meth)acrylic group.

**6.** The method for producing a bandpass filter according to any one of claims 1 to 5, wherein the color material is a pigment.

**7.** The method for producing a bandpass filter according to any one of claims 1 to 6, wherein the refractive index anisotropy $\Delta n$ at 30°C of the liquid crystal compound having a polymerizable group is 0.25 or more.

**8.** The method for producing a bandpass filter according to any one of claims 1 to 7, wherein the liquid crystal compound having a polymerizable group is a compound represented by General Formula (5),

$$P^1-Sp^1-Y^1\left(A^1-X^1\right)_{n^1}A^3 \equiv A^4\left(X^2-A^2\right)_{n^2}Y^2-Sp^2-P^2 \quad (5)$$

in General Formula (5), $A^1$ to $A^4$ each independently represent an aromatic carbon ring or heterocyclic ring which may have a substituent, $X^1$ and $X^2$ each independently represent a single bond, -COO-, -OCO-, $-CH_2CH_2-$, $-OCH_2-$, $-CH_2O-$, -CH=CH-, -CH=CH-COO-, -OCO-CH=CH-, or -C≡C-, $Y^1$ and $Y^2$ each independently represent a single

bond, -O-, -S-, -CO-, -COO-, -OCO-, -CONH-, -NHCO-, -CH=CH-, -CH=CH-COO-, -OCO-CH=CH-, or -C≡C-, $Sp^1$ and $Sp^2$ each independently represent a single bond or a carbon chain having 1 to 25 carbon atoms, $P^1$ and $P^2$ each independently represent a hydrogen atom or a polymerizable group, and at least one of $P^1$ or $P^2$ represents a polymerizable group, $n^1$ and $n^2$ each independently represent an integer of 0 to 2, and in the case where $n^1$ or $n^2$ is 2, a plurality of $A^1$'s, $A^2$'s, $X^1$'s, and $X^2$'s may be the same or different.

**9.** The method for producing a bandpass filter according to any one of claims 1 to 8, wherein each of the first composition and the second composition further contains a photopolymerization initiator.

**10.** The method for producing a bandpass filter according to any one of claims 1 to 9, wherein each of the first composition and the second composition further contains a fluorine-containing compound.

**11.** The method for producing a bandpass filter according to any one of claims 1 to 10, wherein the reflective laminated film has a haze of 1% or less.

**12.** The method for producing a bandpass filter according to any one of claims 1 to 11, wherein the ratio of the absorbance of the laminate at a wavelength of 830 nm relative to the absorbance of the laminate at a wavelength of 730 nm is 3 or more.

**13.** The method for producing a bandpass filter according to claim 12, wherein the ratio of the absorbance of the laminate at a wavelength of 630 nm relative to the absorbance of the laminate at a wavelength of 730 nm is 3 or more.

**14.** The method for producing a bandpass filter according to any one of claims 1 to 11, wherein the ratio of the absorbance of the laminate at a wavelength of 950 nm relative to the absorbance of the laminate at a wavelength of 850 nm is 3 or more.

**15.** The method for producing a bandpass filter according to claim 14, wherein the ratio of the absorbance of the laminate at a wavelength of 750 nm relative to the absorbance of the laminate at a wavelength of 850 nm is 3 or more.

**16.** The method for producing a bandpass filter according to any one of claims 1 to 11, wherein the ratio of the absorbance of the laminate at a wavelength of 1040 nm relative to the absorbance of the laminate at a wavelength of 940 nm is 3 or more.

**17.** The method for producing a bandpass filter according to claim 16, wherein the ratio of the absorbance of the laminate at a wavelength of 840 nm relative to the absorbance of the laminate at a wavelength of 940 nm is 3 or more.

## Patentansprüche

**1.** Erzeugungsverfahren eines Bandpass-Filters, umfassend ein Laminat, das einen reflektierten laminierten Film beinhaltet, der aus einer Vielzahl von lichtreflektierenden Schichten, die aneinandergrenzend angeordnet sind, und einer lichtabsorbierenden Schicht gebildet ist, wobei das Verfahren Folgendes umfasst:

einen Schritt des Aufbringens einer ersten Zusammensetzung, die eine Flüssigkristallverbindung mit einer polymerisierbaren Gruppe und ein rechtsdrehendes chirales Mittel enthält, um einen Beschichtungsfilm zu bilden, und eine lichtreflektierende Schicht Xa bildend, die durch Bestrahlen des Beschichtungsfilms mit Licht und Immobilisieren einer rechtsdrehenden cholesterischen flüssigkristallinen Phase gebildet wird;
einen Schritt des Aufbringens einer zweiten Zusammensetzung, die eine Flüssigkristallverbindung mit einer polymerisierbaren Gruppe und ein linksdrehendes chirales Mittel enthält, um einen Beschichtungsfilm zu bilden, und eine lichtreflektierende Schicht Xb bildend, die durch Bestrahlen des Beschichtungsfilms mit Licht und Immobilisieren einer linksdrehenden cholesterischen flüssigkristallinen Phase gebildet wird; und
einen Schritt des Aufbringens einer dritten Zusammensetzung, die ein Farbmaterial enthält, um die lichtabsorbierende Schicht zu bilden;
wobei der reflektierte laminierte Film Licht in mindestens einem Abschnitt eines Wellenlängenbereichs von 650 bis 1200 nm reflektiert; und
wobei die lichtabsorbierende Schicht eine maximale Transmission von 70% oder mehr bei einer Wellenlänge von 700 nm oder mehr und eine maximale Transmission von 30% oder weniger bei einer Wellenlänge von 400 nm oder mehr und weniger als 700 nm aufweist.

**2.** Erzeugungsverfahren eines Bandpass-Filters nach Anspruch 1, wobei die helikale Torsionskraft des rechtsdrehenden chiralen Mittels 30 $\mu m^{-1}$ oder mehr beträgt.

**3.** Erzeugungsverfahren eines Bandpass-Filters nach Anspruch 1 oder 2, wobei die helikale Torsionskraft des linksdrehenden chiralen Mittels 30 $\mu m^{-1}$ oder mehr beträgt.

**4.** Erzeugungsverfahren eines Bandpass-Filters nach einem der Ansprüche 1 bis 3, wobei das linksdrehende chirale Mittel ausgewählt ist aus der Gruppe, bestehend aus einer durch die Allgemeine Formel (1) dargestellten Verbindung und einer durch die Allgemeine Formel (2) dargestellten Verbindung,

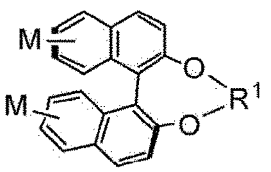 (1)

wobei in der Allgemeinen Formel (1) M jeweils unabhängig ein Wasserstoffatom oder einen Substituenten darstellen und $R^1$ eine beliebige der unten gezeigten Verknüpfungsgruppen darstellt,

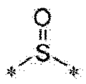 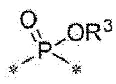 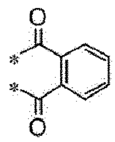 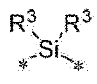 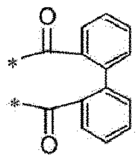

hier * jeweils unabhängig eine Bindungsstelle an einem Sauerstoffatom in der Allgemeinen Formel (1) darstellen und $R^3$ jeweils unabhängig eine Alkylgruppe mit 1 bis 3 Kohlenstoffatomen oder eine Arylgruppe mit 6 bis 10 Kohlenstoffatomen darstellen, und

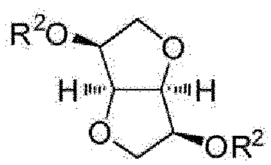 (2)

in der Allgemeinen Formel (2) $R^2$ einen beliebigen von unten beschriebenen Substituenten darstellt und zwei $R^2$ gleich oder voneinander verschieden sein können,

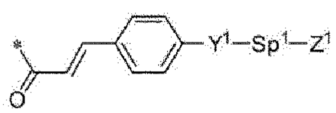 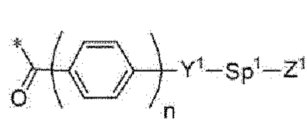

hier * jeweils unabhängig eine Bindungsstelle an einem Sauerstoffatom in der Allgemeinen Formel (2) darstellen, $Y^1$ jeweils unabhängig eine Einfachbindung, -O-, -C(=O)O-, -OC(=O)- oder -OC(=O)O- darstellen, $Sp^1$ jeweils unabhängig eine Einfachbindung oder eine Alkylengruppe mit 1 bis 8 Kohlenstoffatomen darstellen, $Z^1$ jeweils unabhängig ein Wasserstoffatom oder eine (Meth)acryl-Gruppe darstellen und n eine ganze Zahl von 1 oder mehr darstellt.

**5.** Erzeugungsverfahren eines Bandpass-Filters nach einem der Ansprüche 1 bis 4, wobei das linksdrehende chirale Mittel ausgewählt ist aus der Gruppe, bestehend aus einer durch die Allgemeine Formel (3) dargestellten Verbindung und einer durch die Allgemeine Formel (4) dargestellten Verbindung,

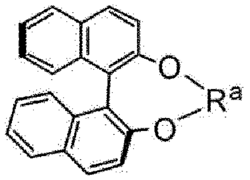

(3)

wobei in der Allgemeinen Formel (3) $R^a$ eine beliebige von unten gezeigten Verknüpfungsgruppen darstellt,

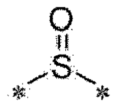

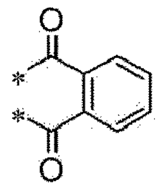

hier * jeweils unabhängig eine Bindungsstelle an einem Sauerstoffatom in der Allgemeinen Formel (3) darstellen; und

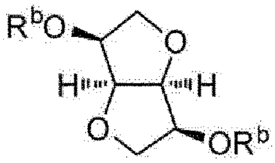

(4)

in der Allgemeinen Formel (4) $R^b$ einen unten gezeigten Substituenten darstellt und zwei $R^b$ gleich oder voneinander verschieden sein können,

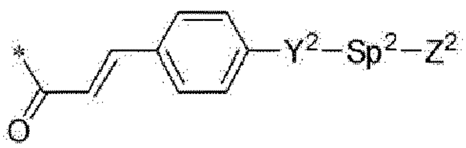

hier * eine Bindungsstelle an einem Sauerstoffatom in der Allgemeinen Formel (4) darstellt, $Y^2$ eine Einfachbindung, -O- oder -OC(=O)- darstellt, $Sp^2$ eine Einfachbindung oder eine Alkylengruppe mit 1 bis 8 Kohlenstoffatomen darstellt und $Z^2$ ein Wasserstoffatom oder eine (Meth)acryl-Gruppe darstellt.

**6.** Erzeugungsverfahren eines Bandpass-Filters nach einem der Ansprüche 1 bis 5, wobei das Farbmaterial ein Pigment ist.

**7.** Erzeugungsverfahren eines Bandpass-Filters nach einem der Ansprüche 1 bis 6, wobei die Brechungsindexanisotropie $\Delta n$ bei 30°C der Flüssigkristallverbindung mit einer polymerisierbaren Gruppe 0,25 oder mehr beträgt.

**8.** Erzeugungsverfahren eines Bandpass-Filters nach einem der Ansprüche 1 bis 7, wobei die Flüssigkristallverbindung mit einer polymerisierbaren Gruppe eine durch die Allgemeine Formel (5)

$$P^1\text{-}Sp^1\text{-}Y^1\left(A^1\text{-}X^1\right)_{n^1}A^3\equiv A^4\left(X^2\text{-}A^2\right)_{n^2}Y^2\text{-}Sp^2\text{-}P^2 \quad (5)$$

dargestellte Verbindung ist,
wobei in der Allgemeinen Formel (5) $A^1$ bis $A^4$ jeweils unabhängig einen aromatischen Kohlenstoffring oder heterozyklischen Ring, der einen Substituenten aufweisen kann, darstellen, $X^1$ und $X^2$ jeweils unabhängig eine Einfachbindung, -COO-, -OCO-, $-CH_2CH_2-$, $-OCH_2-$, $-CH_2O-$, -CH=CH-, -CH=CH-COO-, -OCO-CH=CH- oder -C≡C- darstellen, $Y^1$ und $Y^2$ jeweils unabhängig eine Einfachbindung, -O-, -S-, -CO-, -COO-, -OCO-, -CONH-, -NHCO-, -CH=CH-, -CH=CH-COO-, -OCO-CH=CH- oder -C≡Cdarstellen, $Sp^1$ und $Sp^2$ jeweils unabhängig eine Einfachbindung oder eine Kohlenstoffkette mit 1 bis 25 Kohlenstoffatomen darstellen, $P^1$ und $P^2$ jeweils unabhängig ein

Wasserstoffatom oder eine polymerisierbare Gruppe darstellen und mindestens einer von $P^1$ oder $P^2$ eine polymerisierbare Gruppe darstellt, $n^1$ und $n^2$ jeweils unabhängig eine ganze Zahl von 0 bis 2 darstellen und in dem Fall, dass $n^1$ oder $n^2$ 2 ist, eine Vielzahl von $A^1$, $A^2$, $X^1$ und $X^2$ jeweils gleich oder verschieden sein können.

**9.** Erzeugungsverfahren eines Bandpass-Filters nach einem der Ansprüche 1 bis 8, wobei jede der ersten Zusammensetzung und der zweiten Zusammensetzung weiter einen Fotopolymerisationsinitiator enthält.

**10.** Erzeugungsverfahren eines Bandpass-Filters nach einem der Ansprüche 1 bis 9, wobei jede der ersten Zusammensetzung und der zweiten Zusammensetzung weiter eine fluorhaltige Verbindung enthält.

**11.** Erzeugungsverfahren eines Bandpass-Filters nach einem der Ansprüche 1 bis 10, wobei der reflektierte laminierte Film eine Trübung von 1 % oder weniger aufweist.

**12.** Erzeugungsverfahren eines Bandpass-Filters nach einem der Ansprüche 1 bis 11, wobei das Verhältnis der Absorbanz des Laminats bei einer Wellenlänge von 830 nm relativ zu der Absorbanz des Laminats bei einer Wellenlänge von 730 nm 3 oder mehr beträgt.

**13.** Erzeugungsverfahren eines Bandpass-Filters nach Anspruch 12, wobei das Verhältnis der Absorbanz des Laminats bei einer Wellenlänge von 630 nm relativ zu der Absorbanz des Laminats bei einer Wellenlänge von 730 nm 3 oder mehr beträgt.

**14.** Erzeugungsverfahren eines Bandpass-Filters nach einem der Ansprüche 1 bis 11, wobei das Verhältnis der Absorbanz des Laminats bei einer Wellenlänge von 950 nm relativ zu der Absorbanz des Laminats bei einer Wellenlänge von 850 nm 3 oder mehr beträgt.

**15.** Erzeugungsverfahren eines Bandpass-Filters nach Anspruch 14, wobei das Verhältnis der Absorbanz des Laminats bei einer Wellenlänge von 750 nm relativ zu der Absorbanz des Laminats bei einer Wellenlänge von 850 nm 3 oder mehr beträgt.

**16.** Erzeugungsverfahren eines Bandpass-Filters nach einem der Ansprüche 1 bis 11, wobei das Verhältnis der Absorbanz des Laminats bei einer Wellenlänge von 1040 nm relativ zu der Absorbanz des Laminats bei einer Wellenlänge von 940 nm 3 oder mehr beträgt.

**17.** Erzeugungsverfahren eines Bandpass-Filters nach Anspruch 16, wobei das Verhältnis der Absorbanz des Laminats bei einer Wellenlänge von 840 nm relativ zu der Absorbanz des Laminats bei einer Wellenlänge von 940 nm 3 oder mehr beträgt.

## Revendications

**1.** Procédé de production d'un filtre passe-bande comprenant un stratifié incluant un film stratifié réfléchissant formé d'une pluralité de couches réfléchissant la lumière disposées adjacentes les unes aux autres et d'une couche absorbant la lumière, le procédé comprenant :

une étape d'application d'une première composition contenant un composé de cristal liquide ayant un groupe polymérisable et un agent chiral dextrogyre pour former un film de revêtement et de formation d'une couche réfléchissant la lumière Xa formée par l'irradiation du film de revêtement avec une lumière et l'immobilisation d'une phase cristalline liquide cholestérique dextrogyre ;
une étape d'application d'une deuxième composition contenant un composé de cristal liquide ayant un groupe polymérisable et un agent chiral lévogyre pour former un film de revêtement et de formation d'une couche réfléchissant la lumière Xb formée par l'irradiation du film de revêtement avec une lumière et l'immobilisation d'une phase cristalline liquide cholestérique lévogyre ; et
une étape d'application d'une troisième composition contenant un matériau coloré pour former la couche absorbant la lumière ;
dans lequel le film stratifié réfléchissant réfléchit une lumière dans au moins une partie d'une plage de longueurs d'onde allant de 650 à 1200 nm ; et
dans lequel la couche absorbant la lumière présente un facteur de transmission maximal de 70 % ou plus à une longueur d'onde de 700 nm ou plus et un facteur de transmission maximal de 30 % ou moins à une longueur

d'onde de 400 nm ou plus et de moins de 700 nm.

**2.** Procédé de production d'un filtre passe-bande selon la revendication 1, dans lequel le pouvoir de torsion hélicoïdale de l'agent chiral dextrogyre est de 30 $\mu m^{-1}$ ou plus.

**3.** Procédé de production d'un filtre passe-bande selon la revendication 1 ou 2, dans lequel le pouvoir de torsion hélicoïdale de l'agent chiral lévogyre est de 30 $\mu m^{-1}$ ou plus.

**4.** Procédé de production d'un filtre passe-bande selon l'une quelconque des revendications 1 à 3, dans lequel l'agent chiral lévogyre est sélectionné dans le groupe consistant en un composé représenté par la Formule Générale (1) et un composé représenté par la Formule Générale (2),

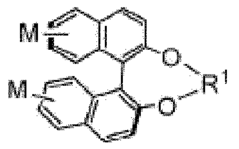 (1)

dans la Formule Générale (1), les M représentent chacun indépendamment un atome d'hydrogène ou un substituant, et $R^1$ représente l'un quelconque des groupes de liaison présentés ci-dessous,

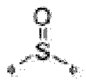 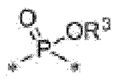 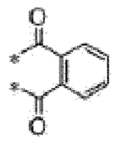 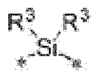 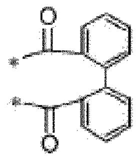

ici, les * représentent chacun indépendamment un site de liaison à un atome d'oxygène dans la Formule Générale (1), et les $R^3$ représentent chacun indépendamment un groupe alkyle ayant 1 à 3 atomes de carbone ou un groupe aryle ayant 6 à 10 atomes de carbone, et

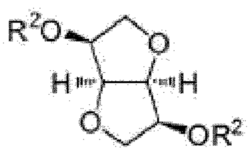 (2)

dans la Formule Générale (2), $R^2$ représente l'un quelconque des substituants décrits ci-dessous, et les deux $R^2$ peuvent être identiques l'un à l'autre ou différents l'un de l'autre,

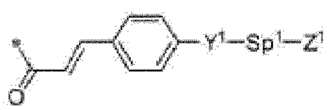 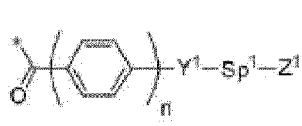

ici, les * représentent chacun indépendamment un site de liaison à un atome d'oxygène dans la Formule Générale (2), les $Y^1$ représentent chacun indépendamment une liaison simple, -O-, -C(=O)O-, -OC(=O)-, ou -OC(=O)O-, les $Sp^1$ représentent chacun indépendamment une liaison simple ou un groupe alkylène ayant 1 à 8 atomes de carbone, les $Z^1$ représentent chacun indépendamment un atome d'hydrogène ou un groupe (méth)acrylique, et n représente un nombre entier égal à 1 ou plus.

**5.** Procédé de production d'un filtre passe-bande selon l'une quelconque des revendications 1 à 4, dans lequel l'agent chiral lévogyre est sélectionné dans le groupe consistant en un composé représenté par la Formule Générale (3) et un composé représenté par la Formule Générale (4),

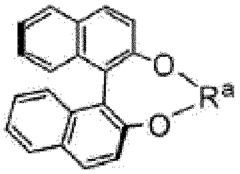

(3)

dans la Formule Générale (3), $R^a$ représente l'un quelconque des groupes de liaison présentés ci-dessous,

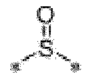

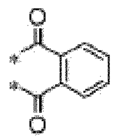

ici, les * représentent chacun indépendamment un site de liaison à un atome d'oxygène dans la Formule Générale (3), et

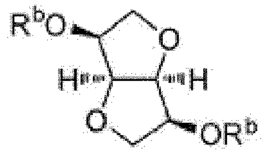

(4)

dans la Formule Générale (4), $R^b$ représente un substituant présenté ci-dessous, et les deux $R^b$ peuvent être identiques l'un à l'autre ou différents l'un de l'autre,

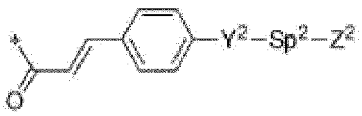

ici, * représente un site de liaison à un atome d'oxygène dans la Formule Générale (4), $Y^2$ représente une liaison simple, -O-, ou -OC(=O)-, $Sp^2$ représente une liaison simple ou un groupe alkylène ayant 1 à 8 atomes de carbone, et $Z^2$ représente un atome d'hydrogène ou un groupe (méth)acrylique.

6. Procédé de production d'un filtre passe-bande selon l'une quelconque des revendications 1 à 5, dans lequel le matériau coloré est un pigment.

7. Procédé de production d'un filtre passe-bande selon l'une quelconque des revendications 1 à 6, dans lequel l'anisotropie d'indice de réfraction Δn à 30 °C du composé de cristal liquide ayant un groupe polymérisable est de 0,25 ou plus.

8. Procédé de production d'un filtre passe-bande selon l'une quelconque des revendications 1 à 7, dans lequel le composé de cristal liquide ayant un groupe polymérisable est un composé représenté par la Formule Générale (5)

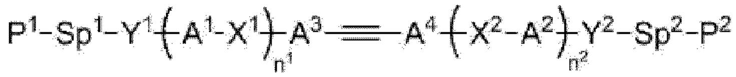

(5)

dans la Formule Générale (5), $A^1$ à $A^4$ représentent chacun indépendamment un cycle carboné aromatique ou un cycle hétérocyclique qui peut avoir un substituant, $X^1$ et $X^2$ représentent chacun indépendamment une liaison simple, -COO-, -OCO-, $-CH_2CH_2-$, $-OCH_2-$, $-CH_2O-$, -CH=CH-, -CH=CH-COO-, -OCO-CH=CH-, ou -C≡C-, $Y^1$ et $Y^2$ représentent chacun indépendamment une liaison simple, -O-, -S-, -CO-, -COO-, -OCO-, -CONH-, -NHCO-, -CH=CH-, -CH=CH-COO-, -OCO-CH=CH-, ou -C≡C-, $Sp^1$ et $Sp^2$ représentent chacun indépendamment une liaison simple ou une chaîne carbonée ayant 1 à 25 atomes de carbone, $P^1$ et $P^2$ représentent chacun indépendamment un atome d'hydrogène ou un groupe polymérisable, et au moins un de $P^1$ ou $P^2$ représente un groupe polymérisable, $n^1$ et $n^2$ représentent chacun indépendamment un nombre entier allant de 0 à 2, et dans le cas où $n^1$ ou $n^2$ est 2, une

pluralité de $A^1$, $A^2$, $X^1$, et $X^2$ peuvent être identiques ou différents.

**9.** Procédé de production d'un filtre passe-bande selon l'une quelconque des revendications 1 à 8, dans lequel chacune parmi la première composition et la deuxième composition contient en outre un initiateur de photopolymérisation.

**10.** Procédé de production d'un filtre passe-bande selon l'une quelconque des revendications 1 à 9, dans lequel chacune parmi la première composition et la deuxième composition contient en outre un composé contenant du fluor.

**11.** Procédé de production d'un filtre passe-bande selon l'une quelconque des revendications 1 à 10, dans lequel le film stratifié réfléchissant présente un trouble de 1 % ou moins.

**12.** Procédé de production d'un filtre passe-bande selon l'une quelconque des revendications 1 à 11, dans lequel le rapport de l'absorbance du stratifié à une longueur d'onde de 830 nm par rapport à l'absorbance du stratifié à une longueur d'onde de 730 nm est de 3 ou plus.

**13.** Procédé de production d'un filtre passe-bande selon la revendication 12, dans lequel le rapport de l'absorbance du stratifié à une longueur d'onde de 630 nm par rapport à l'absorbance du stratifié à une longueur d'onde de 730 nm est de 3 ou plus.

**14.** Procédé de production d'un filtre passe-bande selon l'une quelconque des revendications 1 à 11, dans lequel le rapport de l'absorbance du stratifié à une longueur d'onde de 950 nm par rapport à l'absorbance du stratifié à une longueur d'onde de 850 nm est de 3 ou plus.

**15.** Procédé de production d'un filtre passe-bande selon la revendication 14, dans lequel le rapport de l'absorbance du stratifié à une longueur d'onde de 750 nm par rapport à l'absorbance du stratifié à une longueur d'onde de 850 nm est de 3 ou plus.

**16.** Procédé de production d'un filtre passe-bande selon l'une quelconque des revendications 1 à 11, dans lequel le rapport de l'absorbance du stratifié à une longueur d'onde de 1040 nm par rapport à l'absorbance du stratifié à une longueur d'onde de 940 nm est de 3 ou plus.

**17.** Procédé de production d'un filtre passe-bande selon la revendication 16, dans lequel le rapport de l'absorbance du stratifié à une longueur d'onde de 840 nm par rapport à l'absorbance du stratifié à une longueur d'onde de 940 nm est de 3 ou plus.

FIG. 1

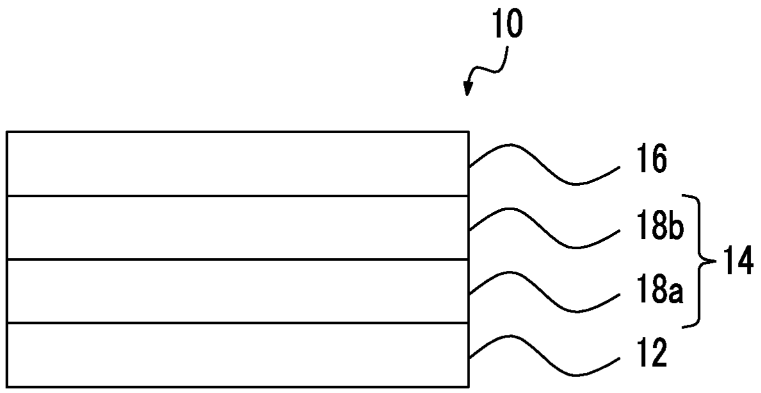


FIG. 2

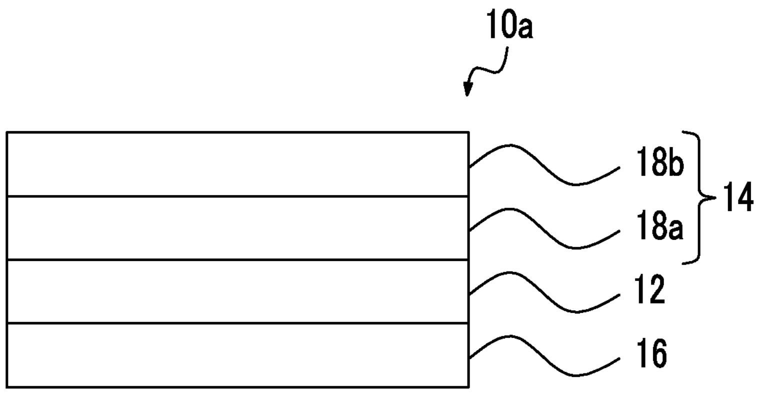


FIG. 3

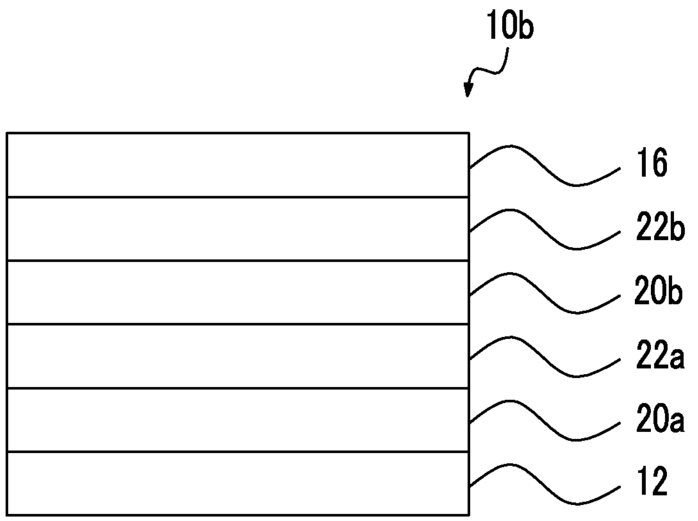

FIG. 4

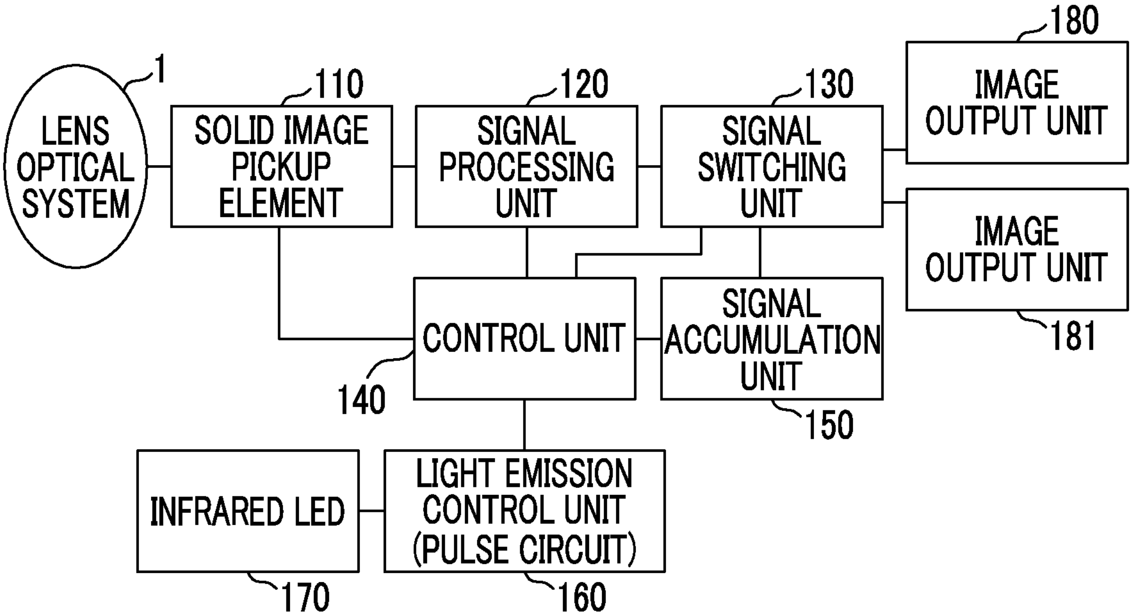
LENS OPTICAL SYSTEM
1
SOLID IMAGE PICKUP ELEMENT
110
SIGNAL PROCESSING UNIT
120
SIGNAL SWITCHING UNIT
130
IMAGE OUTPUT UNIT
180
IMAGE OUTPUT UNIT
181
CONTROL UNIT
140
SIGNAL ACCUMULATION UNIT
150
INFRARED LED
170
LIGHT EMISSION CONTROL UNIT (PULSE CIRCUIT)
160

FIG. 5

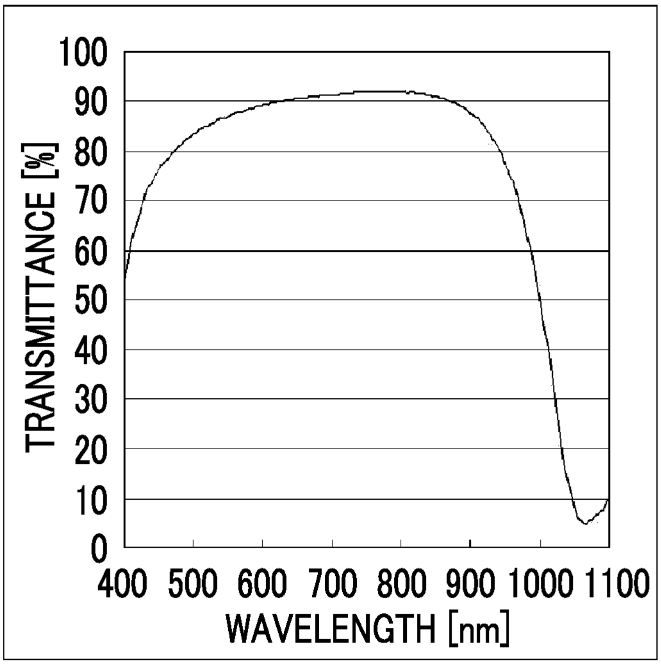
100
90
80
70
60
50
40
30
20
10
0
TRANSMITTANCE [%]
400 500 600 700 800 900 1000 1100
WAVELENGTH [nm]

FIG. 6

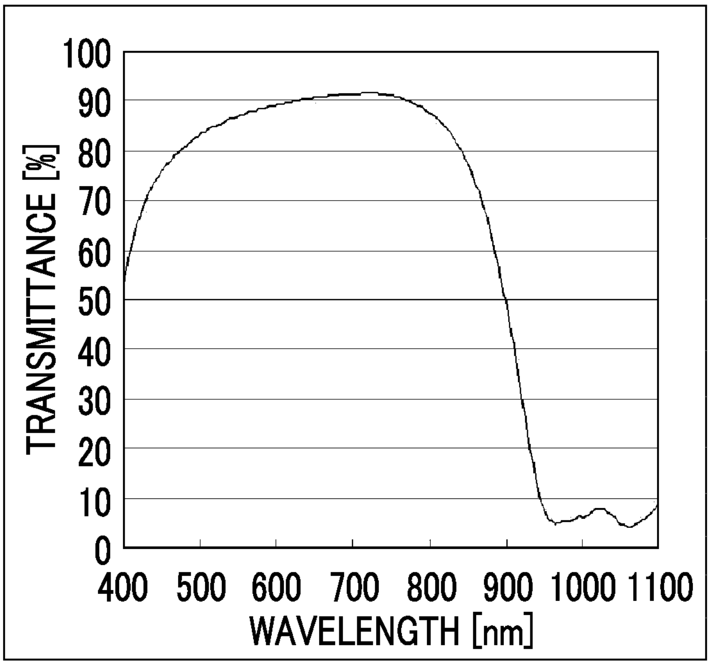
100
90
80
70
60
50
40
30
20
10
0
TRANSMITTANCE [%]
400 500 600 700 800 900 1000 1100
WAVELENGTH [nm]

FIG. 7

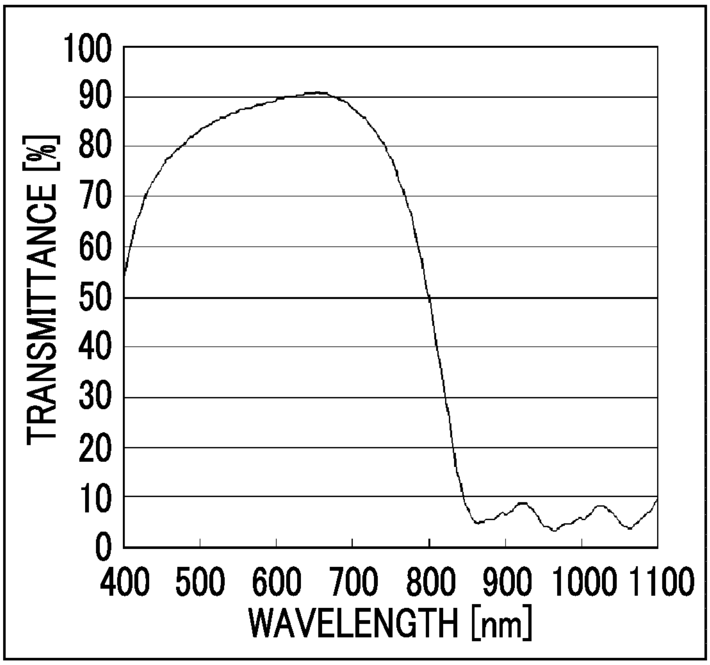
TRANSMITTANCE [%]
100
90
80
70
60
50
40
30
20
10
0
400 500 600 700 800 900 1000 1100
WAVELENGTH [nm]

FIG. 8

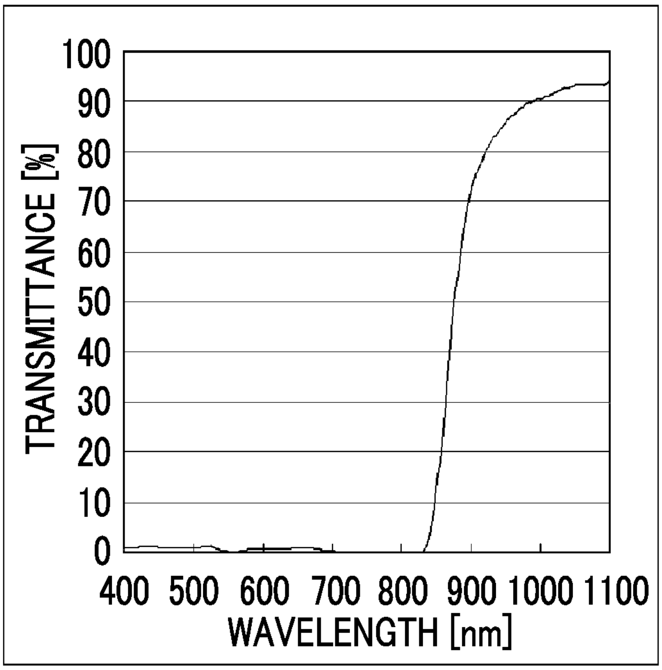
TRANSMITTANCE [%]
100
90
80
70
60
50
40
30
20
10
0
400 500 600 700 800 900 1000 1100
WAVELENGTH [nm]

FIG. 9

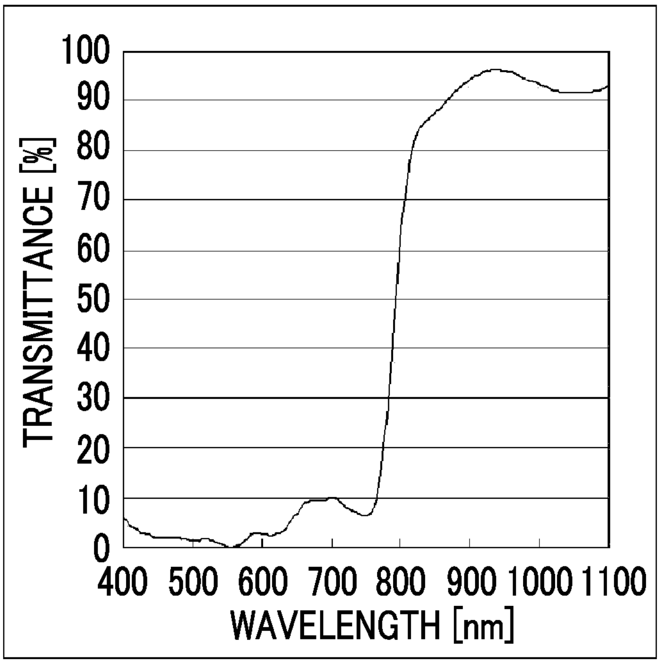
100
90
80
70
60
50
40
30
20
10
0
TRANSMITTANCE [%]
400 500 600 700 800 900 1000 1100
WAVELENGTH [nm]

FIG. 10

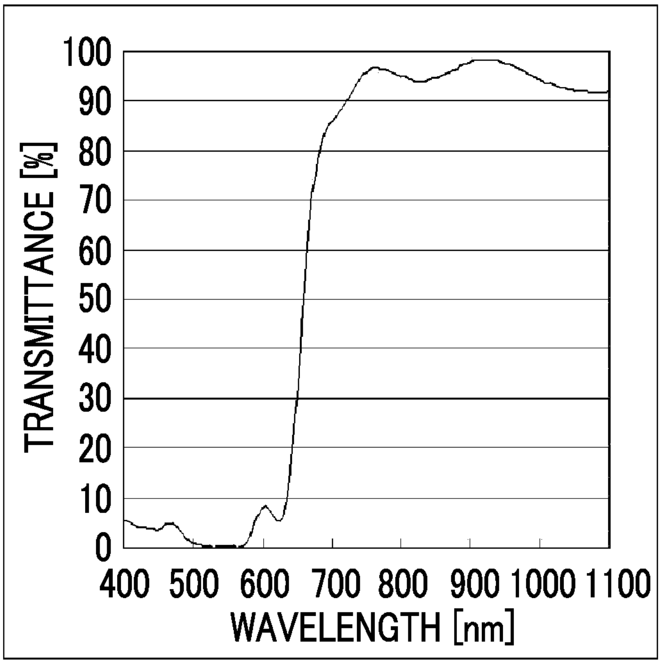
100
90
80
70
60
50
40
30
20
10
0
TRANSMITTANCE [%]
400 500 600 700 800 900 1000 1100
WAVELENGTH [nm]

FIG. 11

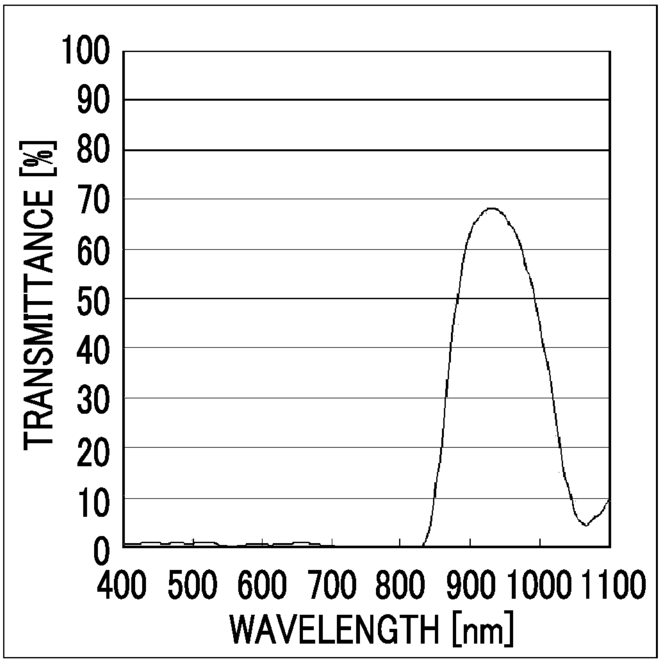
100
90
80
70
60
50
40
30
20
10
0
TRANSMITTANCE [%]
400 500 600 700 800 900 1000 1100
WAVELENGTH [nm]

FIG. 12

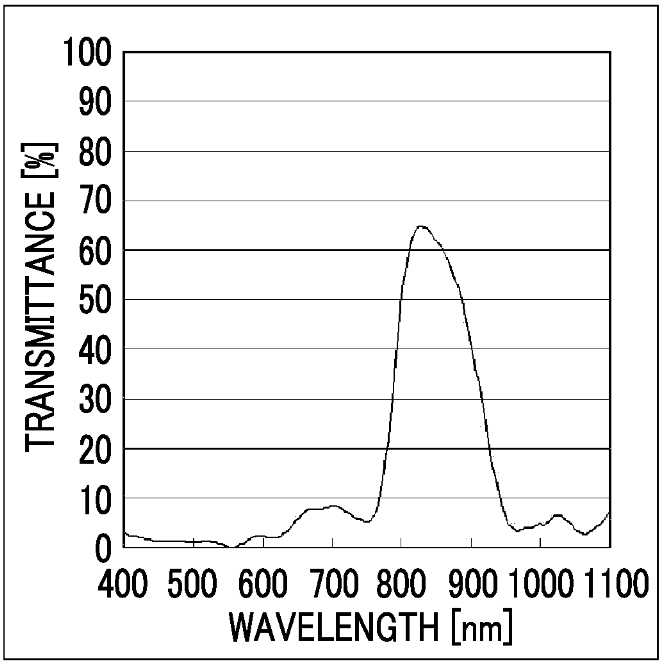
100
90
80
70
60
50
40
30
20
10
0
TRANSMITTANCE [%]
400 500 600 700 800 900 1000 1100
WAVELENGTH [nm]

FIG. 13

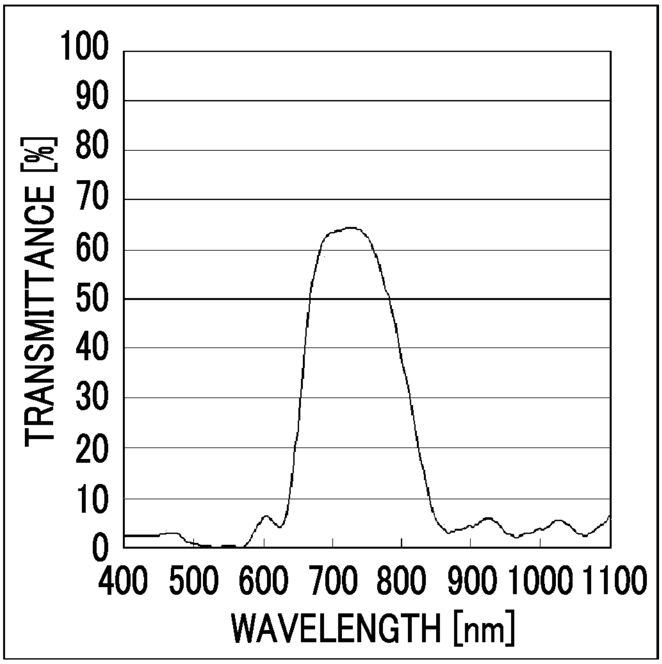
100
90
80
70
60
50
40
30
20
10
0
TRANSMITTANCE [%]
400 500 600 700 800 900 1000 1100
WAVELENGTH [nm]

FIG. 14

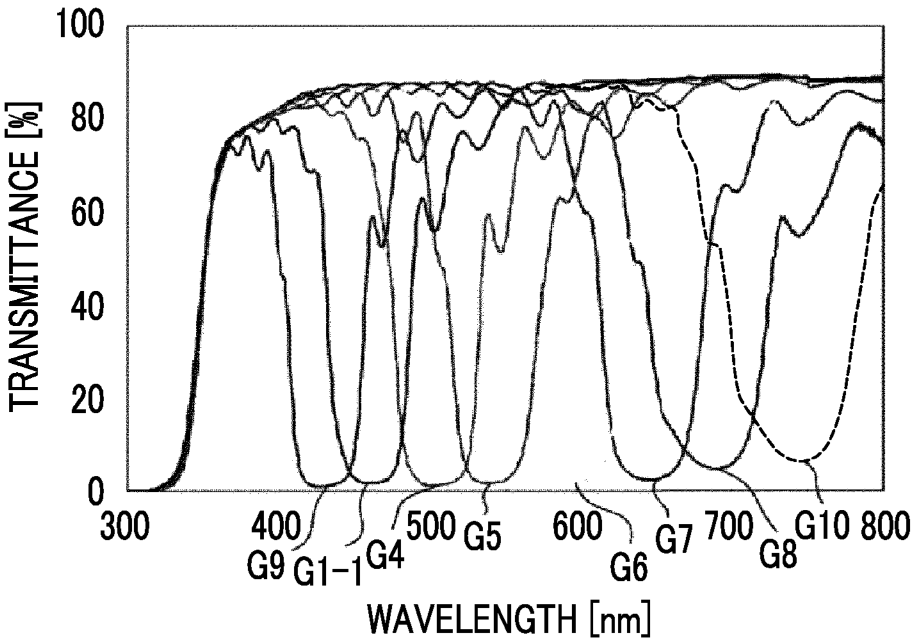
100
80
60
40
20
0
TRANSMITTANCE [%]
300
400
500
600
700
800
G9
G1-1
G4
G5
G6
G7
G8
G10
WAVELENGTH [nm]

FIG. 15

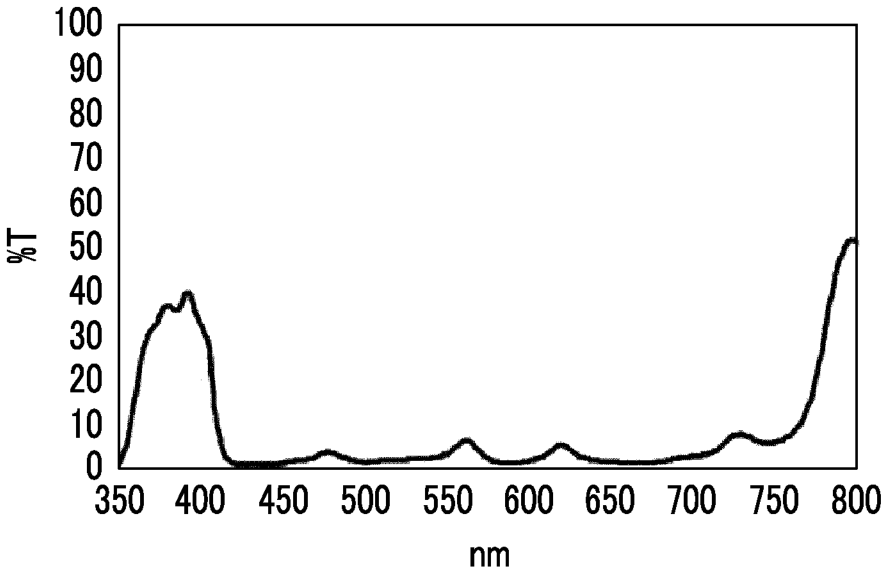
100
90
80
70
60
50
40
30
20
10
0
%T
350
400
450
500
550
600
650
700
750
800
nm

FIG. 16

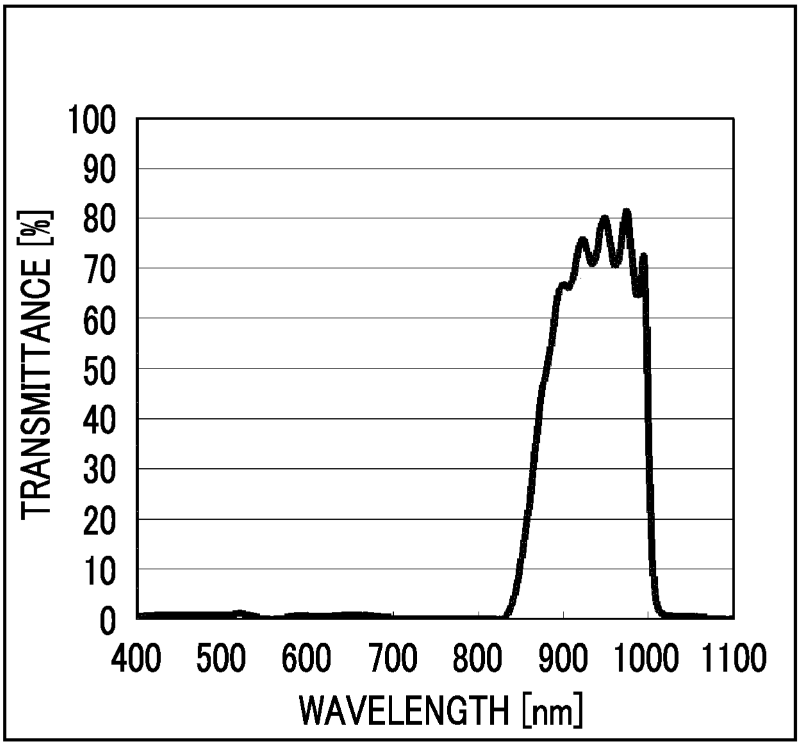
100
90
80
70
60
50
40
30
20
10
0
400
500
600
700
800
900
1000
1100
TRANSMITTANCE [%]
WAVELENGTH [nm]

FIG. 17

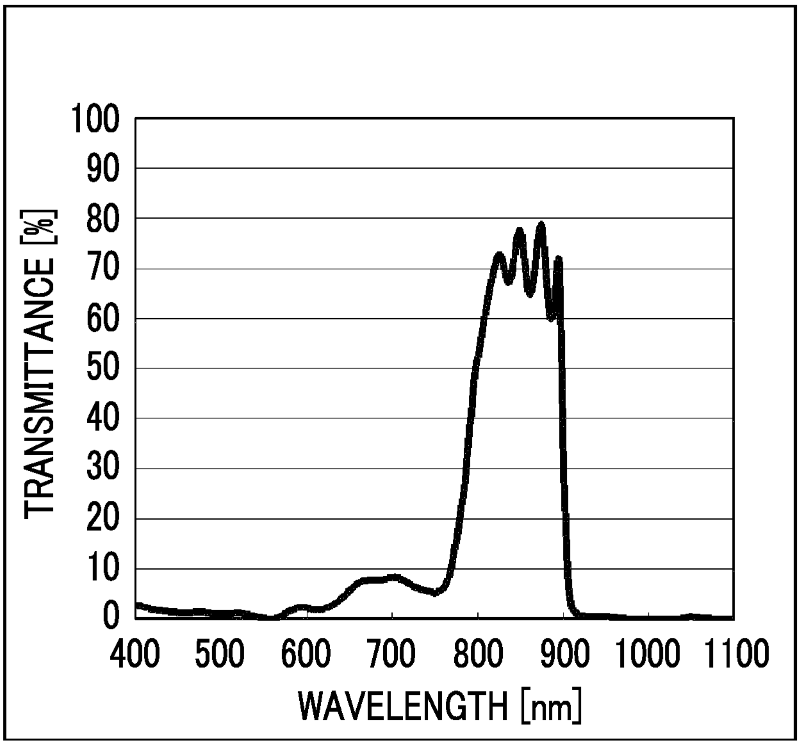
100
90
80
70
60
50
40
30
20
10
0
400
500
600
700
800
900
1000
1100
TRANSMITTANCE [%]
WAVELENGTH [nm]

FIG. 18

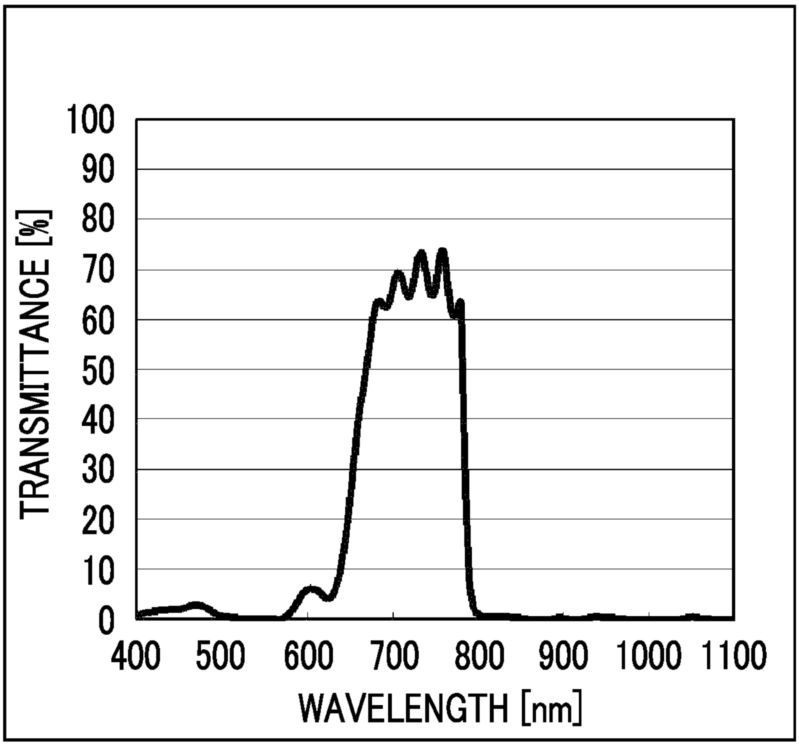
TRANSMITTANCE [%]
100
90
80
70
60
50
40
30
20
10
0
400
500
600
700
800
900
1000
1100
WAVELENGTH [nm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012225993 A
- JP 2008015234 A
- JP 2004354705 A
- JP 2014071356 A
- JP 2002302487 A
- JP 2002080478 A
- US 2012145901 A
- JP 2012137728 A
- WO 2014097895 A
- JP 2014059437 A
- JP H10239684 A
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP H01272551 A
- JP 6016616 A
- JP H0616616 A
- JP 7110469 A
- JP H07110469 A
- JP 11080081 A
- JP H1180081 A
- JP 2001064627 A
- US 6514578 B
- JP 3999400 B
- JP 4117832 B
- JP 4517416 B
- JP 4836335 B
- JP 5411770 B
- JP 5411771 B
- JP 5510321 B
- JP 5705465 B
- JP 5721484 B
- JP 5723641 B
- JP 2010181852 A
- JP 2003287623 A
- JP 2002080851 A
- JP 2005099248 A
- JP 2002129162 A
- US 2367661 A
- US 2367670 A
- US 2448828 A
- US 2722512 A
- US 3046127 A
- US 2951758 A
- US 3549367 A
- JP 60105667 A
- US 4239850 A
- US 4212970 A
- JP 63040799 B
- JP 5029234 B
- JP H0529234 B
- JP 10095788 A
- JP H1095788 A
- JP 10029997 A
- JP H1029997 A
- JP 2015157893 A
- JP 2015194521 A
- JP 2012046629 A
- JP 2013064999 A
- JP 2012208494 A
- JP 2013253224 A
- US 20120235099 A
- JP 48041708 B
- JP S4841708 B
- JP 51037193 A
- JP S5137193 A
- JP 2032293 B
- JP H0232293 B
- JP 2016765 B
- JP H0216765 B
- JP 58049860 B
- JP S5849860 B
- JP 56017654 B
- JP S5617654 B
- JP 62039417 B
- JP S6239417 B
- JP 62039418 B
- JP 63277653 A
- JP S63277653 A
- JP 63260909 A
- JP S63260909 A
- JP 1105238 A
- JP H01105238 A
- JP 2001233842 A
- JP 2000080068 A
- JP 2006342166 A
- JP 2013114249 A
- JP 2014137466 A
- JP 4223071 B
- JP 2010262028 A
- JP 2014500852 A

- JP 2013164471 A
- JP 2009203462 A
- JP 2012255128 A
- JP 2010168539 A
- JP 2012032767 A
- JP 2012208474 A
- JP 2012137531 A
- JP 2013024934 A
- JP 2011242752 A
- JP 2012032770 A
- JP 2014041318 A
- WO 201417669 A
- JP 2011132503 A
- JP 2011089090 A
- JP 5809794 B
- JP 2009263614 A
- JP 2013077009 A
- JP 2013068814 A
- JP 2011233983 A


**Non-patent literature cited in the description**


- *Makromol. Chem.,* 1989, vol. 190, 2255
- *Advanced Materials,* 1993, vol. 5, 107
- Liquid Crystal Handbook. Maruzen Co., Ltd, 202
- Liquid Crystal Device Handbook. 1989, 199
- *Heteroatom Chemistry,* 2011, vol. 22, 562
- Dispersion Technology Comprehension. Johokiko Co., Ltd, 15 July 2005
- Actual comprehensive data collection on dispersion technology and industrial application centered on suspension (solid/liquid dispersion system). Publication Department, Management Development Center, 10 October 1978
- *Chemical Industry Daily,* 22 February 2016
- *Nikkei Sangyo Shimbun,* 23 February 2016
- Chemical Industry Daily. *Miyoshi Oils and Fats,* 01 February 2016